(19) Europäisches Patentamt
European Patent Office
Office européen des brevets

(11) **EP 4 496 292 A1**

(12) **EUROPEAN PATENT APPLICATION**

(43) Date of publication:
**22.01.2025 Bulletin 2025/04**

(21) Application number: **24188376.8**

(22) Date of filing: **12.07.2024**

(51) International Patent Classification (IPC):
*H04L 67/00* (2022.01)   *H04B 7/185* (2006.01)

(52) Cooperative Patent Classification (CPC):
**H04L 67/34; H04B 7/185**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 US 202363526425 P**

(71) Applicant: **Comcast Cable Communications LLC Philadelphia, Pennsylvania 19103 (US)**

(72) Inventors:
• **DASHTAKI, Mohammad Ghadir Khoshkholgh Philadelphia, PA 19103 (US)**
• **CIRIK, Ali Cagatay Philadelphia, PA 19103 (US)**
• **DINAN, Esmael Hejazi Philadelphia, PA 19103 (US)**
• **ZHOU, Hua Philadelphia, PA 19103 (US)**
• **PRASAD, Gautham Philadelphia, PA 19103 (US)**

(74) Representative: **V.O.
P.O. Box 87930
2508 DH Den Haag (NL)**

(54) **MULTI-SATELLITE POSITIONING**

(57)    A communication network may comprise a plurality of devices. Reference signals may be sent to a wireless device. Timing information associated with the reference signals may be measured and sent, by the wireless device, to a computing device. These measurements may be used for positioning of the wireless device.

**FIG. 37**

EP 4 496 292 A1

**Description**

CROSS-REFERENCE TO RELATED APPLICATIONS

This application claims the benefit of U.S. Provisional Application No. 63/526,425, filed on July 12, 2023. The above referenced application is hereby incorporated by reference in its entirety.

BACKGROUND

In a wireless communication system, a wireless device communicates with a base station. Reference signals are used to configure the wireless device for various operations.

SUMMARY

The following summary presents a simplified summary of certain features. The summary is not an extensive overview and is not intended to identify key or critical elements.

A communication network may comprise a plurality of devices, such as wireless devices and/or base stations, at least some of which may be non-stationary. Reference signals may be used to determine positioning and/or timing for communications between devices in the communication network. For example, reference signals may be sent from one or more base stations (such as satellites) to a wireless device. Time differences between when base stations send reference signals (e.g., first offsets) may be measured and/or configured by a computing device, such as a management and/or location server. Time differences between when the wireless device receives the reference signals from each base station (e.g., second offsets) may be measured by the wireless device and reported back to the computing device. Based on these time differences and the reporting by the wireless device, positioning and/or timing information may be determined with improved accuracy for a communication network, such as for a non-terrestrial network comprising a plurality of satellites.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein.

FIG. 16A, FIG. 16B, FIG. 16C, and FIG. 16D show examples of uplink and downlink signal transmission.

FIG. 17A shows an example of positioning.

FIG. 17B shows an example of a long-term evolution (LTE)-based positioning protocol (LPP) messages and LPP procedures.

FIG. 18A shows an example of a request capabilities message.

FIG. 18B shows an example of a provide capabilities message.

FIG. 18C shows an example of a request assistance data message.

FIG. 19 shows an example of configuration parameters of a request location information message.

FIG. 20A shows an example of configuration parameters of a provide assistance data message.

FIG. 20B shows an example of configuration parameters of a request assistance data message.

FIG. 21A shows an example of configuration parameters of downlink (DL) positioning reference signal (PRS).

FIG. 21B shows an example of configuration parameters of downlink (DL) positioning reference signal (PRS).

FIG. 22 shows an example of configuration parameters of downlink (DL) positioning reference signal (PRS).

FIG. 23A shows an example of configuration of DL PRS resource set with respect to a DL frame (corresponding to a transmission reception point (TRP)) of a wireless device.

FIG. 23B shows an example of configurations of DL PRS resource sets corresponding to TRPs.

FIG. 24A shows an example of a search window for receiving PRS from a neighbor TRP.

FIG. 24B shows an example of signaling access between an location management function (LMF) and a base station based on new radio positioning protocol A (NRPPa) protocol.

FIG. 25 and FIG. 26 show examples of NRPPa messages and corresponding NRPPa elementary procedures.

FIG. 27 shows an example of NRPPa functions.

FIG. 28 shows an example of implementation of a non-terrestrial network (NTN).

FIG. 29A shows an example of an NTN.

FIG. 29B shows an example of (NTN) assistance information for maintenance of UL synchronization at a wireless device in an NTN.

FIG. 30 shows an example of positioning procedure in a non-terrestrial network.

FIG. 31A shows an example of TRP information exchange procedure/function.

FIG. 31B shows an example of TRP information exchange procedure/function in a non-terrestrial network.

FIG. 31C shows an example of TRP information exchange procedure/function in a non-terrestrial network

FIG. 32A shows an example of TRP information exchange procedure/function in a non-terrestrial network.

FIG. 32B shows an example of TRP information exchange procedure/function in a non-terrestrial network.

FIG. 33A shows an example of an LPP assistance data procedure.

FIG. 33B shows an example of an LPP assistance data procedure.

FIG. 33C shows an example of an LPP capability procedure.

FIG. 34 shows an example of an LPP assistance data procedure.

FIG. 35 shows an example of an LPP assistance data procedure.

FIG. 36A shows an example of an LPP procedure for coarse location information reporting from a wireless device to a location server.

FIG. 36B shows an example of an LPP capability procedure for coarse location information reporting from a wireless device to a location server.

FIG. 37 shows an example of DL PRS resource set configuration in a non-terrestrial network.

FIG. 38A shows an example method for sending service link propagation delay differences in an NTN to a location server.

FIG. 38B shows an example method for indicating a capability of measuring/reporting service link propagation delay differences in an NTN to a location server.

FIG. 39 shows an example method for indicating a capability of measuring/reporting service link propagation delay differences between the cells of an NTN to a location server.

FIG. 40 shows an example method for sending service link propagation delay differences in an NTN to a location server.

FIG. 41 shows an example method of corresponding to DL-PRS assistance data in a non-terrestrial network.

FIG. 42A shows an example method for configuring DL-PRS assistance data of a positioning procedure in an NTN.

FIG. 42B shows an example flowchart of a capability operation for positioning in an NTN.

FIG. 43A shows an example method for configuring DL-PRS assistance data of a positioning procedure in an NTN.

FIG. 43B shows an example method of a capability operation for positioning in an NTN.

FIG. 44A shows an example method for configuring DL-PRS assistance data of a positioning procedure in an NTN.

FIG. 44B shows an example method of a capability operation for positioning in an NTN.

FIG. 45A shows an example method of a reporting coarse location information of a wireless device during a positioning procedure in an NTN.

FIG. 45B shows an example flowchart of a reporting coarse location information of a wireless device during a positioning procedure in an NTN.

FIG. 46A shows an example method of a TRP information exchange procedure in an NTN.

FIG. 46B shows an example method of a TRP information exchange procedure in an NTN.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

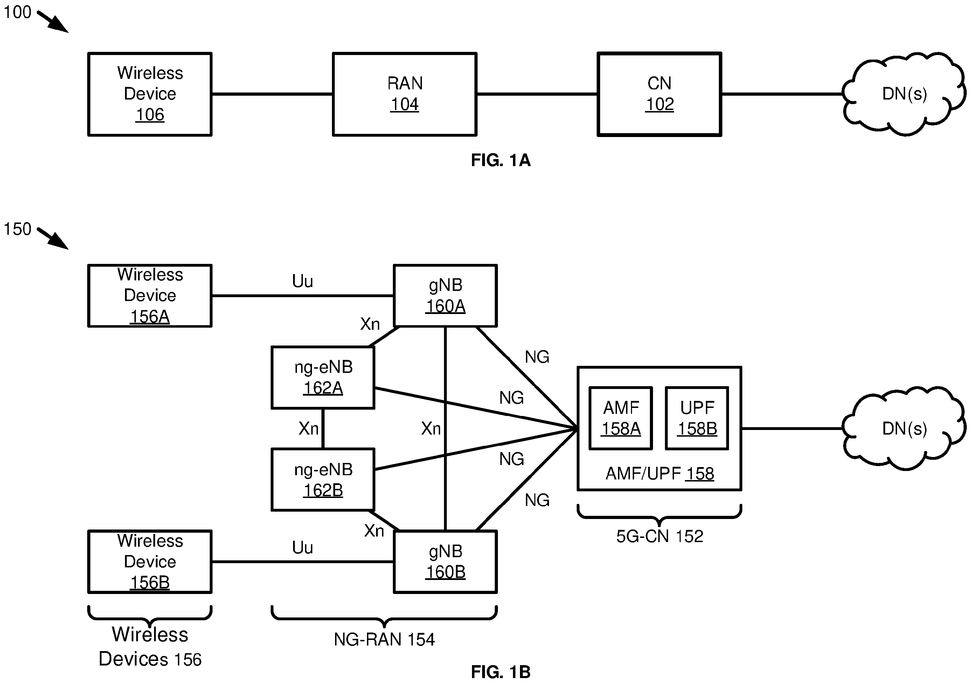

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

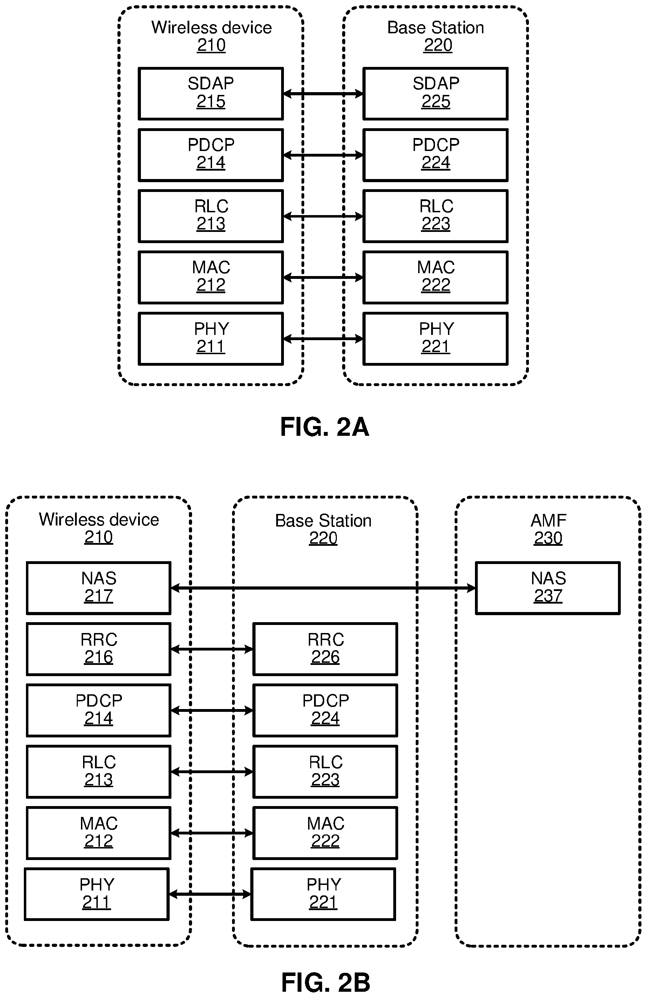

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

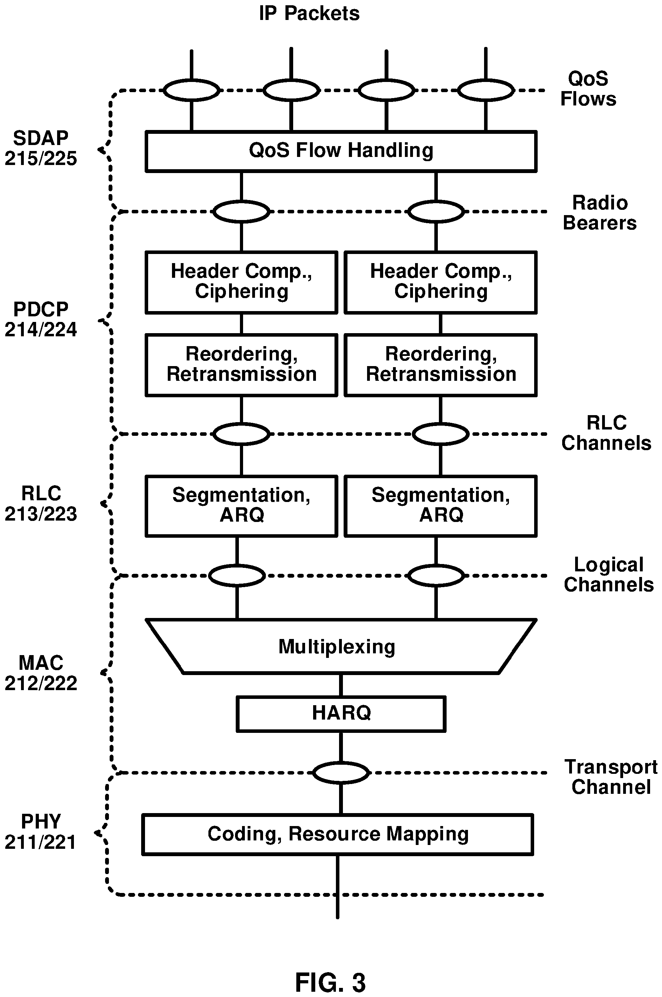

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted over the air interface, ciphering/deciphering to prevent unauthorized decoding of data transmitted over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity example/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

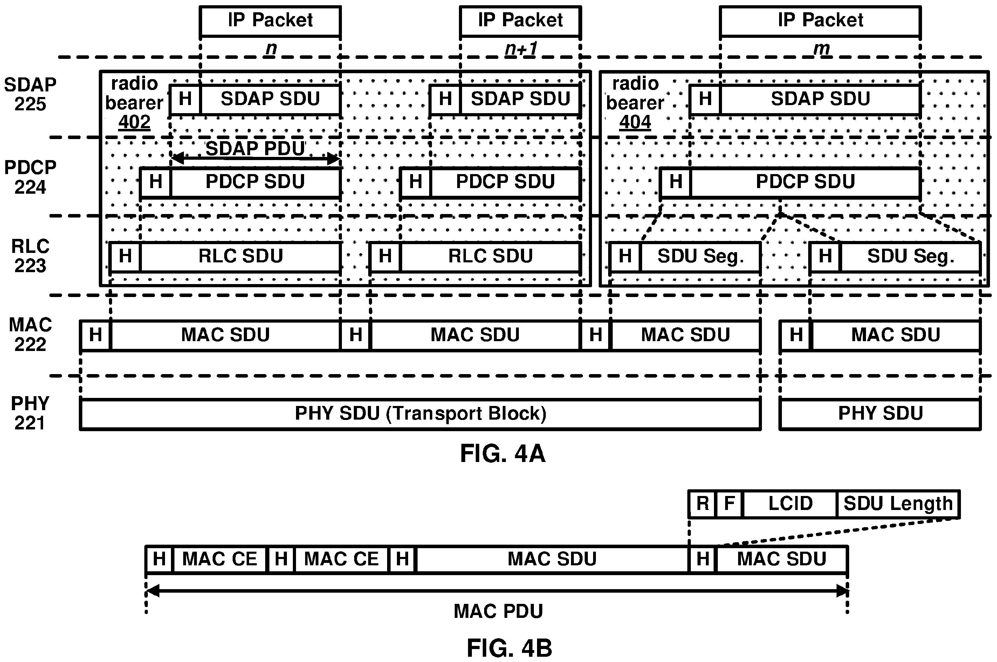

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

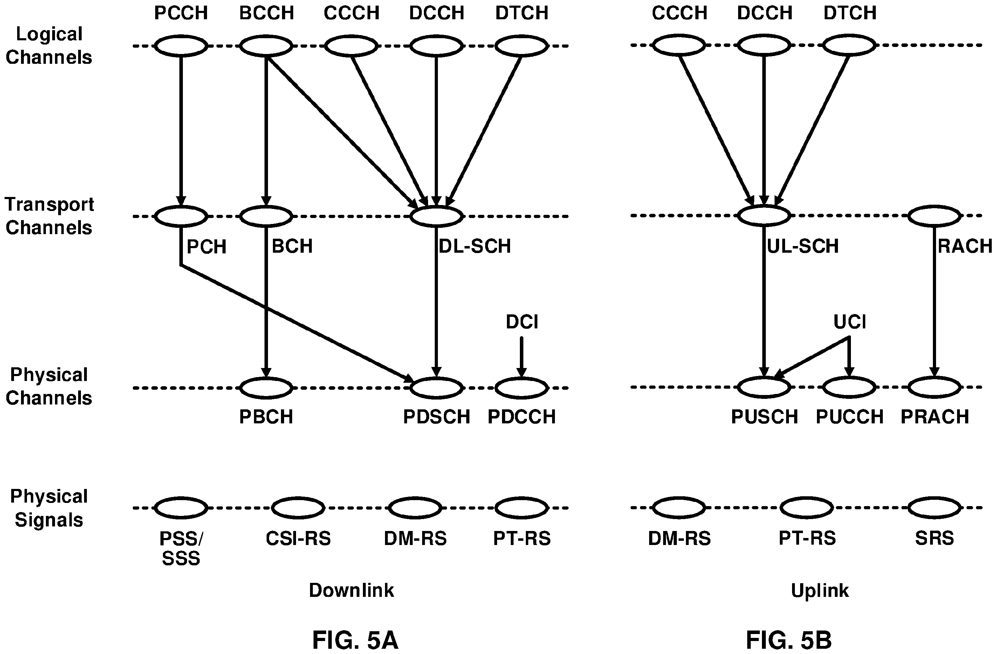

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

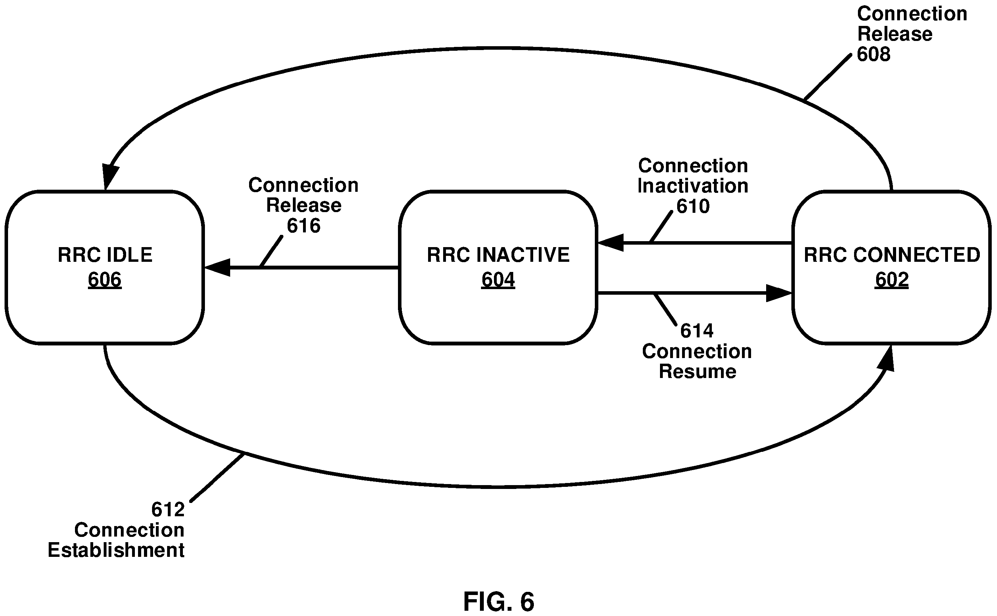

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by a RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., each discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

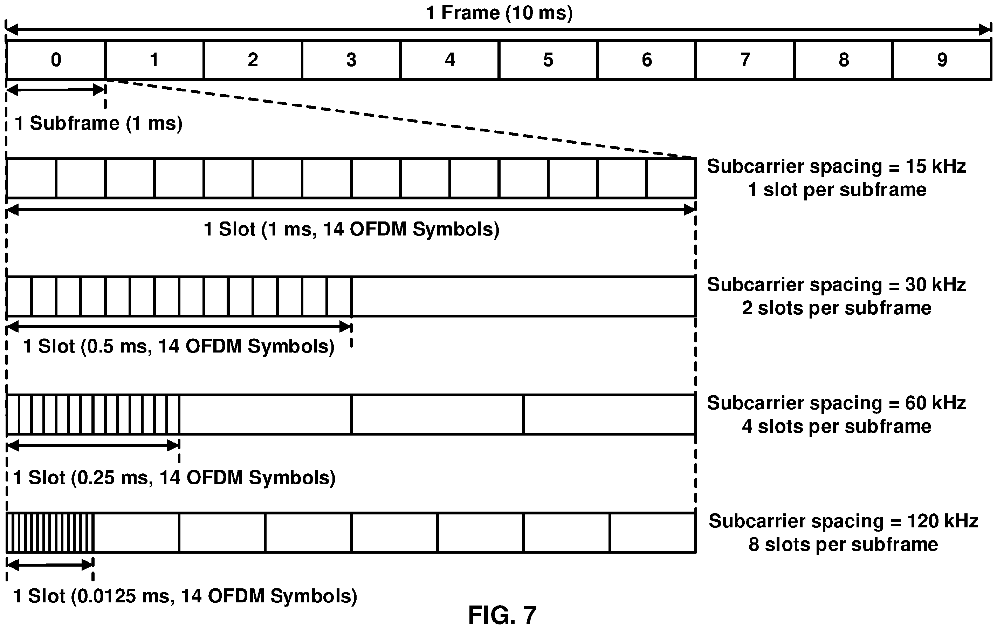

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

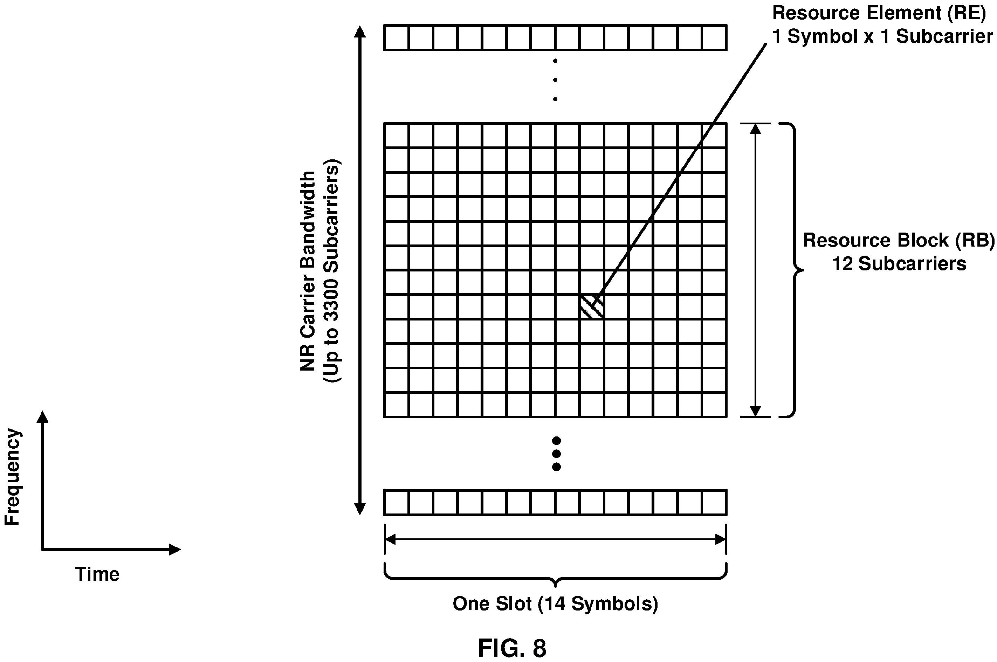

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-

detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, after (e.g., based on or in response to) receiving DCI indicating the second BWP as an active BWP. A wireless device may switch an active BWP from a first BWP to a second BWP, for example, after (e.g., based on or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

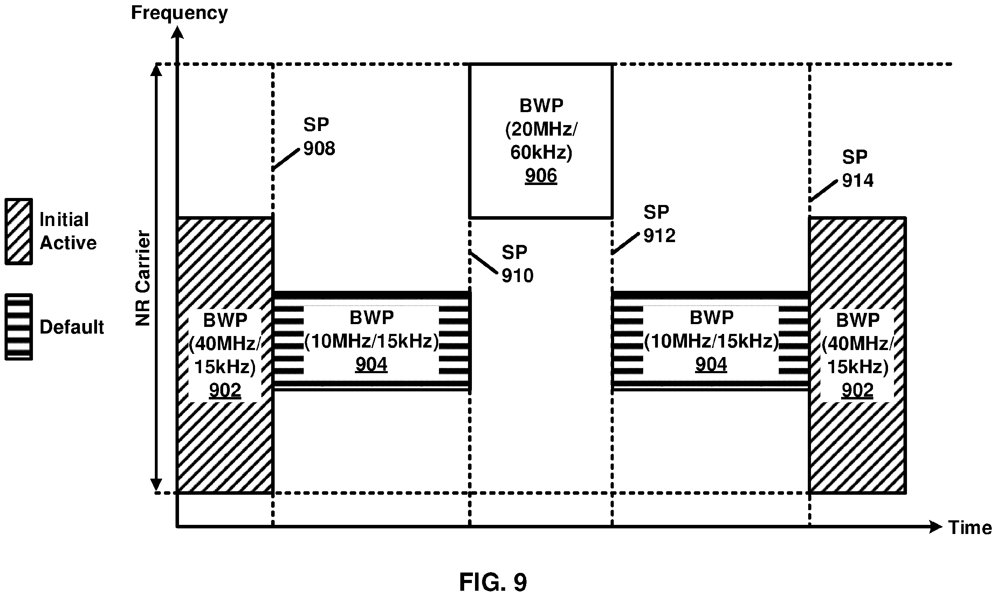

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, after (e.g., based on or in response to) an expiry of a BWP inactivity timer (e.g., indicating switching to the default BWP). The switching at the switching point 908 may occur, for example, after (e.g., based on or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, after (e.g., based on or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

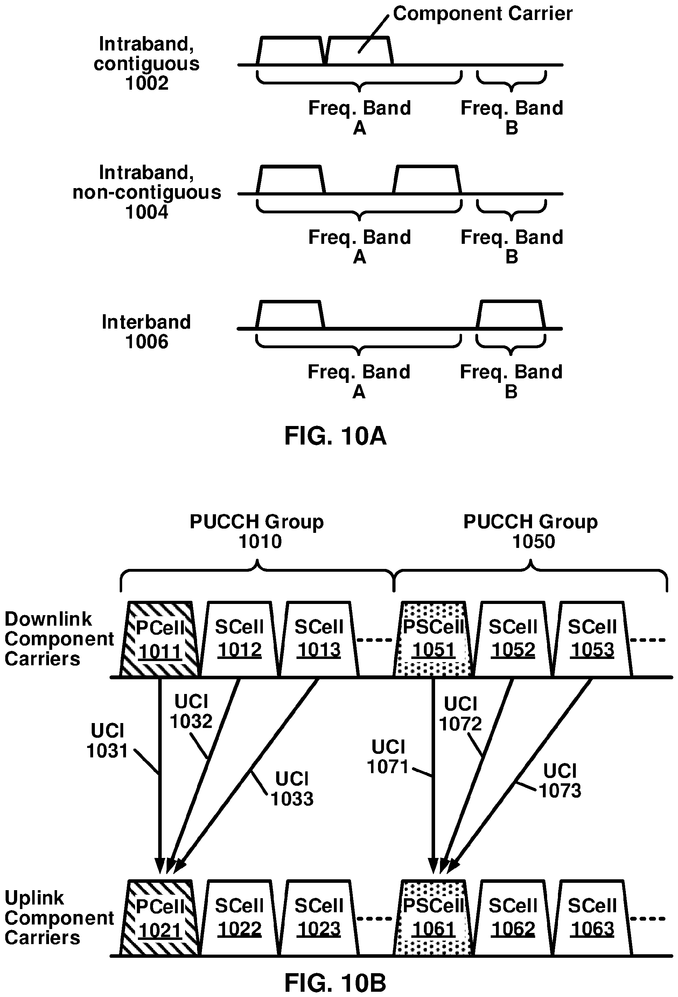

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, after (e.g., based on or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

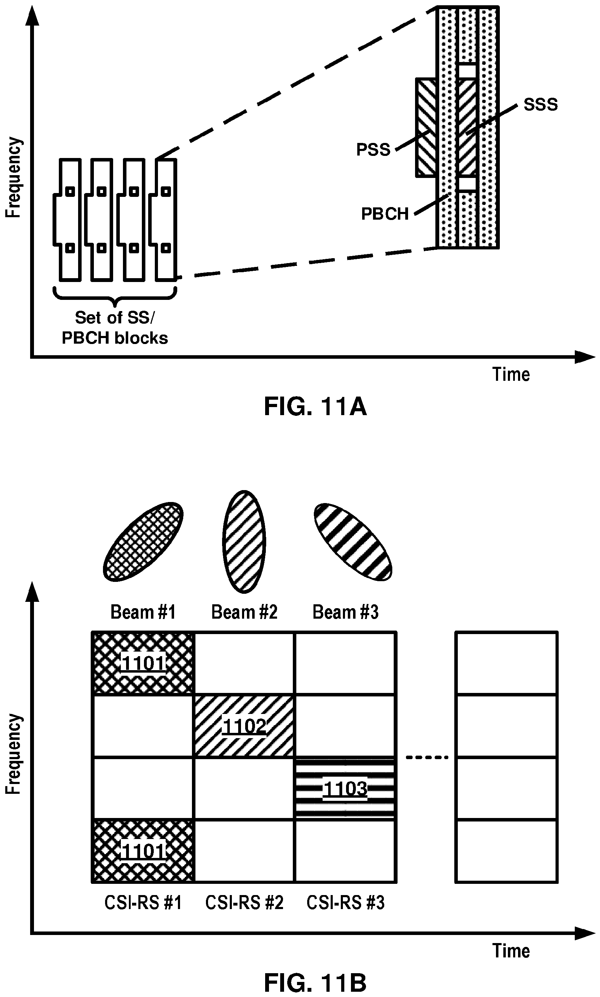

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. A person of ordinarily skill in the art would readily understand that PCI may be used to refer to a physical cell identifier and/or a physical cell identity. Accordingly, while PCI herein is used to refer to physical cell identifier, PCI herein may additionally or alternatively refer to a physical cell identity. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indexes. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol.

Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

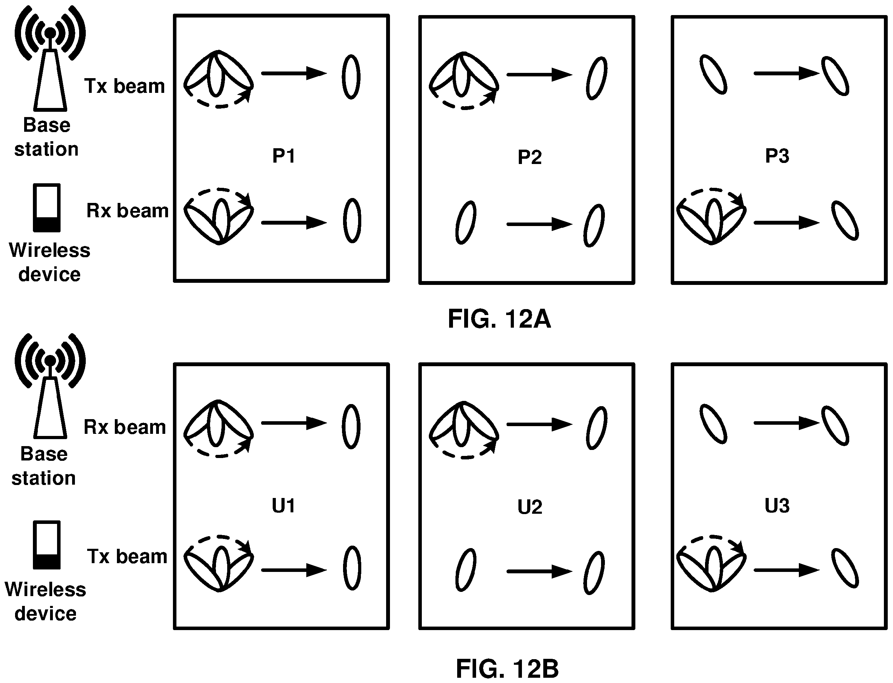

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

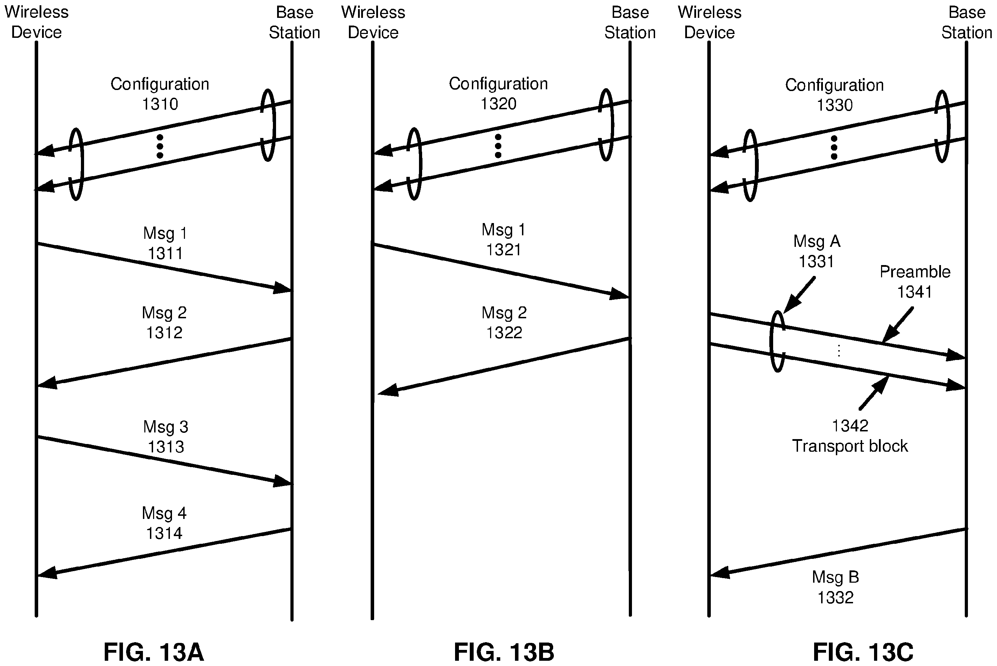

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., *RACH-configGeneral*); cell-specific parameters (e.g., *RACH-ConfigCommon*); and/or dedicated parameters (e.g., *RACH-ConfigDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received after (e.g., based on or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE POWER RAMPING STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, after (e.g., based on or in response to) the sending/sending (e.g., transmitting) of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/sending (e.g., transmitting) the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$RA\text{-}RNTI = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \leq s\_id < 14$), t_id may be an index of a first slot of the PRACH occasion in a system frame (e.g., $0 \leq t\_id < 80$), f_id may be an index of the PRACH occasion in the frequency domain (e.g., $0 \leq f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, after (e.g., based on or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, after (e.g., based on or in response to) the sending (e.g., transmitting) of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). Fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device.

The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, after (e.g., based on or in response to) sending (e.g., transmitting) the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending (e.g., transmitting) a beam failure recovery request (e.g., the window may start any quantity of symbols and/or slots after sending (e.g., transmitting) the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, after (e.g., based on or in response to) sending (e.g., transmitting) first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1331 may be sent/transmitted in an uplink transmission by the wireless device. Msg A 1331 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, after (e.g., based on or in response to) sending (e.g., transmitting) the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCI messages may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCI messages with one or more DCI formats, for example, depending on the purpose and/or content of the DCI messages. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

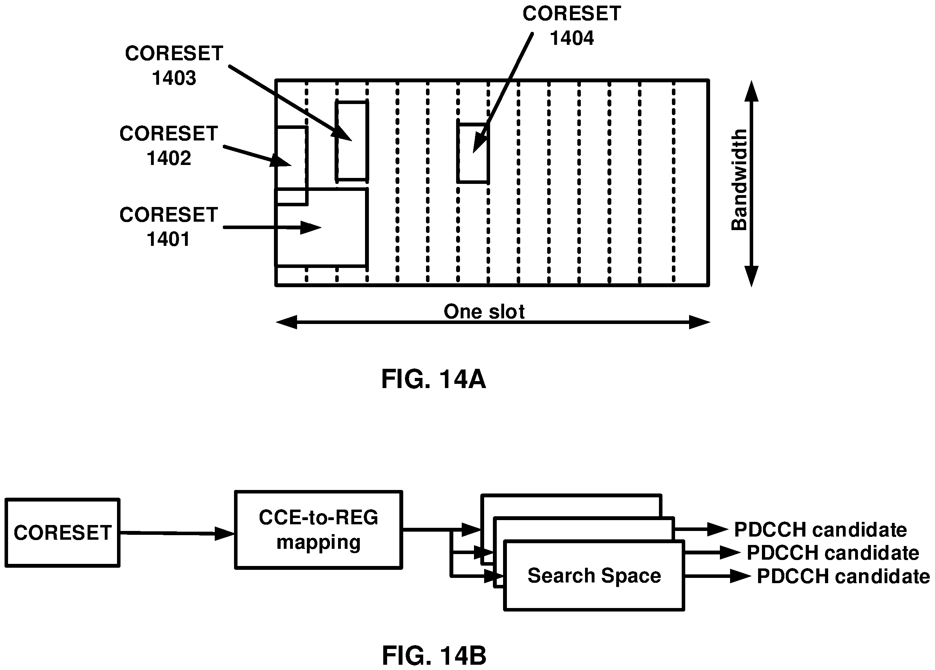

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCI messages. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, after (e.g., based on or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, after (e.g., based on or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

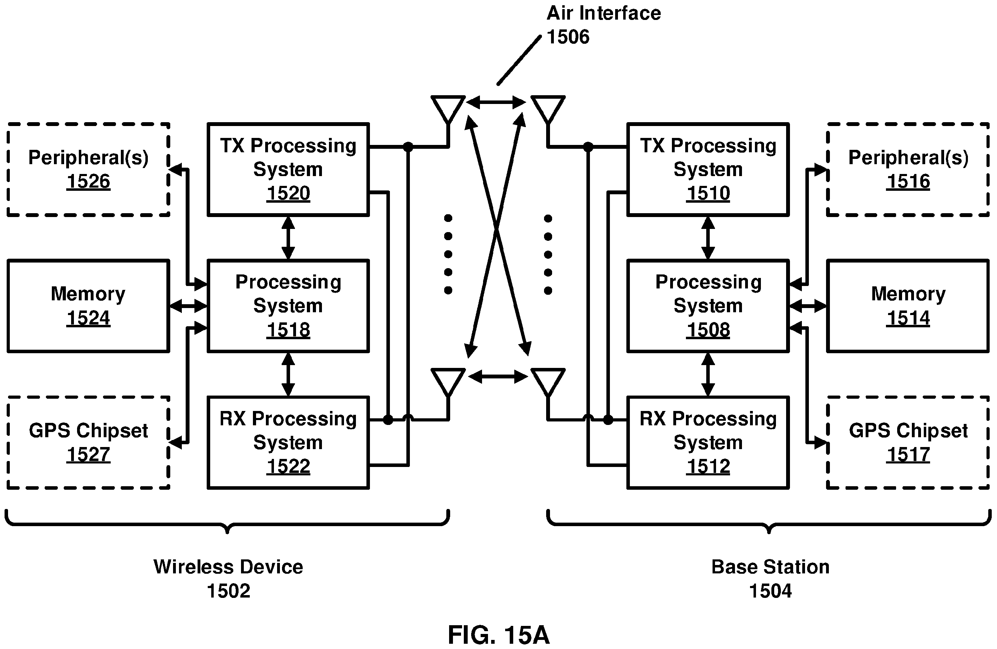

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For sending/transmission processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 maybe connected to a Global Positioning System (GPS) chipset 1527. The GPS chipset 1517 and the GPS chipset 1527 may be configured to determine and provide geographic location information of the wireless device 1502 and the base station 1504, respectively.

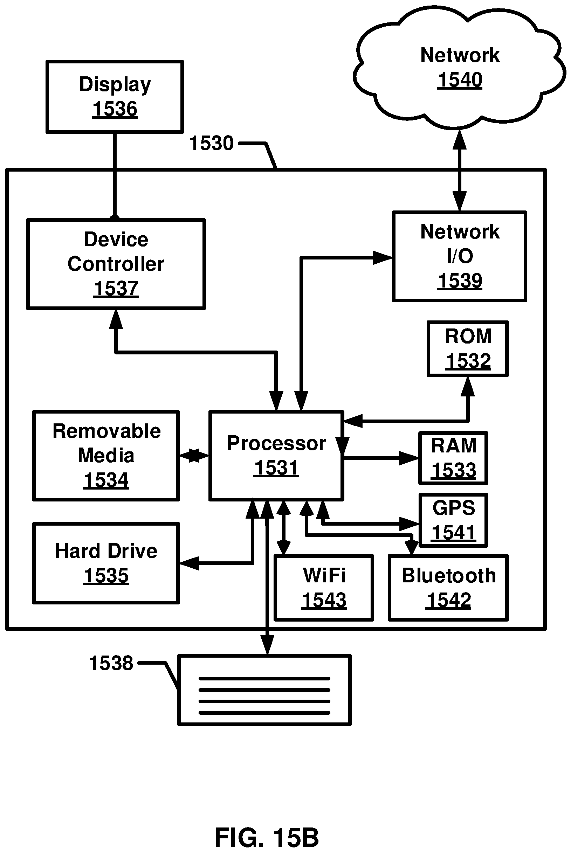

FIG. 15B shows example elements of a computing device that may be used to implement any of the various devices described herein, including, for example, the base station 160A, 160B, 162A, 162B, 220, 1713, 2413, 2802, 2906, 3002, 3102, 3202, 3302, 3402, 3502, 3602, 4402, 4502, and/or, 4602, the wireless device 106, 156A, 156B, 210, 1701, 2301, 2401, 2801, 2901, 2951, 3001, 3101, 3201, 3301, 3401, 3501, 3601, 3701, 3801, 3901, 4001, and/or 4101, or any other base station, wireless device, AMF, UPF, network device, or computing device described herein. The computing device 1530 may include one or more processors 1531, which may execute instructions stored in the random access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

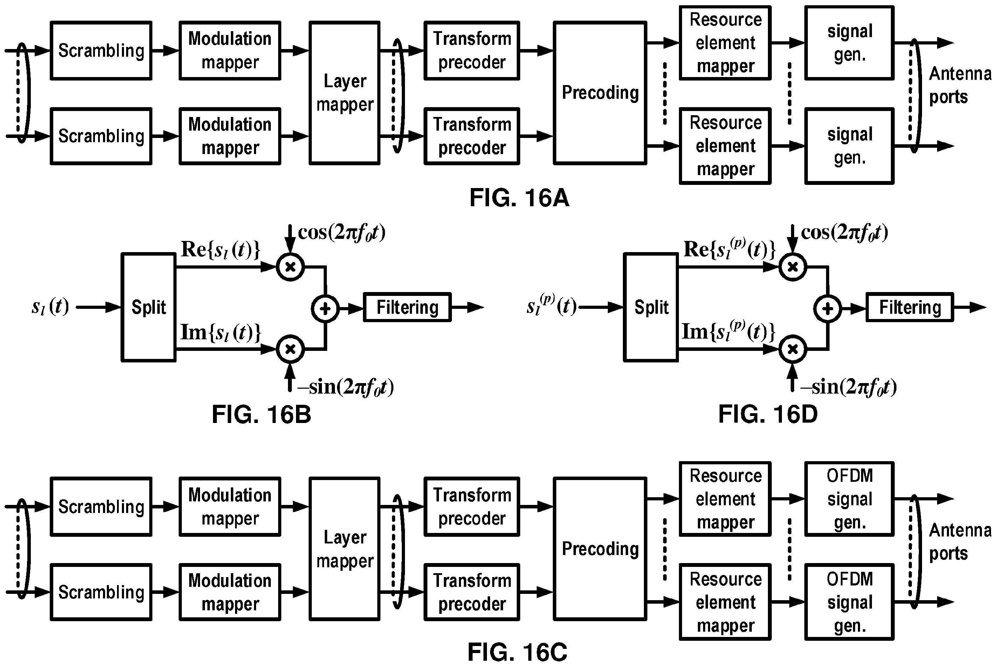

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, if it is started, and continue running until it is stopped or until it expires. A timer may be started, for example, if it is not running or restarted if it is running. A timer may be associated with a value (e.g., the timer may be started or restarted from a value or may be started from zero and expire if it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

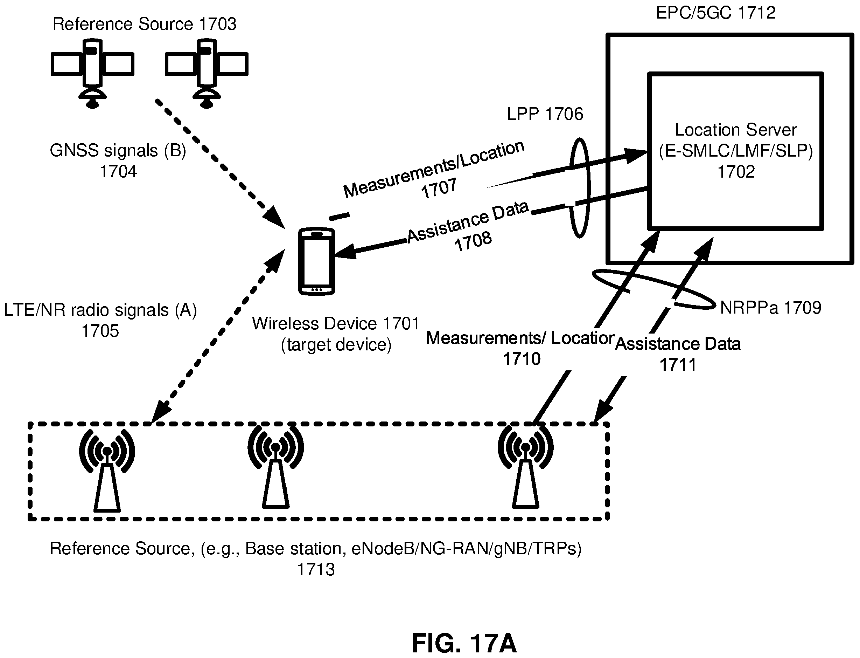

FIG. 17A shows an example of positioning. An AMF (e.g., AMF 158A in FIG. 1B) may receive a request for a location service that may be associated with a wireless device 1701 (e.g., a particular target wireless device, e.g., a Positioning Reference Unit (PRU)) from another entity (e.g., Gateway Mobile Location Centre (GMLC) or the wireless device). For example, the AMF may determine to initiate the location service corresponding to the wireless device 1701 (e.g., on behalf of the wireless device 1701, e.g., for an IMS emergency call from the wireless device 1701). The AMF may send a location services request to a location server, e.g., location management function (LMF) 1702, e.g., via NL1 interface. The NL1 interface between the LMF and the AMF may be transparent to the (all) wireless device 1701 and/or a base station (e.g., base station 1713). The LMF 1702 processes the location services request which may include transferring/transmitting assistance data 1708 to the wireless device 1701 to assist with wireless device-based and/or wireless device-assisted positioning and/or may include positioning of the wireless device 1701. The LMF 1702 may return/transmit/send a result of the location service (e.g., measurements/location data/information, e.g., a position estimate for the wireless device 1701) back to the AMF. In the case of the location service requested by an entity other than the AMF (e.g., the GMLC or the wireless device 1701), the AMF may return/transmit/send the location service result to the entity. The LMF 1702 may have a proprietary signaling connection to a secure user plane location (SUPL) location platform (SLP). The SLP is the SUPL entity responsible for positioning over the user plane.

For example, the AMF may establish a signaling connection with the wireless device and assign a specific serving gNB or ng-eNB, for example, if the AMF receives the location service request in case of the wireless device 1701 is in an CM-IDLE state. The wireless device 1701 may be in the RRC connected state/mode before the beginning of a positioning procedure. For example, the wireless device 1701 may send (e.g., transmit) from the RRC idle state to the RRC connected state to perform the positioning procedure (corresponding to the location service). For example, the wireless device 1701 may send (e.g., transmit) to the RRC inactive state to perform the positioning procedure.

As shown in FIG. 17A, positioning the wireless device 1701 (e.g., the positioning procedure) may involve/comprise (signal) measurements (e.g., GNSS signals and/or LTE/NR radio signals) and position estimate (e.g., the location) and optional velocity computation based on the (signal) measurements. Although not shown in FIG. 17A, the measurements may be performed/made by the wireless device 1701 and/or by a (serving/non-serving) base station (e.g., ng-eNB or gNB). The measurements may be positioning measurements or non-positioning measurements (e.g., SSB/CSI-RS/TRS measurements).

FIG. 17A may show an example of an LTE positioning protocol (LPP) configuration between a location server (an Enhanced Serving Mobile Location Centre (E-SMLC), the LMF or the SLP), resided in core network (e.g., EPC or 5GC), and a wireless device 1701 (e.g., target device, e.g., a UE or a SUPL Enabled Terminal (SET)). The LPP configuration may be used to position the wireless device 1701 using position-related measurements (e.g., GNSS signals and/or LTE/NR radio signals) obtained by one or more reference sources. The one or more reference resources may comprise one or more base stations (e.g., eNodeB/NG-RAN node/gNB), transmitting LTE/NR radio signals, and/or Global Navigation Satellites Systems (GNSSs) transmitting general radio navigation signals (GNSS signals). As shown in FIG. 17A, the location server (e.g., the LMF) may not reside in the base station. The GNSSs systems may comprise at least one of the following: GPS, Modernized GPS, Galileo, GLONASS, and BeiDou Navigation Satellite System (BDS). Regional navigation satellite systems include Quasi Zenith Satellite System (QZSS), and NAVigation with Indian Constellation (NavIC). The one or more reference resources may comprise one or more transmission points (TPs) and/or transmission reception points (TRPs). Example of FIG. 17A may show an example of the configuration as applied to the control-plane and/or user-plane location solutions for E-UTRAN and NG-RAN.

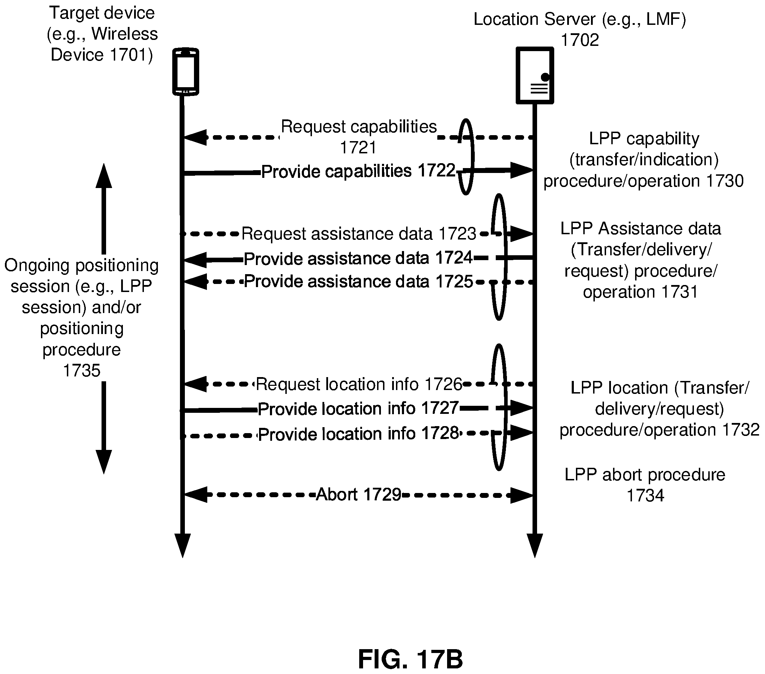

A positioning session (e.g., an LPP session, see FIG. 17B for an example) may be used between the location server 1702 and the wireless device 1701 in order to obtain (e.g., by the wireless device 1701 and/or the base station 1713 and/or the location server 1702) location related measurements or a location estimate or to transfer assistance data 1708. A single positioning session (e.g., a single LPP session) may be used to support a single location request (e.g., for a single MT-LR, MO-LR or NI-LR). Multiple positioning sessions (e.g., multiple LPP sessions) may be used between the wireless device 1701 and the location server to support multiple different location requests. An (or each) positioning session may comprise one or more positioning transactions (e.g., one or more LPP transactions), with each positioning transaction performing a single operation/function/procedure (a capability exchange procedure/operation, an assistance procedure/operation, and/or a location information transfer operation/procedure). The positioning transactions within the positioning session may occur serially or in parallel. Positioning transactions may be indicated at the LPP protocol level with a transaction ID in order to associate one or more positioning messages (e.g., LPP messages) with one another (e.g., a request message and a response message). For example, the positioning session may correspond to (or associated with) the positioning procedure. The positioning session may be for performing the positioning procedure by the wireless device 1701 and/or the base station and/or the location server.

LPP messages are carried as transparent (LPP) PDUs across intermediate network interfaces using the appropriate protocols (e.g., NGAP over the NG-C interface, NAS/RRC over the LTE-Uu and NR-Uu interfaces). The RRC protocol may provide transport for the LPP messages over the NR-Uu/LTE-Uu interfaces and/or configuring the wireless device 1701 with SRS resources/resource sets for positioning (e.g., via one or more SRS configuration parameters). The activation/deactivation of configured semi-persistent SRS resource sets may be via MAC protocol over the NR-Uu/LTE-Uu interfaces.

A positioning transaction of the positioning session (e.g., an LPP transaction of the LPP session) may comprise communicating/exchanging (transmitting/receiving) the one or more positioning messages (e.g., the LPP messages comprising LPP PDUs) between the location server and the wireless device 1701 (e.g., based on LTE-Uu/NR-Uu interface). For example, the location server may interact (e.g., for transmitting/receiving the one or more positioning messages) with the wireless device 1701 based on the LPP. The wireless device 1701 may exchange/communicate with the location server (e.g., receive or transmit) the LPP messages (or the one or more positioning messages) via the base station based on/via/using NAS/RRC messages/protocol (e.g., RRC DL information transfer and/or RRC UL information transfer) over the LTE-Uu and NR-Uu interfaces. The LPP PDUs of the LPP messages (carried by the RRC DL information transfer and/or RRC UL information transfer) may be transparent to the base station (e.g., the base station may not attempt to decode the LPP messages). The base station may transmit/send the LPP messages received from the wireless device 1701 (using/based on the RRC/NAS messages/protocol) to the core network (AMF/LMF) using a format/protocol (e.g., NGAP messages, e.g., NGAP downlink NAS transport and/or NGAP uplink NAS transport). The base station may transmit/send the LPP messages received from the core network (AMF/LMF) to the wireless device 1701 using/based on the RRC/NAS messages/protocol (e.g., NGAP messages, e.g., NGAP downlink NAS transport and/or NGAP uplink NAS transport). The NGAP uplink/downlink NAS transport messages may comprise LPP PDUs of the LPP messages.

The one or more positioning messages may comprise assistance data messages/information (e.g., to set up the wireless device to perform positioning measurements) and/or measurements (A, B, or A+B) /locations messages. The wireless device may receive the assistance data messages/information based on/via LPP messages/signaling and/or RRC messages and/or (RRC) broadcasting (e.g., at least one positioning System Information Block (posSIB or SIBpos)).

The positioning procedure may comprise one or more RRC procedures for positioning. The one or more RRC procedures may comprise a wireless device Positioning Assistance Information procedure (used by wireless device to report the wireless device Positioning Assistance Information for UL-TDOA, e.g., to report association between UL-SRS resources for positioning and the wireless device Tx TEG ID); and/or a location measurement indication procedure (used by the wireless device to request measurement gaps for OTDOA RSTD measurements, for subframe and slot timing detection for inter-RAT E-UTRA RSTD measurements, or for NR DL-PRS measurements). The one or more RRC procedures for positioning may comprise communicating one or more RRC message between the wireless device and the base station. The one or more RRC messages may comprise the RRC reconfiguration message; and/or an RRC Location Measurement Indication message; and/or (RRC) UE Positioning Assistance Info message; and/or (RRC) Inter-frequency RSTD measurement indication; and/or RRC system information message (e.g., SIBpos). For example, the base station may broadcast assistance data information/messages, received from the location server (e.g., via NRPPa messages of the one or more positioning messages), in positioning System Information messages. The one or more positioning messages may comprise posSIBs.

The wireless device may receive one or more configuration parameters (e.g., via a service cell and/or a base station). The one or more configuration parameters may comprise configurations indicated by the LLP messages (e.g., the one or more positioning messages) and/or the positioning SIBs and/or the one or more RRC messages and/or other SIBs (e.g., SIBx, x=1, 2, ..., 19, ...).

An NG-RAN node (e.g., a base station of the one or more base stations) may control/mange several TRPs/TPs, such as remote radio heads, or DL-PRS-only TPs for support of PRS-based Terrestrial Beacon System (TBS). A gNB-DU may include TRP functionality where the TRP functionality may support functions for a TP, RP or both TP and RP. For example, a gNB-DU which includes TRP functionality may not offer cell services to the wireless device.

As shown in FIG. 17A, the location server may interact with a base station (e.g., gNB) in order to obtain location related information to support the positioning procedure (e.g., an NR RAT-Dependent positioning method/procedure),

EP 4 496 292 A1

e.g., via NR Positioning Protocol A (NRPPa). The assistance data may comprise the location related information. For example, the location related information may comprise timing information for a TRP (e.g., in relation to either absolute GNSS time or timing of other TRPs) and information about the supported cells and TRPs including PRS schedule. The TRP may be a reference TRP (e.g., an assistance data reference TRP) or a neighbor TRP (e.g., non- assistance data reference TRP). The reference TRP may be the serving TRP. The reference TRP may be a serving TRP that the wireless device is able to determine/obtain corresponding frame configuration (e.g., DL/UL frame configuration, e.g., SFN).

The LMF may determine one or more positioning methods for the wireless device. The one or more positioning methods (or procedures) may be at least one of the following: network-assisted GNSS methods; observed time difference of arrival (OTDOA) positioning based on LTE signals; enhanced cell ID (E-CID/ECID) methods based on LTE signals; WLAN positioning; Bluetooth positioning; terrestrial beacon system (TBS) positioning; sensor based methods (e.g., barometric Pressure Sensor and/or motion sensor; NR enhanced cell ID methods (NR E-CID) based on NR signals; Multi-Round Trip Time Positioning (Multi-RTT based on NR signals); Downlink Angle-of-Departure (DL-AoD) based on NR signals; Downlink Time Difference of Arrival (DL-TDOA) based on NR signals; Uplink Time Difference of Arrival (UL-TDOA) based on NR signals; and/or Uplink Angle-of-Arrival (UL-AoA), including A-AoA and Z-AoA based on NR signals; carrier phase (difference).

The DL-AoD positioning method/procedure may use measured DL-PRS-RSRP (and optionally DL-PRS-RSRPP) of downlink signals (e.g., DL PRSs) received from multiple TPs/TRPs (e.g., the one or more TRPs), at the wireless device. The DL-TDOA positioning method may use measured DL Reference Signal Time Difference (RSTD) (and optionally DL-PRS-RSRP and/or DL-PRS-RSRPP) of the downlink signals received from multiple TPs/TRPs, at the wireless device. The UL-TDOA positioning method may use of UL-RTOA (and optionally UL-SRS-RSRP and/or UL-SRS-RSRPP) at multiple RPs/TRPs of uplink signals (e.g., SRS) transmitted from wireless device. The UL-AoA positioning method may use measured azimuth angle of arrival (A-AoA) and zenith angle of arrival (Z-AoA) at multiple RPs/TRPs of uplink signals (SRS) transmitted from the wireless device. The Multi-RTT positioning method may use measured UE Rx-Tx time difference measurements (and optionally DL-PRS-RSRP and/or DL-PRS-RSRPP) of the downlink signals received from multiple (e.g., one or more or at least one) TRPs (e.g., comprising the reference TRP and/or neighbor TRPs), measured by the wireless device and/or the measured gNB Rx-Tx time difference measurements (and optionally UL-SRS-RSRP and/or UL-SRS-RSRPP) at multiple TRPs of the uplink signals transmitted from wireless device.

The measurements (e.g., to perform the positioning procedure of the one or more positioning procedures) at the wireless device may comprise the DL-PRS-RSRP measurement(s) of the (received) downlink signals and/or the DL-PRS-RSRPP measurement(s) of the (received) downlink signals and/or the DL RSTD measurement(s) of the received signals and/or the UE Rx-Tx time difference measurements of the received signals. The measurements of the downlink signals at the wireless device may be based on the assistance data (received from the positioning server).

The measurements (e.g., to perform the positioning procedure) at the base station(s)/RPs/TRPs may comprise the UL-SRS-RSRP measurement(s) of uplink signals (e.g., SRS) and/or the UL-SRS-RSRPP measurement(s) of the uplink signals and/or the gNB Rx-Tx time difference measurements and/or UL-RTOA measurements of the uplink signals and/or A-AoA and Z-AoA measurements of the uplink signals.

The positioning procedure (e.g., at the wireless device and/or the base station) may be a hybrid positioning using the one or more positioning methods from the list of positioning methods herein. The positioning procedure may be a UE-based positioning procedure, a UE-assisted/LMF-based positioning procedure, and/or an NG-RAN node assisted positioning procedure.

For example, the positioning procedure may require the base station (e.g., gNB) measurements. The NG-RAN (e.g., the base station) may use the one or more positioning methods (e.g., listed herein) in order to determine the position of the wireless device. As shown in FIG. 17A, as part of the positioning procedure, the LMF may interact/communicate with the base station via the NRPPa to support the positioning method (or procedure), e.g., by transmitting/receiving the one or more positioning messages. The one or more positioning messages may comprise NRPPa messages.

FIG. 17B shows an example of LPP messages and LPP procedures. The interaction/communication between the wireless device 1701 and the location server may comprise communicating LPP messages of the one or more positioning messages, e.g., during the (ongoing) positioning procedure. As shown in FIG. 17B, the positioning procedure (and/or the positioning session) may comprise at least one of the following: a capability procedure (e.g., an LPP capability procedure); and/or an (LPP) assistance data procedure; and/or a location procedure (e.g., an LPP location procedure); and/or an (LPP) abort (or cancel or terminate) procedure. The purpose of the abort procedure may be to allow the wireless device 1701 or the location server to abort the (ongoing) positioning procedure (e.g., cancellation of a location request by an LCS client). For example, the abort procedure may stop (or terminate or finish) the (ongoing) positioning procedure.

The capability procedure may be (or comprise) an LPP capability transfer procedure. The server may send/-transmit request capabilities (e.g., RequestCapabilities) message of the one or more positioning messages to the wireless device 1701. For example, the wireless device 1701 may send (e.g., transmit) provide capabilities (e.g., ProvideCapabilities) message to the location server (e.g., based on (e.g., in response to) the request capabilities message). Upon receiving the RequestCapabilities message, the wireless device 1701 may generate the ProvideCapabilities message.

For each positioning method for which a request for capabilities is included RequestCapabilities message and if the wireless device 1701 supports the requested positioning method, the wireless device 1701 may include the capabilities of the wireless device 1701 for the supported positioning method in the ProvideCapabilities message. For example, the capability procedure may be an LPP capability indication procedure allowing the wireless device 1701 to provide unsolicited capabilities (e.g., to transmit the ProvideCapabilities message) to the location server, e.g., without receiving the request capability message.

The assistance data procedure may comprise one or more (LPP) procedures related to assistance data transfer. The assistance data procedure may enable/allow the wireless device 1701 to request assistance data (e.g., by sending (e.g., transmitting) a request assistance data message of the one or more positioning messages) from the location server to assist in positioning corresponding to the positioning procedure. The location server may respond with a provide assistance data (e.g., ProvideAssistanceData) message (of the one or more positioning messages) to the wireless device 1701 containing/comprising (requested) assistance data. The assistance data procedure may be a periodic assistance data transfer procedure. For example, the assistance data procedure may be a periodic assistance data transfer with update procedure. The assistance data procedure may enable/allow the location server to transfer assistance data to the wireless device 1701 in the absence of a request of assistance data (e.g., without receiving a request assistance data message), e.g., an assistance data delivery procedure.

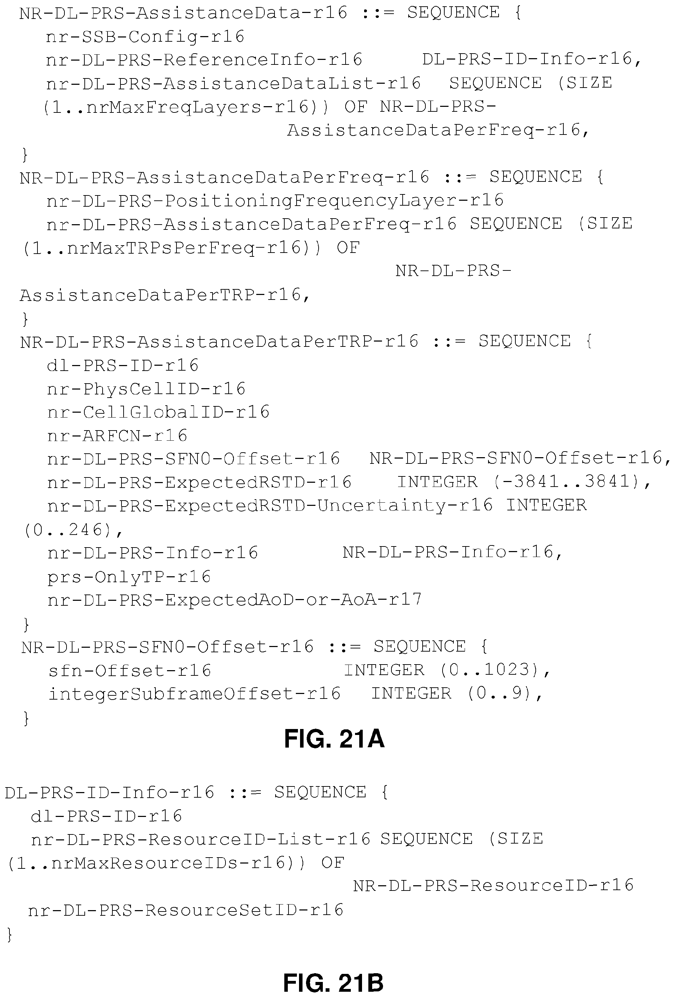

For example, assistance data that may be transferred from the location server to the wireless device 1701 (e.g., via the one or more positioning messages) may comprise at least one of the following: cell information (e.g., Physical cell IDs (PCIs), global cell IDs (GCIs), and PRS IDs, ARFCNs of candidate NR TRPs for measurement); and/or Timing relative to the TRP of the candidate NR TRPs; and/or DL-PRS configuration of candidate NR TRPs (e.g., as shown in FIG. 21A); and/or SSB information of the (one or more) TRPs (the time/frequency occupancy of SSBs); and/or PRS-only TP indication; On-Demand DL-PRS-Configurations; Validity Area of the Assistance Data. The candidate NR TRPs may comprise the one or more TRPs.

The location procedure may comprise procedures related to location information transfer/report. The location procedure may enable/allow the location server to request location measurement data (or positioning measurements or measurements or positioning measurement data) and/or a location estimate from the wireless device 1701. The location server may send a request location information (e.g., RequestLocationInformation) message (of the one or more positioning messages) to the wireless device 1701 to request location information (e.g., indicating a type of location information needed and potentially an associated QoS). The wireless device 1701 may send (e.g., transmit) a provide location information (e.g., ProvideLocationInformation) message (of the one or more positioning messages) to the location server to transfer the location information data (or simply location data or location information or location), for example, based on (e.g., in response to) the request location information message. For example, the location procedure may enable/allow the wireless device 1701 to transfer/transmit/send the (unsolicited) location measurement data and/or the location estimate to the location server in the absence of a request of location measurement data from the location server, e.g., the location information delivery procedure. The location procedure may comprise (periodically) transmitting/sending location information report(s) (e.g., comprising the location information data) to the location server by the wireless device 1701.

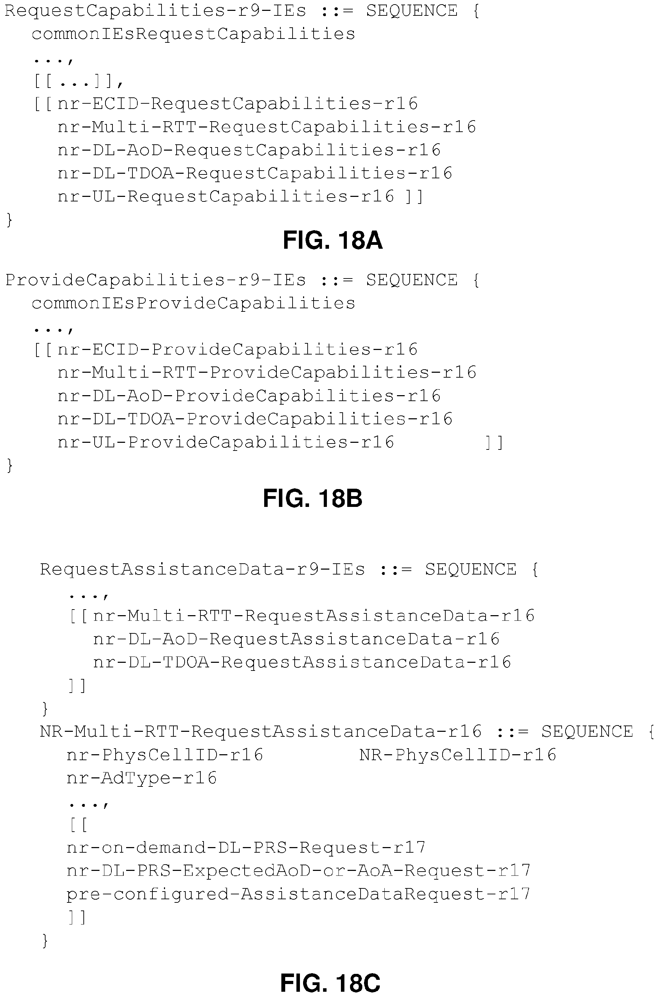

FIG. 18A shows an example of request capabilities message. The request capabilities message (of the one or more positioning messages) may indicate types of capability needed for the ongoing positioning procedure. The RequestCapabilities message body in a LPP message (e.g., the request capabilities message) of the LPP messages may be used by the location server to request the wireless device capability information for LPP and the supported individual positioning methods. The request capabilities message may comprise RequestCapabilities-r9-IEs indicating one or more capabilities, e.g., common request capabilities (e.g., commonIEsRequestCapabilities), and/or NR ECID request capabilities (e.g., nr-ECID-RequestCapabilities-r16), and/or NR multi-RTT request capabilities (e.g., nr-Multi-RTT-RequestCapabilities-r16), and/or NR DL TDOA request capabilities (e.g., nr-DL-TDOA-RequestCapabilities-r16), and/or NR UL request capabilities (e.g., nr-UL-RequestCapabilities-r16), and/or the like. The RequestCapabilities-r9-IEs may indicate other capabilities (e.g., a-gnss-RequestCapabilities and/or wlan-RequestCapabilities-r13, and/or the like) not shown in FIG. 18A.

FIG. 18B shows an example of provide capabilities message. The provide capabilities message (of the one or more positioning messages) may indicate types of capability needed for the ongoing positioning procedure (e.g., for each positioning method whose capabilities are to be indicated or request by the request capabilities). The ProvideCapabilities message body in a LPP message (e.g., the provide capabilities message) may indicate the LPP capabilities of the wireless device to the location server. The provide capabilities message may comprise ProvideCapabilities-r9-IEs indicating one or more capabilities, e.g., common provide capabilities (e.g., commonIEsProvideCapabilities), and/or NR ECID request capabilities (e.g., nr-ECID-ProvideCapabilities-r16), and/or NR multi-RTT request capabilities (e.g., nr-Multi-RTT-ProvideCapabilities-r16), and/or NR DL TDOA request capabilities (e.g., nr-DL-TDOA-ProvideCapabilities-r16), and/or NR UL request capabilities (e.g., nr-UL-ProvideCapabilities-r16), and/or the like. The ProvideCapabilities-r9-IEs may indicate other capabilities (e.g., a-gnss-ProvideCapabilities and/or wlan-ProvideCapabilities-r13, and/or the like) not shown in FIG. 18A.

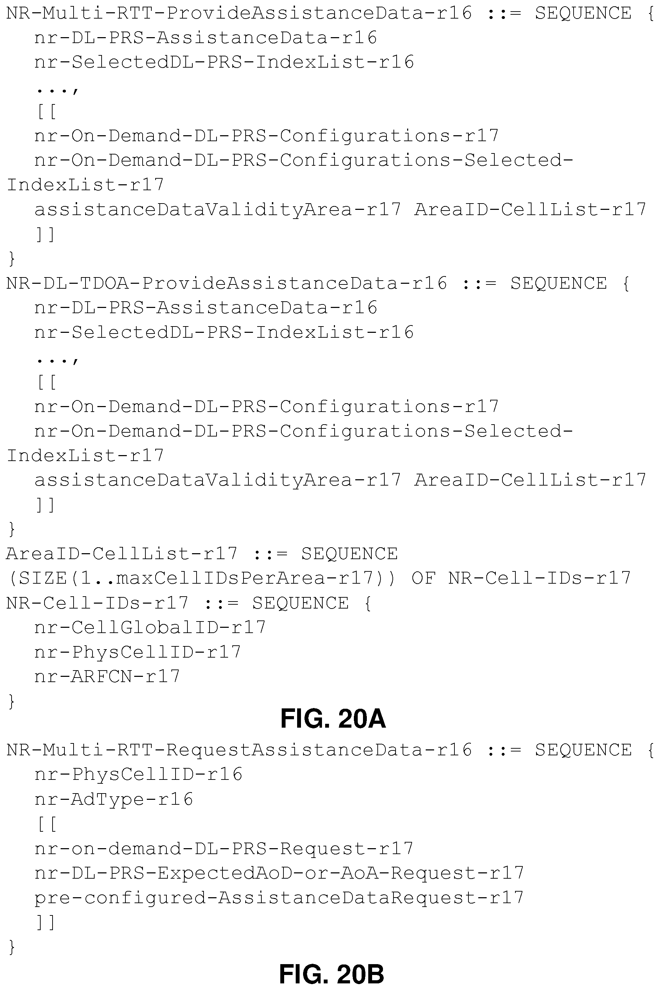

FIG. 18C shows an example of request assistance data message. The request assistance data message (of the one or more positioning messages) may comprise RequestAssistanceData-r9-IEs comprising at least one of the following, e.g., common request assistance data (e.g., commonIEsRequestAssistanceData), and/or NR multi-RTT request assistance data (e.g., nr-Multi-RTT-RequestAssistanceData-r16), and/or NR DL TDOA request assistance data (e.g., nr-DL-TDOA-RequestAssistanceData-r16), and/or NR DL AoD request assistance data (e.g., nr-DL-AoD-RequestAssistanceData-r16), and/or the like. For example, the request assistance data message (e.g., CommonIEsRequestAssistanceData) may comprise/indicate a primary cell ID/index (e.g., primaryCellID) indicating a primary cell of the wireless device. A provide assistance data message (of the one or more positioning messages) may comprise ProvideAssistanceData-r9-IEs comprising at least one of the following, e.g., common provide assistance data (e.g., commonIEsProvideAssistanceData), and/or NR multi-RTT provide assistance data (e.g., nr-Multi-RTT-ProvideAssistanceData-r16, see FIG. 20A for an example), and/or NR DL TDOA provide assistance data (e.g., nr-DL-TDOA-ProvideAssistanceData-r16), and/or NR DL AoD provide assistance data (e.g., nr-DL-AoD-ProvideAssistanceData-r16), and/or the like.

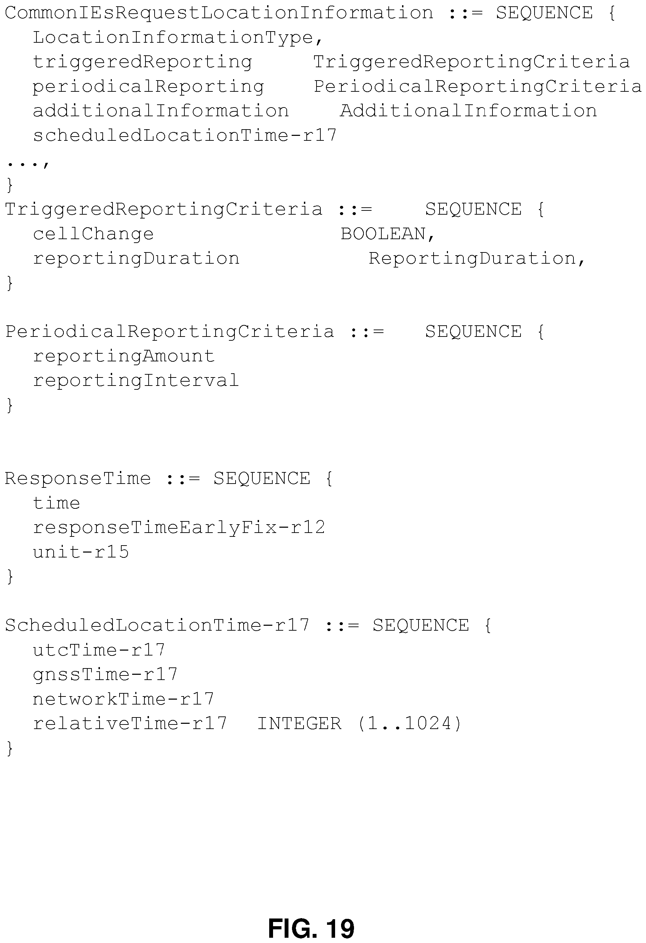

A request location information message (of the one or more positioning messages) may comprise RequestLocationInformation-r9-IEs comprising at least one of the following, e.g., common request location information (e.g., commonIEsRequestLocationInformation, see FIG. 19 for an example), and/or NR multi-RTT request location information (e.g., nr-Multi-RTT-RequestLocationInformation-r16), and/or NR DL TDOA request location information (e.g., nr-DL-TDOA-RequestLocationInformation-r16), and/or NR DL AoD request location information (e.g., nr-DL-AoD-RequestLocationInformation-r16), and/or the like.

FIG. 19 shows an example of configuration parameters of a request location information. The request location information may comprise the common request location information (e.g., commonIEsRequestLocationInformation). As shown in FIG. 19, the common request location information (e.g., commonIEsRequestLocationInformation) may comprise at least one of the following: locationInformationType (e.g., whether the location server requires the location estimate or the measurements); and/or a triggered reporting (e.g., triggeredReporting); and/or a periodic reporting (e.g., periodicalReporting); and/or an additional information; and/or a response time (e.g., responseTime or responseTimeNB); and/or a scheduled location time (e.g., scheduledLocationTime).

The additional information may indicate whether the wireless device is allowed to send (e.g., transmit) additional information (e.g., besides requested information) to the location server. If the additional information indicates 'onlyReturnInformationRequested', the wireless device may not return (or send or transmit) any additional information to the location server. If additional information indicates 'mayReturnAdditionalInformation', the wireless device may return (or transmit) additional information to the location server. The additional information may comprise a a velocity (e.g., corresponding to the location estimate) and/or E-CID measurements.

The triggered reporting may indicate that triggered reporting is requested (by the location service). For example, the triggered reporting may indicate/configure one or more reporting triggers/criteria (e.g., via TriggeredReportingCriteria) for (performing/triggering) the location (transfer/delivery) procedure. The triggered reporting may comprise cellChange and reportingDuration. If the cellChange field of the triggered reporting is set to TRUE, the wireless device may send (e.g., transmit) the (requested) location information each time the primary cell changes (e.g., handover procedure), e.g., the one or more reporting triggers may comprise the (primary) cell change. The reportingDuration may indicate a maximum duration of the triggered reporting (e.g., in seconds/milliseconds). A value of zero of the reportingDuration may indicate an unlimited (i.e., "infinite") duration. For example, the wireless device may continue transmitting/sending the location information (or the location data/positioning measurements) to the location server (e.g., based on the one or more reporting triggers) for the reportingDuration or until the ongoing positioning procedure being aborted/canceled/stopped (e.g., based on (e.g., in response to) the abort message or an error message of the one or more positioning message). The wireless device may ignore the triggeredReporting field of the commonIEsRequestLocationInformation if the commonIEsRequestLocationInformation comprises/configures at least one of the following: the perioding reporting (e.g., periodicalReporting IE) and/or the response time (e.g., responseTime IE or responseTimeNB IE).

The periodic reporting (e.g., periodicalReporting) may indicate that periodic reporting (of the location information data/measurements) is requested by the location server. The periodic reporting may comprise a reporting amount (e.g., reportingAmount) and/or a reporting interval (e.g., reportingInterval). The reporting amount may indicate a number of the (periodic) location information data/reports. If the reportingAmount is 'infinite/indefinite', the wireless device may continue periodic reporting of the location information (to the location server) until the abort message is received from the location server. The reporting interval may indicate an interval between the (consecutive) location information reports and/or a response time requirement for a first/starting/initial/earliest location information report. For example, the location information reports (or measurement reports) may contain no measurements or no location estimate when a reportingInterval expires before the wireless device is able to obtain new measurements or obtain a new location estimate.

The response time may comprise at least one of the following: a time; and/or a responseTimeEarlyFix; and/or a unit. The time may indicate a maximum/largest/greatest response time (e.g., based on the indicated unit or seconds) as measured between receipt of the RequestLocationInformation message and transmission of the ProvideLocationInformation message. The responseTimeEarlyFix may indicate the a maximum/largest/greatest response time (e.g., based on the indicated unit or seconds) as measured between receipt of the RequestLocationInformation message and transmission of the ProvideLocationInformation messagecontaining an early location measurements or an early location estimate.

The scheduledLocationTime may indicate that the wireless device is requested (by the location server) to obtain the location information data (or the positioning/location measurements or location estimate) valid at the scheduledLocationTime T_scheduledLocationTime. T_scheduledLocationTime may be in UTC format, or GNSS system time, or a network time (e.g., networkTime, e.g., in a E-UTRA or NR network time, or a relativeTime (e.g., T_scheduledLocationTime in seconds from current time, where current time is defined as the time the CommonIEsRequestLocationInformation is received). The NR network time may be based on system frame number (nr-SFN) and/or a (physical) cell ID/identity (e.g., nr-PhysCellID, nr-ARFCN, nr-CellGlobalID) and/or a slot number (e.g., nr-Slot for an indicated subcarrier spacing (SCS)), e.g., the NR network time may be nr-SFN + nr-Slot.

The provide location information message may comprise ProvideLocationInformation-r9-IEs comprising at least one of the following, e.g., common provide location information (e.g., commonIEsProvideLocationInformation), and/or NR multi-RTT provide location information (e.g., nr-Multi-RTT-ProvideLocationInformation-r16), and/or NR DL TDOA provide location information (e.g., nr-DL-TDOA-ProvideLocationInformation-r16), and/or NR DL AoD provide location information (e.g., nr-DL-AoD-ProvideLocationInformation-r16), and/or the like.

For example, the provide location information message (e.g., IE NR-Multi-RTT-ProvideLocationInformation) may comprise signal measurement information configuration(s) (e.g., NR-Multi-RTT-SignalMeasurementInformation and/or NR-DL-TDOA-SignalMeasurementInformation-r16 and/or NR-DL-AoD-SignalMeasurementInformation-r16 and/or the like). The signal measurement information configurations may comprise at least one of the following: nr-NTA-Offset (e.g., N_TAoffset used by the wireless device); and/or SRS for Positioning Resources associated with a wireless device Tx time error group (TEG); and/or a list of multi-RTT measurement elements (e.g., nr-Multi-RTT-MeasList-r16 or nr-AdditionalPathListExt-r17). Each multi-RTT measurement element (e.g., NR-Multi-RTT-MeasElement-r16 or NR-Multi-RTT-AdditionalMeasurementElement-r16) of the list of multi-RTT measurement elements may comprise at least one of the following: associated/corresponding nr-UE-RxTxTimeDiff (indicating a wireless device Rx-Tx time difference measurement); and/or associated/corresponding PRS configuration (e.g., comprising dl-PRS-ID and/or a DL-PRS Resource Set ID and a DL-PRS Resources ID); and/or associated/corresponding additional measurements (e.g., nr-DL-PRS-RSRP-Result-r16); and/or associated/corresponding time stamp (e.g., nr-TimeStamp-r16). The dl-PRS-ID and/or the DL-PRS Resource Set ID and the DL-PRS Resources ID may uniquely identify a DL-PRS Resource. The dl-PRS-ID may be associated with multiple DL-PRS Resource Sets associated with a single TRP (e.g., the reference TRP or a neighbor TRP). Each TRP (e.g., the reference TRP or a neighbor TRP) may only be associated with one the dl-PRS-ID. Each multi-RTT measurement element may correspond to a path (a first/initial detected path or an additional detected path) and/or the TEG. Each multi-RTT measurement element may comprise accompanied DL-PRS RSRP measurements and/or LOS-NLOS indicator.

The wireless device Rx-Tx (or reception-transmission) time difference measurement may be measured/calculated/determined (by the wireless device) as T_(UE-RX) - T_(UE-TX), wherein T_(UE-RX) is the received timing of downlink subframe #i (at the wireless device) from a TRP/TP (e.g., corresponding to the PRS configuration identified by the dl-PRS-ID and/or the DL-PRS Resource Set ID and the DL-PRS Resources ID) defined by the first detected path in time and T_(UE-TX) is the send (e.g., transmit) timing of uplink subframe #j (at the wireless device) that is closest in time to the subframe #i received from the TP/TP. The wireless device may (corresponding to the first detected path) receive/measure DL PRS of the PRS configuration (e.g., corresponding to the dl-PRS-ID and/or the DL-PRS Resource Set ID and the DL-PRS Resources ID) during/within downlink subframe #i. The wireless device may send (e.g., transmit) SRS (for positioning) during/with the uplink subframe #j .

FIG. 20A shows an example of configuration parameters of the provide assistance data message. The provide assistance data message (of the one or more positioning message) may comprise the multi-RTT provide assistance data (NR-Multi-RTT-ProvideAssistanceData) message and/or the DL-TDOA provide assistance data (NR-DL-TDOA-ProvideAssistanceData) message. As shown in FIG. 20A, the provide assistance data message may comprise a cell list of a network area (e.g., IE AreaID-CellList). The cell list of the network area may provide (NR) Cell-IDs (e.g., nr-PhysCellID-r17) of the multiple TRPs belonging to the network area where the (associated) assistance data are valid (e.g., indicated by the corresponding provide assistance data message). The provide assistance data message may comprise one or more PRS configuration parameters. The one or more PRS configuration parameters may comprise at least one of the following: DL PRS assistance data (e.g., nr-DL-PRS-AssistanceData-r16) and/or nr-SelectedDL-PRS-IndexList (indicating DL-PRS Resources applicable for the NR-Multi-RTT-ProvideAssistanceData message) and/or nr-On-Demand-DL-PRS-Configurations (indicating a set of available DL-PRS configurations requested by the wireless device on-demand) and/or nr-On-Demand-DL-PRS-Configurations-Selected-IndexList (indicating available on-demand DL-PRS configurations applicable for the NR-Multi-RTT-ProvideAssistanceData message). For example, the wireless device may request the nr-On-Demand-DL-PRS-Configurations by sending (e.g., transmitting) the request assistance data message (e.g., NR-Multi-RTT-RequestAssistanceData-r16) to the location server. If DL PRS assistance data (e.g., nr-DL-PRS-Assistance-

Data-r16) is absent but the nr-SelectedDL-PRS-IndexList field is present, the nr-DL-PRS-AssistanceData may be provided in IE NR-DL-TDOA-ProvideAssistanceData or NR-DL-AoD-ProvideAssistanceData.

FIG. 20B shows an example of configuration parameters of the request assistance data message. For example, the request assistance data message may comprise the NR-Multi-RTT-RequestAssistanceData-r16. Although not shown in FIG. 20B, similar configurations (to the configurations of the FIG. 20B) for NR-DL-TDOA-RequestAssistanceData and/or NR-DL-AoD-RequestAssistanceData or the like may exist. The request assistance data message may comprise at least one of the following: nr-PhysCellID (e.g., the NR physical cell identity of the (current) primary cell of the wireless device); and/or nr-AdType (e.g., indicating the requested assistance data and/or configuration: nr-DL-PRS-Assistance-Data, for PRS assistance data, or UL SRS configuration, for SRS configuration); and/or the nr-on-demand-DL-PRS-Request-r17; and/or the nr-DL-PRS-ExpectedAoD-or-AoA-Request-r17 (indicating that IE NR-DL-PRS-ExpectedAoD-or-AoA in NR-DL-PRS-AssistanceData is requested); and/or the pre-configured-AssistanceDataRequest-r17 (indicating that the wireless device requests pre-configured assistance data with the area validity, e.g., the network area); and/or the like. For example, when the nr-AdType of the request assistance data message indicates nr-DL-PRS-AssistanceData, the wireless device/base station may request (from the location server) configuration of the PRS for the positioning procedure.

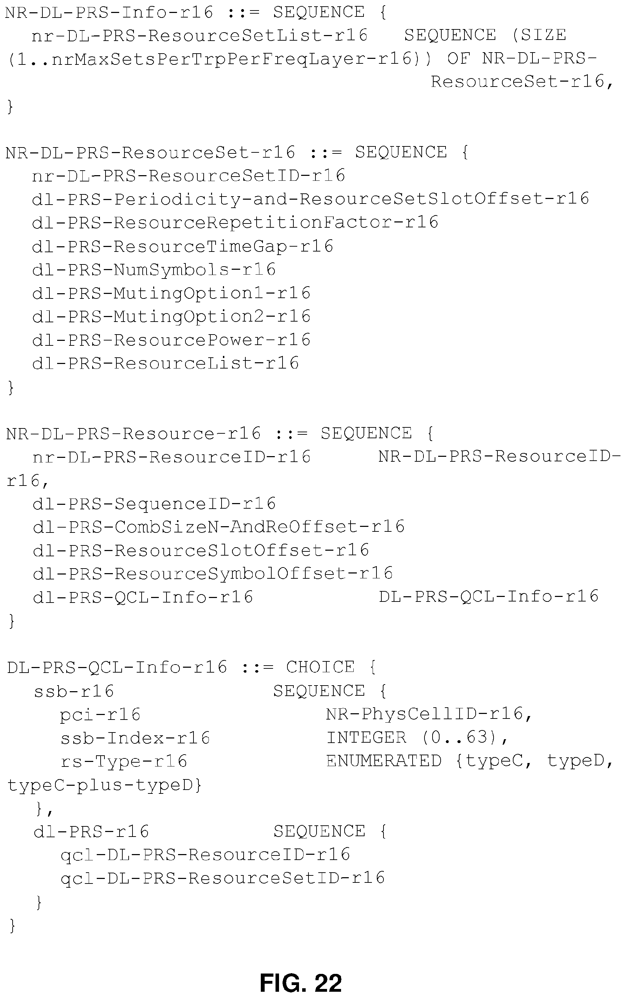

FIG. 21A, FIG. 21B, and FIG. 22 show examples of configuration parameters of downlink (DL) positioning reference signal (PRS). For example, the one or more configuration parameters may comprise the configuration parameters of the DL PRS (e.g., one or more PRS configuration parameters). The one or more PRS configuration parameters may comprise one or more DL PRS resource set configuration(s) (e.g., indicated by IE NR-DL-PRS-ResourceSet and NR-DL-PRS-Resource in FIG. 22). The one or more DL PRS resource set configuration(s) may configure one or more DL PRS resource sets. The one or more DL PRS resource sets may comprise one or more collections (or lists or sets or subsets) of DL PRS resource sets. Each collection of DL PRS resource sets (of the one or more collections of DL PRS resource sets) may correspond to (or associated with) a DL PRS positioning frequency layers of one or more DL PRS positioning frequency layers. A collection of DL PRS resource sets may comprise one or more first DL PRS resource sets (e.g., configured via nr-DL-PRS-ResourceSetList of the nr-DL-PRS-Info), e.g., corresponding to a TRP (e.g., the reference TRP or a neighbor TRP), e.g., DL PRS resources sets of the TRP. For example, a DL PRS resource set of the one or more DL PRS resource sets may correspond to a (unique) nr-DL-PRS-ResourceSetID).

The one or more PRS configuration parameters may configure/indicate DL-PRS configuration (e.g., PRS resources and/or PRS resource sets) corresponding to the multiple (e.g., the one or more) TRPs (e.g., comprising the reference TRP and/or at least one neighbor TRP). The DL PRS assistance data (e.g., nr-DL-PRS-AssistanceData-r16) may (implicitly or explicitly) indicate/configure the assistance data reference TRP (e.g., the reference TRP) and/or the at least one neighbour TRP.

As shown in FIG. 21A, the DL PRS assistance data comprises IE nr-DL-PRS-ReferenceInfo that indicates ID(s) of the reference TRP. FIG. 21B shows configuration parameter(s) of a PRS reference information (e.g., the IE DL-PRS-ID-Info). For example, the IE DL-PRS-ID-Info may configure/indicate one or more IDs (or indexes or identifications or indices) of the reference TRPs' PRS Resource(s) and/or PRS resource set(s) of the one or more PRS resource sets. The one or more IDs may indicate IDs of PRS Resource(s) and/or PRS resource set(s) that are associated with the reference TRP. The DL-PRS-ID-Info (e.g., via nr-DL-PRS-ResourceID-List-r16) indicates/configures a list of DL-PRS Resource IDs under a same DL-PRS Resource Set (e.g., indicated/configured by nr-DL-PRS-ResourceSetID-r16), e.g., a list of PRS resource(s) that are associated with a PRS resource set with index/ID of nr-DL-PRS-ResourceSetID-r16. The wireless device may, using the IE DL-PRS-ID-Info (e.g., dl-PRS-ID and/or the one or more IDs and/or the nr-DL-PRS-Resource-SetID), determine/distinguish/identify the reference TRP. The wireless device may use DL PRS resource(s) corresponding to the IE DL-PRS-ID-Info as a reference for the DL RSTD, DL PRS-RSRP, DL PRS-RSRPP, and wireless device Rx-Tx time difference measurements. For example, the wireless device may use different DL PRS resources or a different DL PRS resource set (e.g., than the DL PRS resource(s) corresponding to the IE DL-PRS-ID-Info) to determine the reference for the RSTD measurement. If the wireless device chooses to use a different reference than indicated by the IE DL-PRS-ID-Info, the wireless device may report/send/transmit (e.g., via the LPP messages, e.g., the provided location info message) to the location server the dl-PRS-ID, the DL PRS resource ID(s) or the DL PRS resource set ID used to determine the reference.

As shown in FIG. 21A, the one or more PRS configuration parameters (e.g., the DL PRS assistance data (e.g., nr-DL-PRS-AssistanceData-r16)) may configure/indicate (e.g., via nr-DL-PRS-AssistanceDataList-r16) one or more DL PRS positioning frequency layers (e.g., via IE nr-DL-PRS-AssistanceDataList). Each DL PRS positioning frequency layer (of the one or more DL PRS positioning frequency layers) may define/configure/indicate a collection of DL PRS resource sets of the one or more collections of DL PRS resource sets (e.g., via nr-DL-PRS-Info in NR-DL-PRS-AssistanceDataPerTRP). For example, NR-DL-PRS-PositioningFrequencyLayer may comprise common parameters that are shared across the collection of the DL PRS resource sets per each frequency layer. For example, a DL PRS positioning frequency layer (e.g., that is configured by NR-DL-PRS-PositioningFrequencyLayer) may configure/indicate at least one of the following: dl-PRS-SubcarrierSpacing (indicating a subcarrier spacing for a (corresponding) DL PRS resource; and/or a dl-PRS-CyclicPrefix indicating a cyclic prefix for the DL PRS resource; and/or dl-PRS-PointA indicating an absolute frequency of a reference resource block; and/or dl-PRS-ResourceBandwidth indicating a number of PRBs allocated for the DL-PRS Resource (allocated DL-PRS bandwidth); and/or the like.

As shown in FIG. 21A, a dl-PRS-ID corresponding to a DL PRS positioning frequency layer (e.g., via NR-DL-PRS-AssistanceDataPerTRP of the NR-DL-PRS-AssistanceDataPerFreq) may correspond (or associate with) multiple DL PRS resource sets (or a collection of DL PRS resource sets) via IE DL-PRS-Info.

As shown in FIG. 22, a DL PRS resource set (with/corresponding to nr-DL-PRS-ResourceSetID), e.g., of the multiple DP PRS resource sets (or the collection of DL PRS resource sets), may comprise of a list of DL PRS resource(s) (e.g., via IE dl-PRS-ResourceList). The DL PRS resource set may correspond to a dl-PRS-ID and/or nr-PhysCellID (and/or nr-CellGlobalID and/or nr-ARFCN) as indicated by the NR-DL-PRS-AssistanceDataPerTRP in FIG. 21A. Each DL PRS resource of the list of DL PRS resource(s) may correspond to a nr-DL-PRS-ResourceID and/or an associated spatial transmission filter (e.g., configured by dl-PRS-QCL-Info). The wireless device may expect that one of these dl-PRS-ID along with a nr-DL-PRS-ResourceSetID and a nr-DL-PRS-ResourceID-r16 uniquely identify a DL PRS resource (and/or an associated TRP). The dl-PRS-QCL-Info may configure/indicate SSB(s) (or other RS signal(s)) that are quasi-collocated with a DL PRS resource of the list of DL PRS resource(s) and/or a type of the QCL (e.g., rs-Type). For example, the dl-PRS-QCL-Info may indicate physical cell ID of the SSB(s).

The DL PRS (corresponding to a DL PRS resource set or a DL PRS resource) may be sent (e.g., transmitted) via/from a serving cell (e.g., a TRP of the serving cell, e.g., the reference TRP or a neighbor TRP) or a non-serving cell (e.g., a TRP of the non-serving cell, e.g., a neighbor TRP). If nr-PhysCellID or nr-CellGlobalID is provided, and if nr-PhysCellID, nr-CellGlobalID and nr-ARFCN associated with the dl-PRS-ID, if provided, are the same as the corresponding information of a serving cell, the wireless device may assume/determine that the DL PRS may be sent (e.g., transmitted) from the serving cell; otherwise, the wireless device may assume/determine that the DL PRS may not be sent (e.g., transmitted) from/via the serving cell (e.g., is sent (e.g., transmitted) via/from the non-serving cell). If the wireless device assumes/-determines that the DL PRS is sent (e.g., transmitted) from the serving cell, and if the serving cell is the same as the serving cell defined by the SS/PBCH block of the corresponding DL PRS resource, the wireless device may assume/determine that the DL PRS and the SS/PBCH block are sent (e.g., transmitted) from/via the same serving cell. If the assumes/determines that the DL PRS may not be sent (e.g., transmitted) from the serving cell, and if nr-PhysCellID is provided, and is the same as physical cell ID of the S S/PBCH block from the non-serving cell of the same band as the DL PRS, the wireless device may assume/determine that the DL PRS and the SS/PBCH block may be sent (e.g., transmitted) from/via the same non-serving cell.

The wireless device may assume that the DL PRS from the serving cell is not mapped to any symbol that contains SS/PBCH block from the serving cell. If the time frequency location of the SS/PBCH block transmissions from non-serving cells are provided to the wireless device (e.g., via the LPP messages or RCC messages) then the wireless device may assume that the DL PRS from the non-serving cell is not mapped to any symbol that contains the SS/PBCH block of the same non-serving cell.

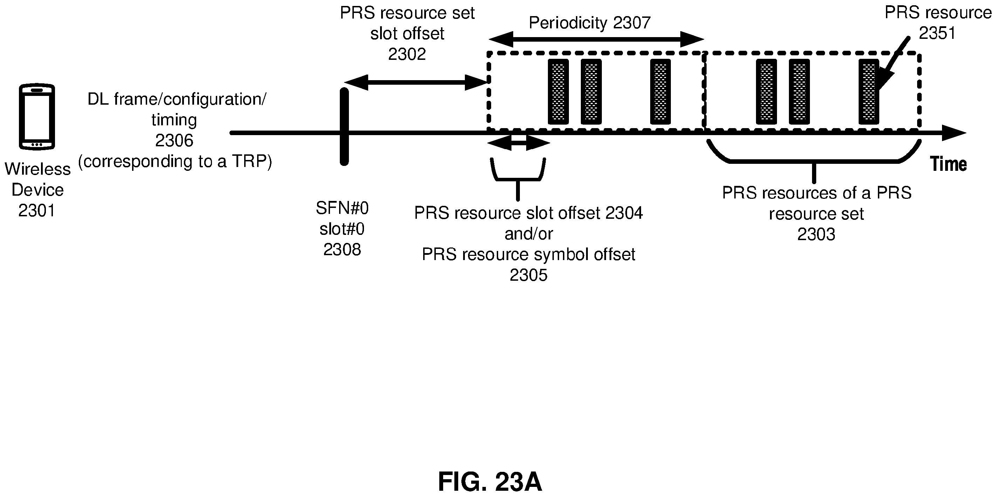

FIG. 23A shows an example of configuration of DL PRS resource set with respect to a DL frame (corresponding to a TRP) of a wireless device. The PRS resources 2351 of a DL PRS resource set 2303 (of the collection of the PRS resource sets), corresponding to a TRP (e.g., the reference TRP or a neighbor TRP), may comprise time/frequency resources for measuring the DL PRSs. As shown in FIG. 22, a DL PRS resource set (of the collection of the PRS resource sets) may comprise at least one of the following: a corresponding nr-DL-PRS-ResourceSetID defining/indicating an identity (or ID) of the DL PRS resource set (configuration); and/or a periodicity 2307 and resource set slot offset 2302 (e.g., dl-PRS-Periodicity-and-ResourceSetSlotOffset); and/or a PRS resource repetition factor (e.g., dl-PRS-ResourceRepetitionFactor) defining/indicating how many times each DL-PRS resource is repeated for a single instance of the DL-PRS resource set (e.g., to improve reliability of measurements); and/or a PRS resource gap (e.g., dl-PRS-ResourceTimeGap) defining/indicating a time/gap (or an offset) in number of slots between two repeated instances of a DL PRS resource with the same nr-DL-PRS-ResourceID within a single instance of the DL PRS resource set; and/or at least one muting option (e.g., dl-PRS-MutingOption1 and/or dl-PRS-MutingOption2) defining/indicating time locations where the DL PRS resource may be expected to not be sent (e.g., transmitted) for a DL PRS resource set; and/or dl-PRS-NumSymbols defining/indicating number of symbols of the DL PRS resource within a slot.

As shown in FIG. 23A, the periodicity 2307 and resource set slot offset 2302 (e.g., dl-PRS-Periodicity-and-ResourceSetSlotOffset) may define/indicate a (DL PRS resource) periodicity (e.g., corresponding to dl-PRS-Subcarrier-Spacing) and a slot offset for DL PRS resource set, e.g., with respect to SFN0 slot 0 2308 of a corresponding TRP (e.g., the reference TRP or a neighbor TRP). DL PRS resources (e.g., configured by dl-PRS-ResourceList) within the DL PRS resource set are configured with the same DL PRS resource periodicity. As shown in FIG. 21A, the (corresponding TRP) may be a PRS-only TP/TRP, e.g., if field prs-OnlyTP of the NR-DL-PRS-AssistanceDataPerTRP (of the TRP) presents. If the field prs-OnlyTP of the NR-DL-PRS-AssistanceDataPerTRP (of the TRP) is present, the wireless device may not assume that any other signals or physical channels are present for the TRP other than DL-PRS. A PRS from a PRS-only TP may be treated/consider as PRS from a non-serving cell.

FIG. 22 shows an example of configuration parameters of a DL PRS resource of a DL PRS resource set of the collection of the PRS resource sets (e.g., NR-DL-PRS-Resource). For example, the of configuration parameters of a DL PRS resource of the DL PRS resource set may comprise at least one of the following: a nr-DL-PRS-ResourceID determining/indicating the DL PRS resource configuration identity; and/or dl-PRS-SequenceID used in pseudo random generator for generation of DL PRS sequence for a given DL PRS resource; and/or dl-PRS-CombSizeN-AndReOffset defining/indicating a starting RE offset of a first symbol within a DL PRS resource in frequency; and/or a PRS resource slot offset (e.g., dl-PRS-ResourceSlotOffset) determining/indicating/defining a starting slot of the DL PRS resource with respect to corresponding DL PRS resource set slot offset (e.g., PRS resource set slot offset 2302 shown in FIG. 23A); and/or a PRS resource symbol offset (e.g., dl-PRS-Resource Symbol Offset) determining/indicating/defining a starting symbol of a slot configured with the DL PRS resource; and/or dl-PRS-QCL-Info defining any quasi co-location information of the DL PRS resource with other reference signals (e.g., SSBs).

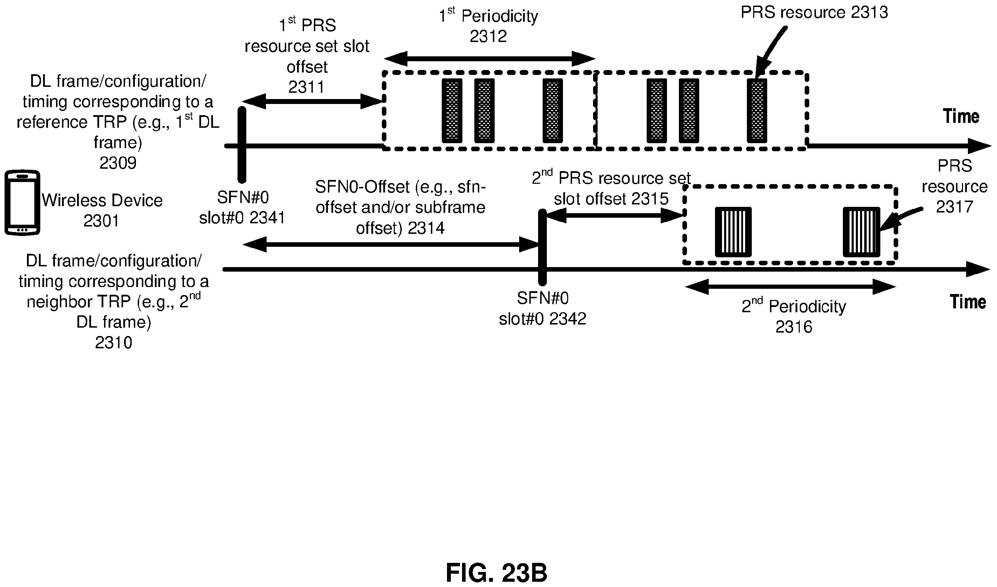

FIG. 23B shows an example of configurations of DL PRS resource sets corresponding to TRPs. For example, a first DL frame of a wireless device 2301 may correspond to a first TRP (e.g., the reference TRP). A second DL frame (or configuration) of the wireless device 2301 with respect to a second DL frame corresponding to a second TRP (e.g., a neighbor TRP). As shown in FIG. 21A, the one or more PRS configuration parameters (e.g., the DL PRS assistance data) may configure/indicate an SFNO-Offset 2314 (e.g., NR-DL-PRS-SFN0-Offset) per a TRP (e.g., the first TRP or the second TRP). As shown in FIG. 21A, the SFNO-Offset may comprise a sfn-offset and/or a subframe offset (e.g., integerSubframeOffset). The sfn-offset of the SFNO-Offset 2314 may indicate/specify an SFN offset at the TRP antenna location between the reference TRP and the neighbor TRP. The sfn-offset of the SFNO-Offset 2314 may correspond to a number of full radio frames counted from the beginning/starting/initial/earliest of a radio frame #0 of/associated with the reference TRP to a beginning starting/initial/earliest of a closest subsequent radio frame #0 of the neighbor TRP. The integerSubframeOffset of the SFNO-Offset may specify/indicate a frame boundary offset at the TRP antenna location between the reference TRP and the neighbor TRP counted in full subframes. The integerSubframeOffset of the SFNO-Offset 2314 may correspond to a number of full subframes counted from the beginning/starting/initial/earliest of a subframe #0 of the reference TRP to the beginning/starting/initial/earliest of a closest subsequent subframe #0 of the neighbour TRP. The location server may set/configure/determine the value of the SFNO-Offset 2314 (e.g., sfn-offset and/or ntegerSubframeOffset) in accordance with a search window for the wireless device (e.g., using nr-DL-PRS-ExpectedRSTD and nr-DL-PRS-ExpectedRSTD-Uncertainty of the DL PRS assistance data).

For example, for the reference TRP, the corresponding SFNO-Offset 2314 (or the sfn-offset and/or the subframe offset) may be 0. For each neighbor TRP (e.g., the second TRP), the corresponding SFNO-Offset 2314 may indicate a relative SFN offset with respect to the SFN#0 slot#0 2341 (or SFN0 slot 0 or SFN 0) of the reference TRP, e.g., a time offset (e.g., in number of subframes and/or slots) of the SFN0 slot 0 2342 for a DL PRS resource set (corresponding to the second TRP) with respect to SFN0 slot 0 2341 of a reference provided by nr-DL-PRS-ReferenceInfo (e.g., corresponding to the reference TRP). As shown in FIG. 23B, the wireless device 2301 may determine SFN#0 slot#0 2342 of the neighbor TRP based on the indicated SFN0-offset 2314 (corresponding to the neighbor TRP).

As shown in FIG. 21A, the one or more PRS configuration parameters (e.g., the DL PRS assistance data) may configure/indicate per each TRP (e.g., the reference TRP and/or the neighbor TRP) a PRS expected RSTD (e.g., nr-DL-PRS-ExpectedRSTD) and/or a PRS expected-RSTD uncertainty (e.g., nr-DL-PRS-ExpectedRSTD-Uncertainty). For example, corresponding to the reference TRP, the location server (e.g., the network) may signal/configure a value of zero for the nr-DL-PRS-ExpectedRSTD, and/or nr-DL-PRS-ExpectedRSTD-uncertainty in nr-DL-PRS-AssistanceDataList. For the neighbor TRP, the corresponding PRS expected RSTD (e.g., nr-DL-PRS-ExpectedRSTD) may indicate/define a time difference with respect to a received DL subframe timing the wireless device is expected to receive DL PRS (e.g., from the neighbor TRP). For example, the PRS expected RSTD of the neighbor TRP may indicate a reference signal time difference (RSTD) value that the wireless device is expected to measure between the neighbor TRP and the assistance TRP. The nr-DL-PRS-ExpectedRSTD field may take into account an expected propagation time difference as well as transmit time difference of PRS positioning occasions between the neighbor TRP and the reference TRP. For example, the nr-DL-PRS-ExpectedRSTD field of the NR-DL-PRS-AssistanceDataPerTRP may indicate a value in range of (-3841...3841) (e.g., (-0.5 ms, 0.5 ms) considering the resolution R). The resolution of the nr-DL-PRS-ExpectedRSTD may be R=4xTs, with Ts=1/(15000*2048) seconds.

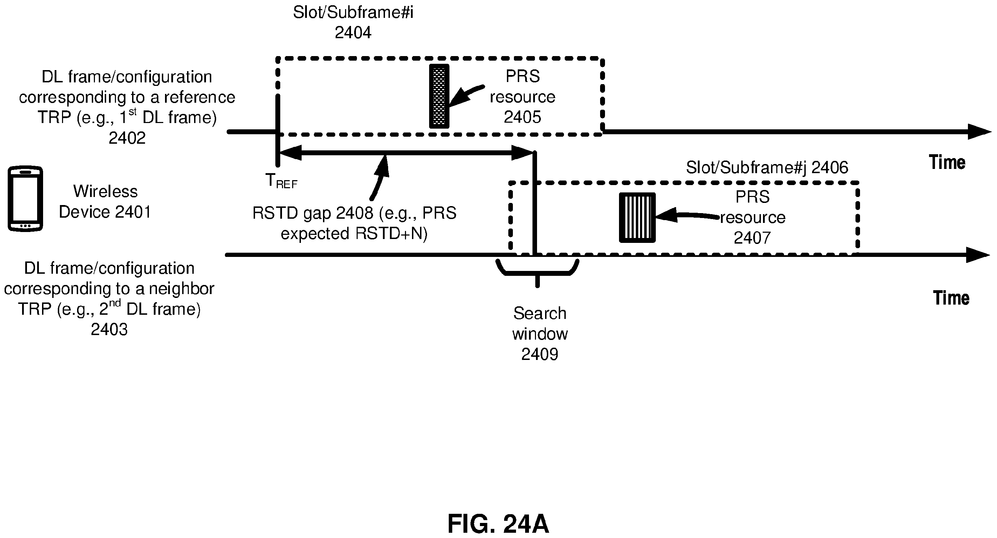

FIG. 24A shows an example of a search window for receiving PRS from a neighbor TRP. As shown in FIG. 24A, a wireless device 2401 may (based on the one or more PRS configuration parameters) determine an RSTD gap 2408 and/or the search window 2409. The PRS expected-RSTD uncertainty of the neighbor TRP (e.g., nr-DL-PRS-ExpectedRSTD-Uncertainty) may define/indicate a search window 2409around the nr-DL-PRS-ExpectedRSTD, e.g., the nr-DL-PRS-ExpectedRSTD and nr-DL-PRS-ExpectedRSTD-Uncertainty together define the search window 2409 for the wireless device 2401. For example, The PRS expected-RSTD uncertainty of the neighbor TRP may indicate an uncertainty in the nr-DL-PRS-ExpectedRSTD value of the neighbor TRP. For example, the indicated uncertainty is related to the location server's a priori estimate of the wireless device location. For example, the nr-DL-PRS-ExpectedRSTD-Uncertainty field of the NR-DL-PRS-AssistanceDataPerTRP may indicate a value in range of 0 to 246 (e.g., [0 ms, 0.032 ms] considering the resolution R). The resolution of the nr-DL-PRS-ExpectedRSTD- Uncertainty may be R=4×Ts seconds.

For example, as shown in FIG. 24A, the wireless device 2401 may assume/determine that a beginning/starting of a (DL) subframe for the PRS (corresponding to/of the neighbor TRP), e.g., subframe#j in FIG. 24A, is received within the search window 2409 of size [-nr-DL-PRS-ExpectedRSTD-Uncertainty×R; nr-DL-PRS-ExpectedRSTD-UncertaintyR] centred at T_REF+1 millisecond×N+nr-DL-PRS-ExpectedRSTD×4×Ts. $T_{REF}$ is a reception time of a beginning/starting of a subframe for the PRS of the reference TRP (e.g., subframe#i in FIG. 24A) at the wireless device antenna connector. Parameter N may be calculated (e.g., by the wireless device 2401) based on the nr-DL-PRS-SFN0-Offset (of the neighbor TRP) and/or dl-PRS-Periodicity-and-ResourceSetSlotOffset and/or dl-PRS-ResourceSlotOffset. For example, the RSTD gap 2408 may be based on the PRS expected RSTD of the neighbor TRP and parameter N (e.g., the RSTD gap = 1 millisecond×N+nr-DL-PRS-ExpectedRSTD×4×Ts after/from the $T_{REF}$).

For example, the positioning procedure may be based on/via gap-based measurements, e.g., measuring DL PRS resources during/within (positioning) measurement gap(s). The wireless device 2401 may measure a DL PRS resource outside an active DL BWP or with a numerology different from a numerology of the active DL BWP (e.g., if the measurement is made/performed during a configured measurement gap). For example, the one or more configuration parameters may configure the wireless device 2401 with one or more measurement gaps. The one or more measurement gaps may comprise one or more preconfigured measurement gaps (e.g., for positioning) each associated with a measPosPreConfigGapId. For example, the wireless device 2401 may (e.g., if the wireless device 2401 may be expected to measure the DL PRS resource) request from the location server a (preconfigured) measurement gap (e.g., via an LLP message of the LPP messages, e.g., via NR-PRS-MeasurementInfoList message, or by transmitting a MAC CE (e.g., Positioning Measurement Gap Activation/deactivation request MAC CE). The MAC CE may indicate a measPosPre-ConfigGapId of a preconfigured measurement gap of the one or more preconfigured measurement gaps.

The wireless device 2401 may receive a command for a preconfigured Measurement Gap for Positioning activation/deactivation (e.g., Positioning Measurement Gap Activation/Deactivation Command MAC CE), e.g., via the serving cell. The command may indicate a first preconfigured measurement gap. The wireless device 2401 may transmit a PUCCH with HARQ-ACK information in slot n corresponding to the PDSCH carrying the command (Positioning Measurement Gap Activation/Deactivation Command MAC CE). For example, the wireless device 2401 may activate/-deactivate the first preconfigured measurement gap (and apply corresponding assumptions) starting from a first/initial/-starting slot that is after slot n + $3N_{slot}^{subframe,\mu}$ where $\mu$ is an SCS configuration for the PUCCH.

For example, the positioning procedure may be based on/via gap-less measurements positioning, e.g., measuring DL PRS resources during/within one or more DL PRS processing windows (PPWs). The wireless device 2401 may (to perform the positioning procedure) measure the DL PRS outside a measurement gap if a DL PRS is inside the active DL BWP and has the same numerology as the active DL BWP and is within/during the PPW. For example, the one or more configuration parameters (e.g., DL-PPW-PreConfig) configure/indicate the one or more PPWs.

The wireless device 2401 may receive a command for PPW (of the one or more PPWs) activation/deactivation (e.g., PPW Activation/Deactivation Command MAC CE), e.g., via the serving cell. The activation command may indicate the PPW. The wireless device 2401 may transmit a PUCCH with HARQ-ACK information in slot n corresponding to the PDSCH carrying the command (PPW Activation/Deactivation Command MAC CE). For example, the wireless device 2401 may activate/deactivate the PPW (and apply corresponding assumptions) starting from a first/initial/starting slot that is after slot $n + 3N_{slot}^{subframe,\mu}$ where $\mu$ is an SCS configuration for the PUCCH. The wireless device 2401 may not expect to be indicated with more than 4 activated PPWs of the one or more PPWs across all active DL BWPs and may not expect to be indicated with the activated PPWs that overlap in time.

Inside/within the PPW, the wireless device 2401 may measure a single DL PRS positioning frequency layer. The wireless device 2401 may not expect to measure the DL PRS outside the measurement gap if an expected received timing difference between the DL PRS from the non-serving cell (e.g., the neighbor TRP) and that from the serving cell (e.g., the reference TRP), determined by the nr-DL-PRS-ExpectedRSTD and/or nr-DL-PRS-ExpectedRSTD-Uncertainty corresponding to the neighbor TRP, is larger than a threshold (e.g., a maximum Rx timing difference that is provided by wireless device capability, e.g., IE prs-MeasurementWithoutMG). The threshold (e.g., THR) may indicate a wireless device capability for support of Rx timing difference between the serving cell (e.g., the reference TRP) and non-serving cell (e.g., the neighbor TRP) for PRS measurement within the PPW. The wireless device may, for receiving/measuring the DL PRS outside the measurement gap and within the PPW, determine max $|\Delta T| \leq$ THR, where $\Delta T$ may be a time difference between a start/beginning of a slot/subframe containing PRS from the neighbor cell/TRP (e.g., slot/subframe #j in FIG. 24A) and a start/beginning of a closest slot/subframe from the serving cell/reference TRP (e.g., slot/subframe #i in FIG. 24A). the wireless device may determine a range of $\Delta T$ by the expected RSTD (e.g., nr-DL-PRS-ExpectedRSTD) and expected RSTD uncertainty (e.g., nr-DL-PRS-ExpectedRSTD-Uncertainty) in the assistance data. For receiving/measuring the DL PRS outside the measurement gap and within the PPW, the wireless device may consider a priority between DL PRS and SSB. For example, the one or more configuration parameters may indicate a priority of the DL PRS.

A PPW of the one or more PPWs may be with a tyep1A or type1B or type2. For performing the positioning procedure and if the wireless device is expected to measure the DL PRS outside the measurement gap in a PPW with type1A and if the DL PRS is determined to be higher priority than a DL signal/channel (e.g., CSI-RS/PDCCH/PDSCH) inside the PPW, the wireless device may not receive/measure the DL signal/channel. For performing the positioning procedure and if the wireless device is expected to measure the DL PRS outside the measurement gap in a PPW with type1B and if the DL PRS is determined to be higher priority than the DL signal/channel inside the PPW, the wireless device may not receive/measure the DL signal/channel. For performing the positioning procedure and if the wireless device is expected to measure the DL PRS outside the measurement gap in a PPW with type2 if the DL PRS is determined to be higher priority than the DL signal/channel inside the PPW, the wireless device may not receive/measure the DL signal/channel overlapping with the DL PRS.

For example, the one or more positioning configuration parameters (e.g., the LPP messages) may configure the wireless device to measure and report to the location server (e.g., during the positioning procedure) a number of (e.g., up to 4) DL RSTD measurements per pair of dl-PRS-ID with each measurement between a different pair of DL PRS resources or DL PRS resource sets within the DL PRS configured for those dl-PRS-ID. The one or more positioning configuration parameters (e.g., the LPP messages) may configure the wireless device, for performing the positioning procedure, to measure and report (to the location server) a number of (e.g., up to 24) DL PRS-RSRP (and/or DL PRS-RSRPP) measurements on DL PRS resources associated with a same dl-PRS-ID. The one or more positioning configuration parameters (e.g., the LPP messages) may configure the wireless device (e.g., for performing the positioning procedure) to measure and report (to the location server) a number of (e.g., up to 4) wireless device Rx-Tx time difference measurements corresponding to a single configured SRS resource for positioning (via one or more SRS configuration parameters of the one or more configuration parameters) or DL PRS resource set. Each measurement may correspond to a single received DL PRS resource or resource set (e.g., from the reference TRP and/or the neighbor TRP) which may be in different DL PRS positioning frequency layers. For example, associated with each RSTD and/or wireless device Rx - Tx time difference, the wireless device may (e.g., for performing the positioning procedure) measure and report (to the location server) timing and quality metrics of a number of (up to 8) additional detected. For example, the one or more positioning configuration parameters (e.g., the LPP messages) may configure the wireless device, for performing the positioning procedure, to report (e.g., via the LPP messages) to the location server quality metrics NR-TimingQuality corresponding to the DL RSTD and wireless device Rx-Tx time difference measurements.

For example, to perform the positioning procedure, the wireless device may measure multiple DL RSTD measurements and/or PRS-RSRP(P) measurements and/or wireless device Rx-Tx time difference measurements during at least one measurement period. The at least one measurement period may, for example, be/comprise an RSTD measurement period ($T_{RSTD,Total}$). The at least one measurement period may, for example, be/comprise an PRS-RSRP measurement period ($T_{PRS-RSRP,total}$) and/or a wireless device Rx-Tx (time different) measurement period ($T_{UERxTx,Total}$). A length of the at least one measurement period (in ms) may depend on a (total) number of configured positioning frequency layers and/or a periodicity of the (PRS RSTD and/or PRS-RSRP(P) and/or wireless device Rx-Tx time difference) measurement in a positioning frequency layer.

The wireless device may start a measurement period of the at least one measurement period after/from receiving an indication from higher layers (e.g., LPP layer) of the wireless device and/or a positioning event occur. The indication may be based on (e.g., in response to) receiving (by the higher layers of the wireless device) an LPP message (e.g., NR-TDOA-ProvideAssistanceData message and/or NR-TDOA-RequestLocationInformation message and/or NR-DL-AoD-ProvideAssistanceData message and/or NR-DL-AoD-RequestLocationInformation message and/or NR-Multi-RTT-ProvideAssistanceData message and/or NR-Multi-RTT-RequestLocationInformation message) of the one or more positioning messages from the LMF. The indication may be the delivery of the LPP message from the higher layers to the physical layer of the wireless device. For example, the wireless device may start the measurement period from/after a first/-earliest/starting (configured/activated) measurement gap/PPW instance aligned with a DL PRS resource(s) in the assistance data. The positioning event may correspond to a deferred Mobile Terminated Location Request (MT-LR) and/or Mobile Originated Location Request (MO-LR) and/or Network Induced Location Request (NI-LR) or the like.

The wireless device may determine whether to continue measurements (e.g., not stop/restart the measurement period and/or complete the on-going RSTD measurements) or restart the measurement period, for example, in response to/upon/based on an event of at least one event is occurred during performing the ongoing positioning procedure and/or while performing/measuring one or more measurements (e.g., RSTD/RSRP/wireless device Rx-Tx time difference, and/or the like) measurements during a measurement period of the at least one measurement period (e.g., the RSTD measurement period). The determination may be based on the event and/or the measurement period (e.g., whether the measurement period is the RSTD measurement period or the PRS-RSRP measurement period or the wireless device Rx-Tx time difference measurement period).

An event of the at least one event may correspond to/be (execution/occurrence/performing/triggering) handover, e.g., to handover from a first cell/source cell to a second cell/target cell. For example, the handover may comprise layer 3 (e.g., RRC) procedures, e.g., RRC reconfiguration procedure. For example, the event may occur if the wireless device receives an RRC reconfiguration message (e.g., comprising reconfiguration with sync) via the source cell. For example, the event may occur if the wireless device triggers a (conditional) handover. The first cell may be different than the second cell (e.g., the PCI of the first cell is different than the PCI of the second cell). For example, if handover occurs while performing/measuring RSTD measurements (for performing the ongoing positioning procedure) during a first measurement period (e.g., the RSTD measurement period) of the at least one measurement period, the wireless device may continue (e.g., not stop/restart the first measurement period) and complete the on-going RSTD measurements. For example, if handover occurs while performing/measuring PRS-RSRP(P) measurements (for performing the ongoing positioning procedure) during a second measurement period (e.g., the PRS-RSRP measurement period) of the at least one measurement period, the wireless device may continue (e.g., not stop/restart the measurement period) and complete the on-going PRS-RSRP measurements. In yet another example, the wireless device may, for performing the ongoing positioning procedure, restart a third measurement period (e.g., the wireless device Rx-Tx time difference measurement period) of the at least one measurement period if handover occurs during the measurement period and after SRS reconfiguration on the target cell is complete.

An event of the at least one event may correspond to/be a cell (e.g., PSCell or SCell) addition/release or a cell change, e.g., a serving cell change. Id PSCell or SCell addition or release does not cause SRS reconfiguration during the third measurement period, the wireless device may continue the wireless device Rx-Tx time difference measurement, e.g., not stopping/restarting the third measurement period of the at least one measurement period. Id the cell addition or release causes SRS reconfiguration during the third measurement period, the wireless device may restart the wireless device Rx-Tx time difference measurement (e.g., restart the third measurement period) after the SRS reconfiguration on the cell is complete. If the serving cell change occurs during the third measurement period, the wireless device may continue (e.g., not stop/restart the third measurement period) and complete the wireless device Rx-Tx time difference measurement based on the serving cell change not impacting (e.g., not changing) SRS configuration for the wireless device Rx-Tx time difference measurement.

An event of the at least one event may correspond to change of the SRS configuration. For example, if SRS is reconfigured without serving cell change during the third measurement period of the at least one measurement period, the wireless device may restart the wireless device Rx-Tx time difference measurement (e.g., restart the third measurement period) after the SRS reconfiguration is complete.

An event of the at least one event may correspond to a change in an uplink transmission timing of the wireless device. For example, if an uplink transmission timing changes due to receiving a Timing Advance command (e.g., TAG MAC CE) during the third measurement period (e.g., the wireless device Rx-Tx time difference measurement period), the wireless device may restart the third measurement period after uplink transmission timing changes (e.g., after applying the TAC MAC CE). If the uplink transmission timing changes due to a change in a $N_{TA\text{-}offset}$ (e.g., receiving a new $N_{TA\text{-}offset}$) during the third measurement period, the wireless device may restart the third measurement period after uplink transmission timing changes (e.g., after applying the new $N_{TA\text{-}offset}$). For example, if the uplink transmission timing changes due to (or as a result of or because of) a first autonomous timing adjustment by the wireless device during the third measurement period, the wireless device may restart the third measurement period based on whether a cell (e.g., the serving cell) is a downlink reference cell for SRS transmission or not. The cell may be reference cell.

The wireless device may follow a frame timing change of the reference cell, e.g., in the RRC connected state/mode. The uplink frame (for uplink transmissions) may be $(N_{TA} + N_{TA\text{-}offset} +) \times T_c$ before a reception of a first/earliest detected path (in time) of the corresponding downlink frame from the reference cell. For serving cell(s) in pTAG, the wireless device may use the SpCell as the reference cell for deriving the uplink transmit timing for cells in the pTAG. For serving cell(s) in sTAG, the wireless device may use any of the activated SCells as the reference cell for deriving the wireless device transmit timing for the cells in the sTAG.

The first autonomous timing adjustment may comprise a first gradual timing adjustment procedure based on (or to achieve/satisfy/fulfill) TA accuracy requirement(s). The TA accuracy requirements may correspond to/comprise a first transmission timing error. The first transmission timing error may be an initial (or first) transmission timing error $\pm T\_e$. If the transmission timing error (e.g., between the wireless device and a first reference timing exceeds first transmission timing error), the wireless device may (autonomously) adjust a transmission timing to within the first transmission timing error $\pm T\_e$, e.g., first autonomous timing adjustment. The first reference timing may be $(N_{TA} + N_{TA\text{-}offset}) \times T_c$ before/prior to the downlink timing of the reference cell. For example, the first autonomous timing adjustment may comprise (autonomously) adjusting the transmission timing such that a maximum amount of the magnitude of the timing change in one adjustment being T_q (e.g., a first maximum autonomous time adjustment step); and/or a minimum aggregate adjustment rate being T_p (e.g., a first aggregate adjustment rate) per second; and/or the maximum aggregate adjustment rate being T_q per 200 ms.

For example, a timing advance command (e.g., the TAG MAC CE) of the at least one TA command may be a TA command of a random access response. The TA command may be an absolute timing advance command MAC CE. The TA command may indicate a value $T_A$ for a TAG $T_A = 0, 1, 2, ..., 3846$. The wireless device may determine an amount of the time alignment for the TAG with SCS of $2^\mu \cdot 15$ kHz based on $N_{TA} = T_A \cdot 16 \cdot 64/2^\mu$. $N_{TA}$ may be relative to the SCS of the first uplink transmission from the wireless device after the reception of the random access response or the absolute timing advance command MAC CE. For example, a timing advance command (e.g., the TAG MAC CE), $T_A$, for a TAG indicates adjustment of a current $N_{TA}$ value, $N_{TA\_old}$, to the new $N_{TA}$ value, $N_{TA\_new}$, by index values of $T_A = 0, 1, 2,..., 63$, where for a SCS of $2^\mu \cdot 15$ kHz, $N_{TA\_new} = N_{TA\_old} + (T_A - 31) \cdot 16 \cdot 64/2^\mu$. Based on (e.g., in response to) receiving the TAC MAC CE on/during uplink slot n, the wireless device may apply/adjust an uplink transmission timing (e.g., for transmission of UL signals) from a beginning/start of uplink slot n + k + 1 where

$$k = \left\lceil N_{slot}^{subframe,\mu} \cdot \right.$$

$$\left. (N_{T,1} + N_{T,2} + N_{TA,max} + 0.5)/T_{sf} \right\rceil ,$$

, $N_{T,1}$ is a time duration in msec of $N_1$ symbols corresponding to a PDSCH processing time for wireless device processing capability 1 if additional PDSCH DM-RS is configured, $N_{T,2}$ is a time duration in msec of $N_2$ symbols corresponding to a PUSCH preparation time for wireless device processing capability 1, $N_{TA,max}$ is a maximum timing advance value in msec that can be provided by a TA command field of 12 bits, $N_{slot}^{subframe,\mu}$ is the number of slots per subframe, $T_{sf}$ is the subframe duration of 1 msec. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the wireless device assumes $N_{1,0} = 14$. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by initialUplinkBWP. The uplink slot n may be a last/final/ending/latest slot among uplink slot(s) overlapping with the slot(s) of PDSCH reception assuming $T_{TA} = 0$, where the PDSCH provides the timing advance command.

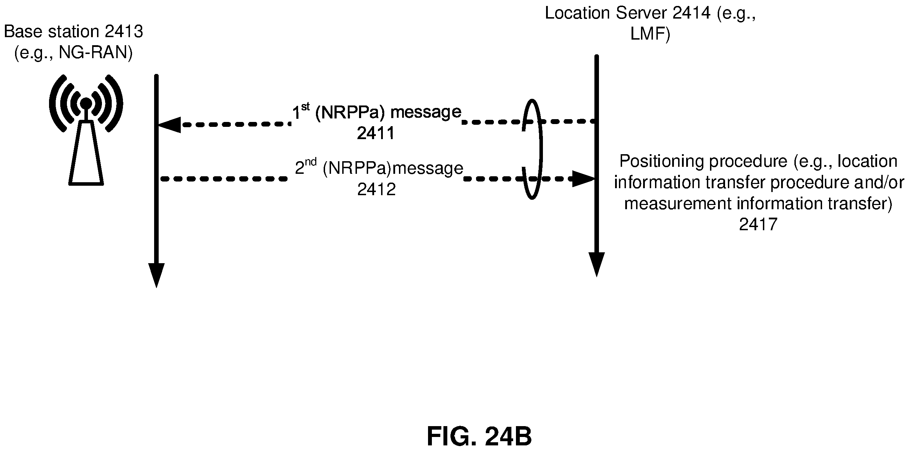

FIG. 24B shows an example of signaling access between the LMF and the base station based on the NRPPa protocol. For performing the positioning procedure, using NRPPa message(s) (e.g., comprising NRPPa PDUs) of the one or more positioning messages (e.g., first message and/or second message in FIG. 24B), a location server 2414 may request a base station 2413 for SRS configuration for a wireless device and the base station 2413 may accordingly respond with the SRS configuration to the location server 2414. Using NRPPa message(s) of the one or more positioning messages, the base station may provide/transmit an updated SRS configuration to the location server 2414 if the SRS configuration changes. For example, if semi-persistent or aperiodic SRS is configured to the wireless device, the LMF may activate/deactivate the SRS (via the NRPPa messages). If the SRS is sent (e.g., transmitted) (e.g., the uplink signals) by the wireless device, the location server 2414 may request multiple TRPs to perform uplink measurements and report/transmit results (e.g., measurements) via the NRPPa messages.

The NRPPa messages (of the one or more positioning messages) may correspond to signaling access between the LMF (e.g., the location server) and the base station for non-wireless device associated NRPPa procedure (e.g., for transfer of information applicable to the NG-RAN node and associated TRP, including the procedures supporting the OTDOA Information Transfer, Assistance Information Transfer, TRP Information Transfer, and Measurement Information Transfer functions) or wireless deivice-associated NRPPa procedure (e.g., for transfer of information for a particular wireless device (e.g., the wireless device), including the procedures supporting Positioning Information Transfer and E-CID Location Information Transfer functions).

For example, a base station 2413 (e.g., NG-RAN) may exchange/communicate NRPPa messages (or NRPPa PDUs) with the core network (e.g., AMF/LMF) using/based on NGAP DL wireless device associated NRPPa transport (e.g., corresponding to wireless device associated NRPPa procedure) and/or NGAP DL Non wireless device associated NRPPa transport (e.g., corresponding to non-wireless device associated NRPPa procedure) and/or NGAP UL wireless device associated NRPPa transport (e.g., corresponding to wireless device associated NRPPa procedure) and/or NGAP UL Non wireless device associated NRPPa transport (e.g., corresponding to non- wireless device associated NRPPa procedure). The location server 2414 may obtain TRP information (e.g., geographical locations of the reference TRP and/or the neighbor TRPs) required for multi-RTT positioning.

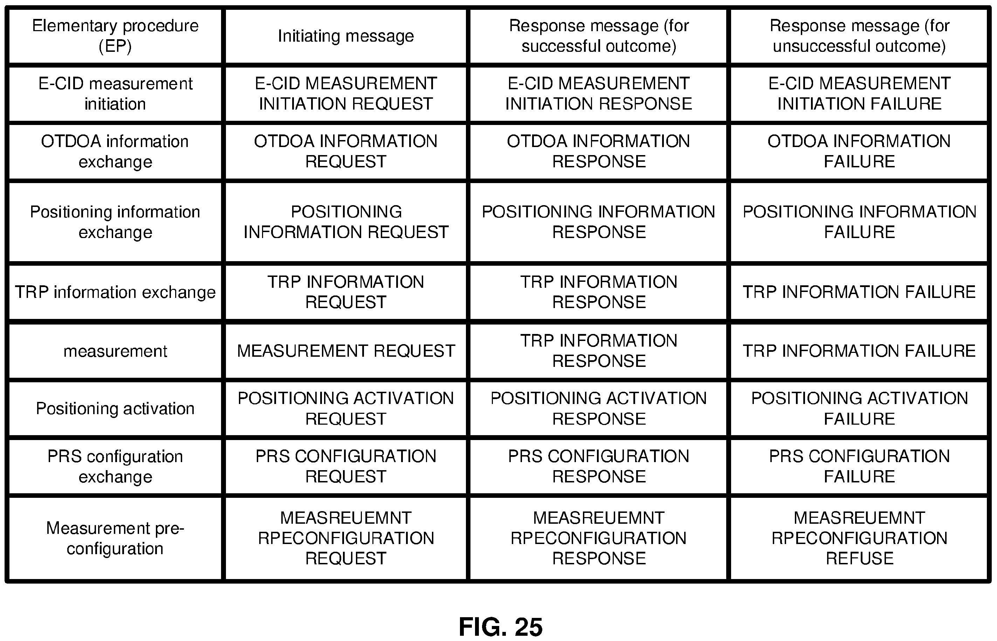

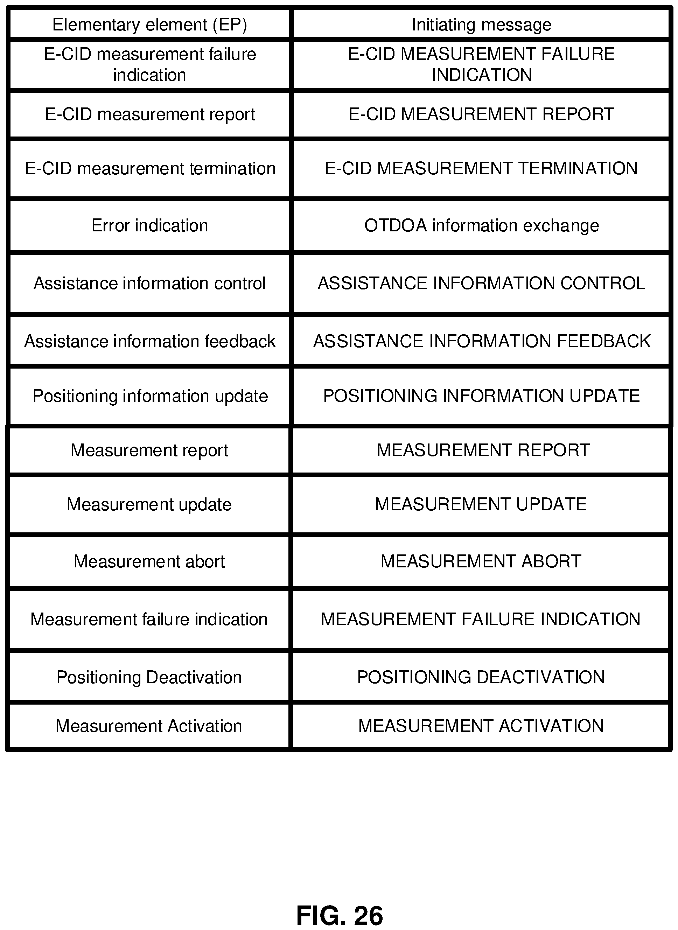

FIG. 25 and FIG. 26 show examples of NRPPa messages and corresponding NRPPa elementary procedures. The first message and/or the second message in FIG. 24B may be one or the NRPPa messages shown in FIG. 25 and/or FIG. 26. For example, an example of an initial (or starting) message in FIG. 25 and/or FIG. 26 may be the first message in FIG. 24B. For example, the response message FIG. 25 and/or FIG. 26 may be the first message or the second message.

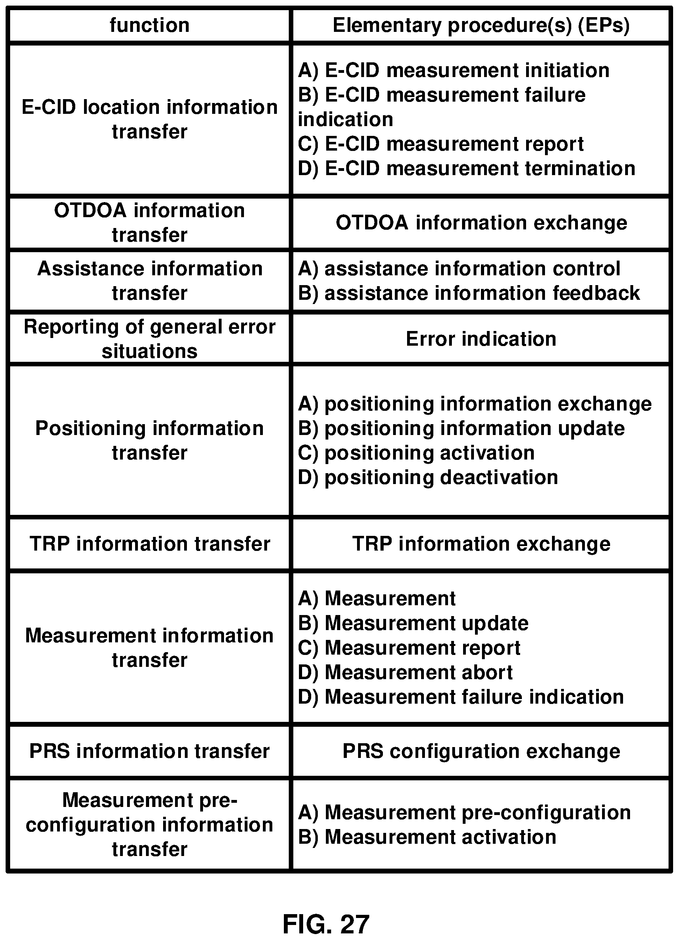

FIG. 27 shows an example of NRPPa functions. FIG. 27 further shows the mapping between the NRPPa functions and NRPPa elementary procedures. As shown in FIG. 27, the NRPPa protocol (e.g., via the NRPPa messages) may provide at least one of the following functions: E-CID Location Information Transfer (e.g., for the NG-RAN node to exchange location information with LMF for the purpose of E-CID positioning and NR E-CID positioning); and/or OTDOA Information Transfer (e.g., for the NG-RAN node to exchange information with the LMF for the purpose of OTDOA positioning) and/or Reporting of General Error Situations (e.g., for reporting of general error situations, for which function specific error messages have not been defined) and/or Assistance Information Transfer (e.g., for the LMF to exchange information with the NG-RAN node for the purpose of assistance information broadcasting); and/or Positioning Information Transfer (e.g., for the NG-RAN node to exchange positioning information with the LMF for the purpose of positioning) and/or Measurement Information Transfer (e.g., for the LMF to exchange measurement information with the NG-RAN node for the purpose of positioning); and/or TRP Information Transfer (e.g., for the LMF to obtain TRP related information from the NG-RAN node); and/or PRS Information Transfer (e.g., for the LMF to exchange PRS related information with the NG-RAN node); and/or Measurement Preconfiguration Information Transfer (e.g., for the LMF to request the NG-RAN node to preconfigure and activate measurement gap and/or PRS processing window).

For base station (e.g., gNB or ng-eNB) related positioning, an NG-C interface transparently transports both positioning requests from the LMF to the base station and positioning results from the base station to the LMF. For delivery of broadcast assistance data information, the NG-C interface may transparently transport both the assistance data information (e.g., DL PRS assistance data) from the LMF to the NG-RAN node (e.g., base station) for broadcasting and the feedback information on assistance information broadcasting from the NG-RAN node to the LMF.

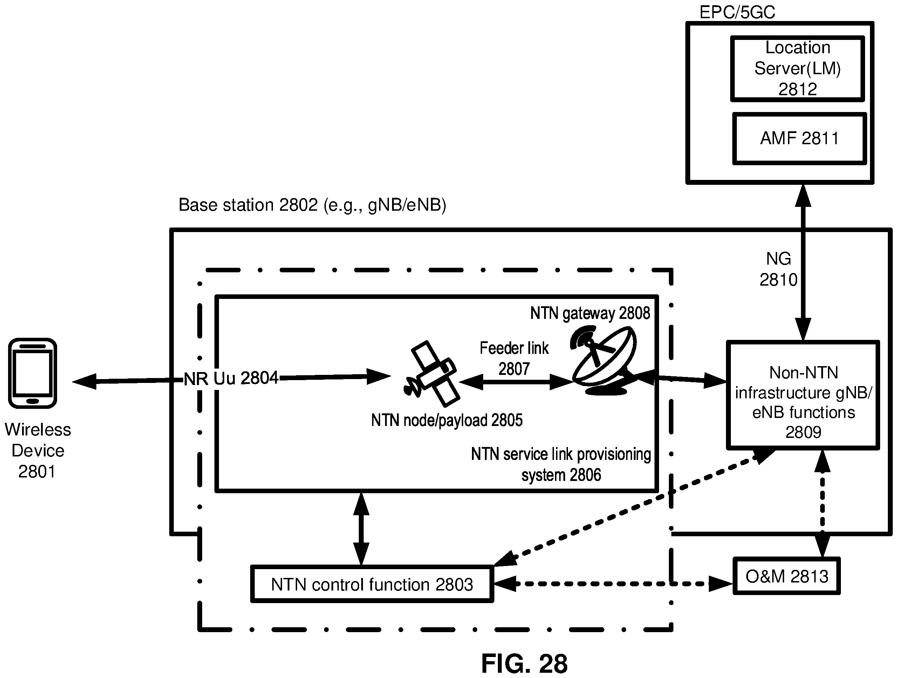

FIG. 28 shows an example of implementation of a non-terrestrial network (NTN). The non-terrestrial network (NTN) network (e.g., a satellite network) may be a network or network segment (e.g., an NG-RAN consisting of gNBs) for providing non-terrestrial NR access to wireless devices. The NTN may use a space-borne vehicle to deploy or transport a transmission equipment relay node (e.g., radio remote unit or a transparent payload) or a base station (or a regenerative payload). While a terrestrial network is a network located on the surface of the earth, an NTN may be a network which uses an NTN node 2805 (e.g., a satellite) as an access network, a backhaul interface network, or both. For example, an NTN may comprise one or more NTN nodes 2805 (or payloads and/or space-borne vehicles), each of which may provide connectivity functions, between the service link and the feeder link 2807.

An NTN node 2805 may embark a bent pipe payload (e.g., a transparent payload) or a regenerative payload. The NTN node 2805 with the transparent payload may comprise transmitter/receiver circuitries without the capability of on-board digital signal processing (e.g., modulation and/or coding) and connect to a base station (e.g., a base station of an NTN or the NTN base station or a non-terrestrial access point) via a feeder link Feeder link. For example, the NTN node 2805 may be a satellite, a balloon, an air ship, an airplane, an unmanned aircraft system (UAS), an unmanned aerial vehicle (UAV), a drone, or the like. For example, the UAS may be a blimp, a high-altitude platform station (HAPS), e.g., an airborne vehicle embarking the NTN payload placed at an altitude between 8 and 50 km, or a pseudo satellite station. For example, a satellite may be placed into a low-earth orbit (LEO) at an altitude between 250 km to 1500 km, with orbital periods ranging from 90 - 130 minutes. From the perspective of a given point on the surface of the earth, the position of the LEO satellite may change. For example, a satellite may be placed into a medium-earth orbit (MEO) at an altitude between 5000 to 20000 km, with orbital periods ranging from 2 hours to 14 hours. For example, a satellite may be placed into a geostationary satellite earth orbit (GEO) at 35,786 km altitude, and directly herein the equator. From the perspective of a given point on the surface of the earth, the position of the GEO satellite may not change.

As shown in FIG. 28, the base station (e.g., a gNB/eNB) may further comprise the transparent NTN node 2805, the feeder link Feeder link, and/or a gateway (e.g., an NTN gateway). The base station (e.g., gNB depicted in FIG. 28) may comprise non-NTN infrastructure gNB functions and NTN Service Link provisioning System. As shown in FIG. 28, NTN infrastructure may comprise the NTN Service Link provisioning System and NTN Control function 2803. The NTN Service Link provisioning System may consist of one or more NTN payloads (or nodes) and gateways (or NTN Gateways). The NTN Service Link provisioning System maps the NR-Uu radio protocol over radio resources of the NTN infrastructure (e.g., beams, channels, Tx power). The NTN control function 2803 may control the spaceborne (or airborne) vehicles as well as the radio resources of the NTN infrastructure (NTN payload(s) & NTN Gateway(s)). The NTN control function 2803 may provide control data, e.g. (satellite) Ephemeris, to the non-NTN infrastructure gNB functions of the gNB. For example, the NTN control function 2803 may provide some information to operation and management (O&M) 2813. The O&M 2813 may provide at least the following NTN related parameters the base station (e.g., gNB): NTN related parameters of Earth fixed beams; and/or NTN related parameters of Quasi Earth fixed beams; and/or NTN related parameters of Earth moving beams. The NTN related parameters may correspond to a beam provided by the NTN node/payload 2805. For example, the NTN related parameters may comprise at least one of the following: a cell identifier (NG and Uu) mapped to a beam (e.g., PCI); and/or a reference location of the cell (e.g. cell's center and range); and/or time window(s) mapped to the beam (e.g., for coverage and/or feeder link switching/switchover and/or service link switching/switchover); and/or an identifier and time window of all serving satellites and NTN-Gateways; and/or a (Uu/physical) Cell identifier (e.g., the PCI) mapped to a beam and mapping information to fixed geographical areas reported on NG, including information about the beams direction and motion of the beam's foot print on Earth.

The gateway may be an earth station that is located at the surface of the earth, providing connectivity to the NTN payload using a feeder link. For example, the NTN node with the regenerative payload (e.g., the base station of the NTN or the NTN base station) may comprise functionalities of a base station, e.g., the on-board processing used to demodulate and decode the received signal and/or regenerate the signal before sending/transmitting it back to the earth. For example, as shown in FIG. 28, the base station 2802 (e.g., the gNB/eNB) may further comprise the regenerative NTN node 2805, the feeder link 2807, and/or the gateway (e.g., the NTN gateway 2808).

The NTN node 2805 (e.g., the satellite) may forward a received signal from the NTN gateway 2808 on the ground back to the earth over the feeder link. For example, the gateway (e.g., the NTN gateway 2808) and the base station 2802 may not be collocated. The NTN node 2805 may forward a received signal to the wireless device or the base station from another NTN node 2805, e.g., over inter-link satellite communication links. The NTN node 2805 may generate one or more beams over a given area (e.g., a coverage area or a cell). The footprint of a beam (or the cell) may be referred to as a spotbeam. For example, the footprint of a cell/beam may move over the Earth's surface with the satellite movement (e.g., a LEO with moving cells or a HAPS with moving cells). The footprint of a cell/beam may be Earth fixed (e.g., quasi-earth-fixed) with some beam pointing mechanism used by the satellite to compensate for its motion (e.g., a LEO with earth fixed cells). The size of a spotbeam (e.g., diameter of the spotbeam and/or cell and/or coverage area) may range from tens of kilometers (e.g., 50 km - 200 km) to a few thousand kilometers (e.g., 3500 km). For example, the size of the spotbeam may depend on the system design.

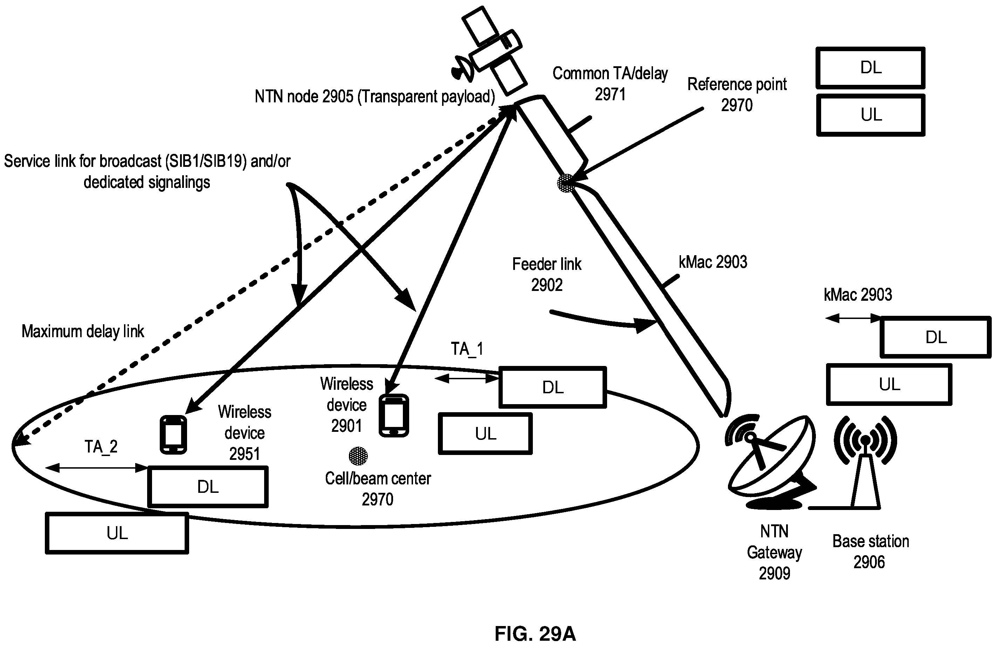

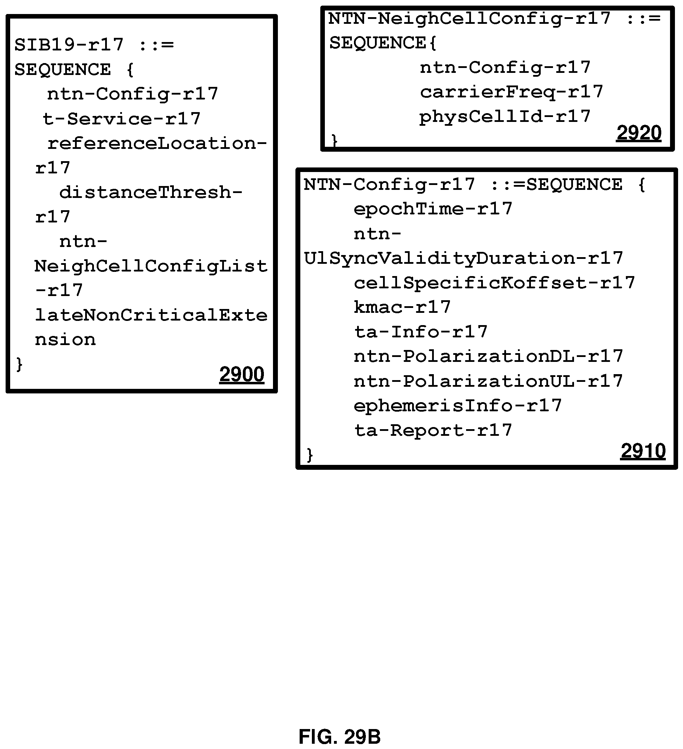

FIG. 29A shows an example of an NTN. FIG. 29B shows an example of (NTN) assistance information for maintenance of UL synchronization at a wireless device in an NTN. As shown in FIG. 29A, a base station may, via the service link, transmit/send broadcast signals (e.g., SIBx, x=1, 2, ..., 19, ...), multicast signals, and/or dedicated (unicast) signals to wireless devices, e.g., in a cell. FIG. 29A shows an example of an NTN with a transparent NTN platform.

A propagation delay may be an amount of time it takes for the head of the signal to travel from a sender (e.g., the base station or the NTN node) to a receiver (e.g., the wireless device) or vice versa. The propagation delay may vary depending on a change in distance between the sender and the receiver, e.g., due to movement of the NTN node, movement of the wireless device, a change of an inter-satellite link, and/or feeder link switching. One-way latency/delay may be an amount of time required to propagate through a telecommunication system from the sender (e.g., the base station) to the receiver (e.g., the wireless device). For the transparent NTN, the round-trip propagation delay (RTD or UE-gNB RTT) may comprise service link delay (e.g., between the NTN node and the wireless device), feeder link delay (e.g., between the NTN gateway and the NTN node), and/or between the gateway and the base station (e.g., in the case the gateway and the NTN base station are not collocated). For example, the UE-gNB RTT (or the RTD) may be twice of the one-way delay between the wireless device and the base station. In case of a GEO satellite with the transparent payload, the RTD may be approximately 556 milliseconds. A (maximum) RTD of a LEO satellite with the transparent payload and altitude of 600 km is approximately 25.77 milliseconds and with altitude of 1200 km is approximately 41.77 milliseconds. For example, the RTD of a terrestrial network (e.g., NR, E-UTRA, LTE) may be negligible compared to the RTD of an NTN scenario (e.g., the RTD of a terrestrial network may be less than 1 millisecond).

A differential delay within a beam/cell of a NTN node may depend on, for example, the maximum diameter of the beam/cell footprint at nadir. The differential delay may imply a maximum difference between communication latency that two wireless devices, e.g., a first wireless device (wireless device 1) that is located close to the center of the cell/beam and a second wireless device (wireless device 2) that is located close to the edge of the cell/beam in FIG. 29A, may experience while communicating with the base station via the NTN node. The first wireless device may experience a smaller RTD compared to the second wireless device. The link with a maximum propagation delay (e.g., the maximum delay link) may experience the highest propagation delay (or the maximum RTD) in the cell/beam. For example, the differential delay may imply a difference between the maximum delay of the cell/beam and a minimum delay of the cell/beam. For example, the service link to a cell/beam center may experience the minimum propagation delay in the cell/beam. Depending on implementation, for a LEO satellite, the differential delay may be at least 3.12 milliseconds and may increase up to 8 milliseconds. For example, of a GEO satellite, depending on implementation, the differential delay may be as large as 32 milliseconds.

For example, the wireless device may, from the base station, receive the one or more configuration parameters (e.g., one or more RRC configuration parameters). The base station may transmit to the wireless device one or more messages (e.g., one or more RRC messages) comprising the one or more configuration parameters. The one or more messages may comprise the LPP messages and/or the one or more positioning messages. The one or more configuration parameters may, for example, comprise one or more serving cell (e.g., the one or more Serving Cells or the one or more cells) configuration parameters (e.g., ServingCell ConfigCommon, ServingCellConfigCommonSIB, and/or ServingCell-Config) for configuring one or more cells (e.g., one or more Serving Cells). For example, the one or more cells may comprise a master (or primary) cell group (MSG) and/or a secondary cell group (SCG). In some cases, a cell of the one or more cells may be a primary secondary cell (PSCell), or a primary cell (PCell), or a secondary cell (SCell), or a special cell (SpCell). In some other cases, a cell of the one or more cells may belong to a first cell group corresponding to a primary TAG (pTAG) or a second cell group corresponding to a secondary TAG (sTAG). For example, the one or more configuration parameters may configure the wireless device for multi-cell communication and/or carrier aggregation.

The one or more cells may configure (or belong to) a validity area. For example, the validity area may comprise the one or more cells. For example, the one or more configuration parameters may be applicable/valid for the one or more cells of the validity area. For example, the one or more configuration parameters may configure/indicate one or more (per-configured) SRS resources for transmission within/via the one or more cells of the validity area.

The base station may transmit/send to the wireless device NTN assistance information (or data) via an NTN-specific SIB (e.g., SIB19) 2900, e.g., the one or more configuration parameters may comprise the NTN assistance information. The one or more messages may comprise the NTN-specific SIB. The NTN assistance information may comprise a first set of NTN configuration parameters. For example, the first set of NTN configuration parameters may comprise at least one NTN-config (e.g., ntn-config-r17 2920). The at least one NTN-config may correspond to a serving cell of the NTN and/or a non-serving cell of the NTN (e.g., a target cell or a neighbor cell). Each NTN-config (e.g., ntn-Config 2920) of the at least one NTN-config may correspond to a cell (e.g., the serving cell or the neighbor cell of the NTN) with a corresponding physical cell ID (PCI). As shown in FIG. 29B, the first set of NTN configuration parameters may comprise NTN-configs of one or more NTN neighbor cells (e.g., via ntn-NeighCellConfigList IE) 2910, e.g., for cell selection/reselection and/or handover. Each NTN neighbor cell of the one or more NTN neighbor cells may have its unique PCI. For example, the at least one NTN-config may comprise the one or more NTN neighbor cells.

The one or more configuration parameters may comprise common configuration parameters of the serving cell (e.g., IE ServingCellConfigCommon). In one example, the base station may transmit to the wireless device the common configuration parameters of the serving cell via a system broadcast information (e.g., SIB1). For example, the base station may transmit the common configuration parameters of the serving cell via one or more RRC messages (e.g., RRC setup message, RRC establishment message, RRC re-establishment message, and/or RRC reconfiguration message). For example, the base station may transmit the common configuration parameters of the serving cell during the initial access procedure and/or a handover procedure. The common configuration parameters of the serving cell may comprise an NTN-config (e.g., ntn-Config-r17, e.g., corresponding to the serving cell with the first PCI) of the at least one NTN-config. For example, the serving cell may belong to the NTN, e.g., the wireless device may communicate with the base station via the serving cell (of the NTN). The Serving cell may be a first cell (or a source cell) with/identified by a first PCI or a neighbor cell (or a candidate cell or a target cell or a second cell) with/identified by a second PCI.

The first set of NTN configuration parameters may comprise the NTN-config of the common configuration parameters of the serving cell (e.g., a first NTN configuration parameters). The first NTN configuration parameters (e.g., a first NTN-config of the at least one NTN-config) may correspond to the first PCI or the first cell (e.g., the source cell). If the common configuration parameters of the serving cell correspond to the RRC setup message (and/or the RRC establishment message and/or RRC re-establishment message), the NTN-config of the common configuration parameters of the serving cell may correspond to the source cell.

If the common configuration parameters of the serving cell correspond to the RRC reconfiguration message, the NTN-config of the common configuration parameters of the serving cell may correspond to the target cell (e.g., a second NTN configuration parameters e.g., a second NTN-config, of the at least one NTN-config). The second NTN configuration parameters (e.g., the second NTN-config of the at least one NTN-config) may correspond to the second PCI or the second cell (e.g., the target cell).

The at least one NTN-config may comprise the first NTN-config and/or the second NTN-config. For example, the NTN assistance information may comprise the first NTN-config and/or the second NTN-config.

As shown in FIG. 29A, each/an NTN-config of the at least one NTN-config (e.g., NTN-config-r17 2920) may comprise at least one of the following (or a combination of thereof): corresponding ephemeris parameters (or data/information) of an NTN node (e.g., the satellite ephemeris data, e.g., ephemerisInfo); and/or one or more common delay/TA parameters (e.g., ta-Info), e.g., comprising at least one of TACommon, TACommonDrift, TACommonDriftVariation; and/or a cell-specific scheduling offset (e.g., cellSpecificKoffset or Koffset, e.g., $K_{cell,offset}$) in number of slots for a given subcarrier spacing (e.g., $\mu_{Koffset}$), e.g., 15 KHz; and/or MAC-layer scheduling offset (e.g., $k_{mac}$ or kmac or K-Mac or K-mac or Kmac) in number of slots for a given subcarrier spacing (e.g., $\mu_{Kmac}$), e.g., 15 KHz, indicating a portion of a feeder link delay that the base station may pre-compensate, e.g., if UL/DL configurations are not aligned at the base station (see, FIG. 29A); and/or epoch time for applying the NTN-config (e.g., epochTime); and/or a validity duration of the NTN-config (e.g., ntn-UlSyncValidityDuration) indicating a maximum duration (e.g., in seconds) that the NTN-config stays valid (e.g., a maximum duration that the wireless device stays UL synchronized with the serving cell without (re-)acquiring/reading the SIB 19 of the serving cell); and/or one or more antenna polarization mode(s) (e.g., vertical horizontal, right-hand circular, or left-hand circular) for UL/DL communications (e.g., ntn-PolarizationUL/ntn-PolarizationDL); and/or a first indication/parameter (e.g., ta-Report-r17).

For example, the MAC-layer scheduling offset (e.g., Kmac) may be 0, e.g., if the K-Mac is absent from (is not indicated/configured by) the NTN config of the serving cell. For example, in an NTN scenario with the transparent NTN node, if the UL frame and the DL frame is aligned (e.g., considering $N_{TA,offset}$) at the base station, the K-Mac may be absent from the NTN-config of the serving cell. The K-Mac may indicate a scheduling offset, e.g., if downlink and uplink frame timing are not aligned at the base station. The wireless device may use the K-Mac (if indicated) for determining action and assumption on downlink configuration indicated by a MAC CE command in PDSCH.

The K-Mac may be a scheduling offset for application of downlink configurations, of the serving cell in the NTN, indicated by MAC CE command(s). For example, the Network (e.g., the base station) may indicate the K-Mac in the NTN for MAC CE timing relationships enhancement. One example of MAC CE timing relationships enhancement may comprise the following (e.g., as specified in NR specification 3GPP TS 38.300).

For example, the wireless device may receive a command for a preconfigured Measurement Gap for Positioning activation/deactivation (e.g., Positioning Measurement Gap Activation/Deactivation Command MAC CE), e.g., via the serving cell of the NTN. The command may indicate a first preconfigured measurement gap. The wireless device may transmit a PUCCH with HARQ-ACK information in slot n corresponding to the PDSCH carrying the command (Positioning Measurement Gap Activation/Deactivation Command MAC CE). For example, the wireless device may activate/deactivate the first preconfigured measurement gap (and apply corresponding assumptions) starting from a first/initial/starting slot that is after slot $n + 3N_{slot}^{subframe,\mu} + 2^{\mu - \mu_{Kmac}} \cdot k_{mac}$ where $\mu$ is an SCS configuration for the PUCCH.

The wireless device may receive a command for PPW (of the one or more PPWs) activation/deactivation (e.g., PPW Activation/Deactivation Command MAC CE), e.g., via the serving cell. The activation command may indicate the PPW (e.g., an ID of the PPW). The wireless device may transmit a PUCCH with HARQ-ACK information in slot n corresponding to the PDSCH carrying the command (PPW Activation/Deactivation Command MAC CE). For example, the wireless device may activate/deactivate the PPW (and apply corresponding assumptions) starting from a first/initial/starting slot that is after slot $n + 3N_{slot}^{subframe,\mu} + 2^{\mu - \mu_{Kmac}} \cdot k_{mac}$ where $\mu$ is an SCS configuration for the PUCCH.

To maintain uplink orthogonality in the serving cell, transmissions from different wireless devices in a cell/beam (e.g., the first wireless device and the second wireless device in FIG. 29B) may need to be time-aligned at the base station and/or the NTN node (e.g., satellite). The cell may be the serving cell. For example, time alignment/synchronization may be achieved by using different timing advance (TA) values at different wireless devices to compensate for their different propagation delays (or RTDs). As shown in FIG. 29A, for UL transmissions, the first wireless device may use the first TA value (e.g., TA_1) and the second wireless device may use the second TA value (TA_2).

For example, the wireless device (e.g., the first wireless device or the second wireless device) may estimate/-determine/measure a (current or a latest) TA value based on the at least one NTN-config. In one case, during communication via the first cell, the wireless device may estimate/determine/measure a (current or a latest) TA value based on the first NTN-config. In other case, during communication via the first cell, the wireless device may estimate/determine/measure a (current or a latest) TA value based on the second NTN-config.

For example, the wireless device may calculate/measure/maintain the current (or latest available) TA (value) of the wireless device $T_{TA}$ (e.g., corresponding to a TAG ID or a primary TAG or a secondary TAG) based on at least a combination of a closed-loop TA value (or a closed-loop TA procedure/control) and/or an open-loop TA value (or an open-loop TA procedure/control). For example, a combination of the closed-loop TA control and the open-loop TA control may be based on adding/summing the open-loop TA value (e.g., derived/calculated based on the open-loop TA procedure/control) and the closed-loop TA value (or a portion of the closed-loop TA procedure/control). In FIG. 29A, the current TA value of the first wireless device may be TA_1 and the current TA value of the second wireless device may be TA_2. The closed-loop TA procedure/control may be based on receiving at least one (absolute) TA command (TAC) MAC CE indicating a TA value (e.g., $T_A$ corresponding to the TAG ID, e.g., the primary TAG or the secondary TAG) from the base station (e.g., via Msg2 1312 and/or MsgB 1332 and/or a PDSCH). The TA value may indicate an adjustment of the closed-loop TA value (e.g., $N_{TA}$). Based on (e.g., in response to) receiving the TAC MAC CE on/during uplink slot n, the wireless device may apply/adjust an uplink transmission timing (e.g., for transmission of UL signals) from a beginning/start of uplink slot $n + k + 1 + 2^{\mu} \cdot K_{offset}$ where

$$k = \left\lceil N_{slot}^{subframe,\mu} \cdot \left( N_{T,1} + N_{T,2} + N_{TA,max} + 0.5 \right) / T_{sf} \right\rceil .$$

The open-loop TA procedure/control may require a GNSS-acquired position (or location information) of the wireless device and/or the NTN-config of the serving cell (e.g., the first NTN-config or the second NTN-config). The wireless device may, based on an implemented orbital predictor/propagator model (e.g., the GNSS-acquired position) and/or the NTN-config of the serving cell, may use the ephemeris data (and/or the GNSS-acquired position) to measure/calculate/maintain movement pattern of the satellite (corresponding to the NTN-config of the serving cell), measure/determine/estimate a service link delay (e.g., RTT of the service link), and/or measure/determine/estimate a feeder link delay (e.g., RTT of the feeder link) and/or measure/determine/estimate propagation delay between the wireless device and the base station (e.g., UE-gNB RTT of the serving cell). For example, the wireless device may, based on the GNSS-acquired position and/or the NTN-config of the serving cell, adjust the current TA value (e.g., the TA of the wireless device) via the open-loop TA procedure/control. The open-loop TA procedure/control may comprise determination/estimation calculation of one or more values, e.g., $N_{TA,adj}^{UE}$ and/or $N_{TA,adj}^{common}$. For example, the wireless device may determine the open-loop TA value (corresponding to the serving cell) by summing up/adding the $N_{TA,adj}^{common}$ and $N_{TA,adj}^{UE}$.

The wireless device may (to determine the TA value of the wireless device) determine/estimate $N_{TA,adj}^{UE}$ may be based on the propagation delay of the service link (e.g., between the wireless device and the NTN node). The wireless device may determine/measure/estimate $N_{TA,adj}^{UE}$ based on the location information of the wireless device (e.g., position and/or GNSS of the wireless device) and the satellite ephemeris data (e.g., the NTN-config) of the serving cell. For example,

$$TA = \left(N_{TA} + N_{TA\text{-offset}} + N_{TA,adj}^{common} + N_{TA,adj}^{UE}\right) \times T_c.$$

The wireless device may (to determine the TA value of the wireless device) determine/estimate $N_{TA,adj}^{common}$ may be a common delay of the cell (e.g., a portion of the feeder link delay that is not pre-compensated by the base station). The wireless device may determine the $N_{TA,adj}^{common}$ based on the one or more common TA parameters (e.g., the NTN-config) of the serving cell.

The wireless device may follow the frame timing change of the reference cell (e.g., the serving cell), e.g., in the RRC connected state/mode. If the reference cell is part of the NTN, the uplink frame (for uplink transmissions) may be

$$\left(N_{TA} + N_{TA\text{-offset}} + N_{TA,adj}^{common} + N_{TA,adj}^{UE}\right) \times T_c$$

before/prior to the reception of the first/earliest detected path (in time) of the corresponding downlink frame from the reference cell. For example, if the wireless device is communicating with the base station via the NTN (e.g., if the reference cell is part of the NTN) the wireless device may autonomously adjust the (transmission) timing, e.g., a second autonomous timing adjustment. The second autonomous timing adjustment may be first autonomous timing adjustment or may be different than the first autonomous timing adjustment. The second autonomous timing adjustment may comprise a second gradual timing adjustment procedure based on (or to achieve/satisfy/fulfill) TA accuracy requirement(s). The TA accuracy requirements may correspond to/comprise a second transmission timing error. The second transmission timing error may be Te_NTN. For example, Te_NTN may be larger than T_e. If the transmission timing error (e.g., between the wireless device and a second reference timing exceeds the second transmission timing error), the wireless device may (autonomously) adjust the transmission timing to within the second transmission timing error $\pm$Te_NTN, e.g., the second autonomous timing adjustment. The second reference timing may be ($N_{TA} + N_{TA\text{-offset}} + N_{TA,adj}^{common} + N_{TA,adj}^{UE}) \times T_c$ (e.g., the current TA value) before/prior to the downlink timing of the reference cell. For example, the second autonomous timing adjustment may comprise (autonomously) adjusting the transmission timing such that the maximum amount of the magnitude of the timing change (apart from a change of $N_{TA,adj}^{UE}$ due to satellite position update and $N_{TA,adj}^{common}$ between a previous transmission and a current transmission in one adjustment being Tq_NTN (e.g., a second maximum autonomous time adjustment step); and/or a minimum aggregate adjustment rate (apart from a change of $\dot{N}_{TA,adj}^{UE}$ due to satellite position update and $N_{TA,adj}^{common}$ during a last 1 second) being Tp_NTN (e.g., a second aggregate adjustment rate) per second; and/or the maximum aggregate adjustment rate (apart from a change of $\dot{N}_{TA,adj}^{UE}$ due to satellite position update and $N_{TA,adj}^{common}$ during a last 200 ms) being Tq_NTN per 200 ms. For example, Tq_NTN may be larger than T_q and/or Tp_NTN may be larger than T_p.

For example, the second autonomous timing adjustment may not comprise/consider autonomously adjusting the transmission timing as a result of a change of $N_{TA,adj}^{UE}$ and/or $N_{TA,adj}^{common}$ during a second window. The second window may comprise a time duration between the previous (or preceding) transmission and the current transmission. The second window may comprise the last 1 second and/or the last 200 ms.

The base station may transmit a differential Koffset MAC CE to the wireless device. The differential Koffset MAC CE may indicate a differential Koffset in a number of slots using SCS of 15 kHz. The wireless device may use the differential Koffset (indicated by the differential Koffset MAC CE) for determining transmission timing of UL signals and/or activation/deactivation time of one or more MAC CEs at the wireless device. If the differential Koffset is indicated, the wireless device may determine a UE-specific scheduling offset $K_{UE,offset}$ based on the differential Koffset (e.g., the UE-specific scheduling offset is equal to minus the differential Koffset). If the differential Koffset is not indicated, the wireless device may set $K_{UE,offset} = 0$. For example, the wireless device may determine $K_{offset}$ based on the cell-specific scheduling offset (e.g., cellSpecificKoffset, e.g., $K_{cell,offset}$) of the serving cell and the UE-specific scheduling offset $K_{UE,offset}$, e.g., $K_{offset} = K_{cell,offset} - K_{UE,offset}$.

The base station may transmit, to the wireless device, a DCI. The wireless device may receive the DCI during a reception occasion/time/interval (e.g., a slot/symbol). For example, the DCI may schedule/indicate/trigger a transmission of an uplink signal/channel (e.g., a PUSCH or a PUCCH or a PRACH or an SRS) to the base station via the NTN. The wireless device may transmit UL data and/or UCI and/or preamble and/or SRS resource via/based on the UL signal to the base station via/during a transmission occasion/time/interval (e.g., slot/symbol).

For example, the DCI may trigger/schedule/indicate a transmission of the PUSCH (e.g., the UL data) and/or the PUCCH (e.g., the UCI, e.g., HARQ-ACK information). The wireless device may use the cell-specific scheduling offset and/or the UE-specific scheduling offset to determine the transmission occasion of the PUSCH/PUCCH. For example, the transmission occasion of the PUSCH may be based on $K_{offset} \cdot \frac{2^{\mu_{PUSCH}}}{2^{\mu_{K_{offset}}}}$ , wherein $K_{offset} = K_{cell,offset} - K_{UE,offset}$ (corresponding to the serving cell). $\mu_{PUSCH}$ is the SCS configuration of the PUSCH transmission and $\mu_{K_{offset}}$ is the SCS configuration of the Koffset (e.g., $\mu_{K_{offset}} = 0$ for 15 kHz or FR1). For example, the transmission occasion of the PUCCH may be based on $K_{offset} \cdot \frac{2^{\mu_{PUCCH}}}{2^{\mu_{K_{offset}}}}$ (corresponding to the serving cell) where $\mu_{PUCCH}$ is the SCS configuration of the PUCCH transmission. The wireless device may apply/use the current TA value (e.g., based on the closed-loop TA value and/or the open-loop TA value) of the wireless device (corresponding to the serving cell) to transmit the PUSCH/PUCCH.

The wireless device may use the NTN-config of a cell (e.g., the serving cell) the calculate/determinate/measurement/maintain an estimate of the wireless device-gNB RTT between the wireless device and a base station of the cell. For example, the wireless device may calculate/measure/estimate the wireless device-gNB RTT (in ms or in number of slots) of the serving cell based on the current TA value and the K-Mac (if indicated by the NTN-config of the serving cell). For example, the wireless device-gNB RTT may be the summation of the current TA value and K-Mac (based on subcarrier spacing of the 15 KHz). If the K-Mac is 0, the wireless device may determine/measure the wireless device-gNB RTT based on the current TA value (of the wireless device), e.g., the wireless device-gNB RTT is equal to the current TA value. The wireless device may maintain/calculate/update the open-loop TA value (or the wireless device-gNB RTT) over a validity duration of the NTN-config (e.g., T430 timer).

The validity duration may indicate (a maximum/longest) validity period of the (satellite) ephemeris data/information and/or the TA parameters of the NTN-config of the serving cell. For example, upon or based on (e.g., in response to) acquiring/receiving the NTN-config of the serving cell (e.g., upon reception of the SIB 19 and/or upon reception of RRCReconfiguration message for a target cell including reconfiguraionWithSync and/or upon conditional reconfiguration execution, e.g., if applying a stored RRCReconfiguration message for a target cell including reconfiguraionWithSync), the wireless device may start/restart the validity (or validation) duration/timer/window/period (e.g., T430 timer) of the serving cell. For example, the wireless device may start the validity timer based the epoch time indicated by the NTN-config of the serving cell, e.g., the wireless device may start the validity timer from a subframe indicated by the epoch time. The wireless device may set an initial value of the T430 timer by ntn-UlSyncValidityDuration of the NTN-config of the serving cell. The wireless device may stop the validity timer of the serving cell (e.g., a source cell or first cell) upon reception of the RRCReconfiguration message for the target cell (e.g., a second cell and/or a target serving cell) including reconfiguraionWithSync and/or upon conditional reconfiguration execution, e.g., if applying a stored RRCReconfiguration message for the target cell including reconfiguraionWithSync.

The wireless device may stop UL transmissions via the serving cell and flush HARQ buffers, for example, based on (e.g., in response to) determining that the validity duration being expired. For example, the wireless device may acquire the SIB 19 of the serving cell to receive an update NTN assistance information 2900. The wireless device may receive an update (satellite) ephemeris data/information and/or update common TA parameters. The wireless device may, prior to expiry of the validity duration of the serving cell and to reduce interruption in UL transmissions, (re-)acquire the SIB 19 in order to have valid (estimate of) the open-loop TA value of the serving cell (valid TA value). For example, upon the expiry of the validity duration of the serving cell and if the wireless device is not able to (re-)acquire the SIB 19 (of the serving cell), the wireless device may become UL unsynchronized with the base station of the serving cell, e.g., for UL communication with the base station via the serving cell.

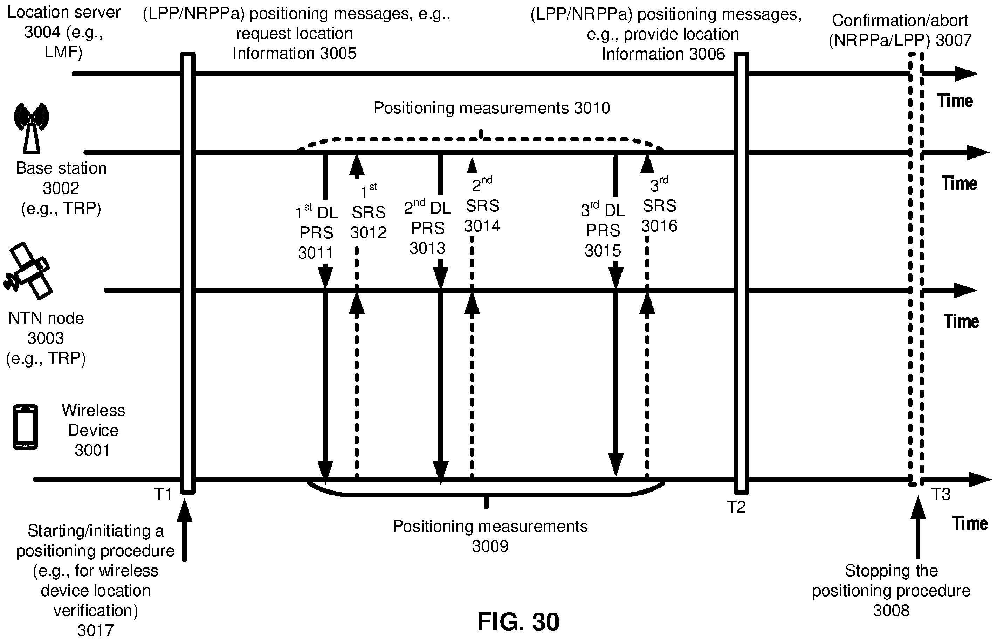

FIG. 30 shows an example of positioning procedure in a non-terrestrial network. For example, an NTN node 3003 (e.g., a satellite) may be the reference TRP or the neighbor TRP. For example, a base station 3002 may comprise (or be) the reference TRP or the neighbor TRP. The NTN node 3003 may, for example, correspond to (or be associated with) a TRP (e.g., the reference TRP or the neighbor TRP). A wireless device 3001 may communicate with the base station via a cell (e.g., the serving cell). The wireless device 3001 may be in an RRC connected state or an RRC idle state or an RRC inactive state.

The wireless device 3001 may perform the positioning procedure as described herein (e.g., with respect to FIG. 17B and/or FIG. 24B) while communicating a base station 3002 via the NTN (e.g., the serving cell is part of the NTN). A location server 3004 and/or the wireless device 3001 may communicate/exchange (transmit and/or receive) the LPP messages of the one or more positioning messages during the positioning procedure (or the LPP session). As described herein with respect to FIG. 24B, the location server 3004 and/or the base station 3002 may communicate (transmit and/or receive) the NRPPa messages of the one or more positioning messages during the positioning procedure. For example, the base station 3002 may send (e.g., transmit) the one or more RRC messages (comprising the one or more configuration parameters) to the wireless device 3001 (e.g., before starting the positioning procedure and/or during the positioning procedure). As described herein with respect to FIG. 17B, the one or more positioning messages may comprise the (LPP) provide assistance data message and/or the (LPP) request location information message. The wireless device 3001 may start/initiate (or instigate) the positioning procedure, e.g., based on (e.g., in response to) receiving the (LPP) provide assistance data message and/or the (LPP) request location information message of the one or more positioning messages.

The positioning procedure may be for verifying location of the wireless device 3001 (e.g., verification of wireless device location, e.g., based on the NI-LR procedure), e.g., by the location server or the AMF. The verification of the wireless device location (or a location verification (procedure)) may be used (or be part of or applicable) for Public Warning System, Charging and Billing, Emergency calls, Lawful Intercept, Data Retention Policy in cross-border scenarios and international regions, and/or Network access (satellite access). The positioning procedure may allow the wireless device 3001 and/or the location server (LMF) to estimate/measure (or verify/confirm) the locations/position of the wireless device 3001. The AMF may trigger location service procedures to determine a (UE) location verification decision. For example, the AMF may send/transmit a location service response to the wireless device 3001. The wireless device location verification decision may comprise the location service response. The location service response may comprise a success (or confirmation or verification) indication or a failure (or unsuccessful) indication. The success indication may indicate the core network (e.g., LMF or AMF) is able to successfully verify (e.g., according to expected/required accuracy, e.g., 5-15 km or the like) the location information of the wireless device 3001 (e.g., the wireless device 3001 may not be faking/falsifying its location information). The failure indication may indicate the core network (e.g., LMF or AMF) is not able to successfully verify the location information of the wireless device 3001 (e.g., the wireless device 3001 may be faking/falsifying its location information). For example, the success indication may allow the wireless device 3001 to receive services (UL/DL data transmissions and/or mobility) via the satellite access. For example, the failure indication may cause the base station (or AMF) bar (or prohibit or bar the access of) the wireless device 3001 to receive services (UL/DL data transmissions and/or mobility) via the satellite access (e.g., the NTN). The location service response may comprise location information (e.g., an estimate of the location of the wireless device 3001 that may be calculated by the LMF). The wireless device 3001 may use the location information for UL/DL communications and/or mobility or the like.

The positioning procedure may be (or comprise) the multi-RTT positioning method/procedure and/or the RSTD positioning procedure or the like. The positioning procedure may comprise carrier phase (difference) measurements. The positioning procedure may comprise aggregating DL PRS resources (and/or resource sets) across one or more bandwidths and/or one or more carriers and/or one or more DL PRS positioning frequency layers. The positioning procedure may comprise aggregating SRS resources (and/or SRS resource sets) across one or more bandwidths and/or one or more carriers.

The wireless device 3001 may during the at least one measurement period may perform (positioning) measurements (e.g., wireless device Rx-Tx time difference measurement, PRS-RSRP(P), measurements, RSTD measurements and/or the like) as described herein using one or more DL PRS transmissions (e.g., the DL-PRS resource(s) and/or DL PRS resource set(s)) and/or one or more SRS transmissions. For example, as described herein, the base station 3002 (or the TRPs) may perform (positioning) measurements, e.g., gNB Rx-Tx time difference measurements using the one or more DL PRS transmissions and/or the one or more SRS transmissions. The wireless device 3001 may report/send/-transmit the (positioning) measurements and location information to the location server (e.g., via the LPP provide location information message of the one or more positioning message) at time/occasion T2. The base station 3002 may send/report/transmit the (positioning) measurements via NRPPa messages to the location server.

As shown in FIG. 30, the wireless device 3001 may stop/terminate/abort the positioning procedure at time/-occasion T2, e.g., based on the one or more positioning messages (e.g., LPP abort message or LPP error message). For example, the wireless device 3001 may stop/terminate/abort the positioning procedure based on (e.g., in response to) receiving a message from the AMP/base station 3002. The message may be a measurement termination command of the one or more positioning messages (e.g., the NRPPa messages or the LPP messages). The message may comprise the location service response. For example, the one or more positioning messages may comprise the wireless device location verification decision. The wireless device location verification decision may confirm/verify the location of the wireless device 3001. The wireless device location verification decision may, for example, comprise the success indication or the failure indication. For example, the stopping/terminating/aborting the positioning procedure at time/occasion T2 may be based on the receiving the location service.

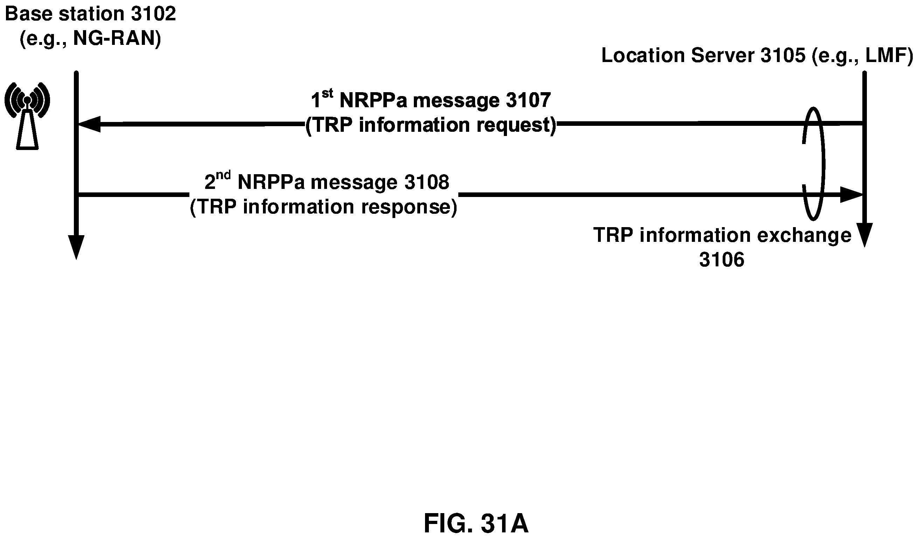

FIG. 31A shows an example of TRP information exchange procedure/function. The positioning procedure may comprise receiving/measuring DL-PRS resource(s)/transmissions from multiple TPs/TRPs (e.g., the one or more TRPs) comprising the reference TRP and/or neighbor TRPs. The purpose of the TRP information exchange procedure (corresponding to the TRP information transfer function) may be to allow a location server 3105 (e.g., LMF) to request the NG-RAN node (e.g., the serving base station, or base station 3102) to provide (detailed) information for TRPs (e.g., for configuration of the DL-PRS resources) hosted by the NG-RAN node. The LMF may initiate the TRP information exchange by sending/transmitting a first NRPPa message (e.g., a TRP INFORMATION REQUEST message) of the NRPPa messages. The first NRPPa may comprise a TRP List IE (e.g., IDs/identifications of the multiple TRPs). The NG-RAN node may transmit (in response of the first NRPPa message) a second NRPPa message (e.g., a TRP INFORMATION RESPONSE message) of the NRPPa messages. The second NRPPa message may comprise IE TRP Information List that contains/comprises (requested) TRP information. The TRP information may comprise requested information for all TRPs included in the TRP List IE of the first NRPPa message. The TRP information may comprise (corresponding to each TRP of the TRP List IE) at least one of the following: PCI (of a cell, e.g., the serving cell); and/or PRS configuration; and/or SSB information; and/or SFN initialization time; and/or geographical coordination (or geographical coordinates); and/or on-demand PRS information; and/or the like. The geographical coordinates of a TRP may comprise geographical coordinates for the TRP and any associated (or corresponding) antenna reference point(s) (ARP(s)). The cell (e.g., the serving cell) may comprise the TRP.

The geographical coordinates for the TRP may comprise at least one of the following: a TRP position indicating a configured estimated geographical position of the antenna of the cell/TRP; and/or a corresponding reference point to determine/derive the TRP position; and/or a TRP position relative geodetic indicating a configured estimated relative geodetic coordinate of the antenna of the cell/TRP; and/or a TRP position relative cartesian indicating a configured estimated relative Cartesian coordinate of the antenna of the cell/TRP; and/or a DL-PRS Resource Coordinates indicating DL-PRS Resource Coordinates relative to the TRP coordinate (e.g., geographical coordinates of the ARP for the DL-PRS Resources of the TRP); and/or ARP location information. The TRP position may be an NG-RAN access point position (e.g., indicating a configured estimated geographical position of the antenna of the cell). The ARP location information may correspond to an ARP ID of the ARP. The ARP location information (associated with the TRP) may indicate relative location information of the ARP to the TRP.

The DL-PRS Resource Coordinates of the geographical coordinates for the TRP may comprise at least one of the following: DL-PRS Resource Set ID; and/or DL-PRS Resource Set ARP Location, e.g., relative to the geographical coordinates for the TRP; and/or DL-PRS Resource ARP List. If the DL-PRS Resource Set ARP Location is absent from the DL-PRS Resource Coordinates of the geographical coordinates for the TRP, the relative location is zero for the indicated DL-PRS Resource Set ID. The DL-PRS Resource ARP List may comprise at least one of the following: DL-PRS Resource ID; and/or DL-PRS Resource ARP Location; and/or TRP position relative cartesian; and/or TRP position relative geodetic.

Considering (or as a result of) the infrastructure shown in FIG. 28 and the signaling between the wireless device and the location server 1702 in FIG. 17A during the positioning session, based on some wireless communications, the location server may not be able to properly configure the wireless device for performing the positioning procedure. In at least some wireless communications, the location server may not know (or be aware of) whether the wireless device is able to measure/receive DL PRS resources from the neighbor TRPs/cells (and/or from the neighbor NTN nodes). As there is no signaling path between the NTN control function and the LMF (besides the one passing through/via the base station 3102), the location server 3105 may not be aware of the information that the SIB19 provides to the wireless device, e.g., the location server 3105 may not be aware that whether the wireless device is provided (e.g., via SIB19) the NTN-configs of the neighbor cells (e.g., for performing the positioning procedure) or not.

A TRP may be part of the NG. For example, the TRP may be an NG-RAN access point, e.g., the TRP location information may be of NG-RAN access point location information type. In the NTN, the NTN node (e.g., the transparent NTN node) may not be part of the NG. Based on some wireless communications, if a TRP of the one or more TRPs is an NTN node (e.g., a satellite), the TRP information exchange procedure may need to be enhanced in order to allow transmission of the NTN assistance information (e.g., comprising ephemeris data of one or more NTN nodes) from the base station 3102 to the location server 3105. For example, each TRP of the one or more TRPs may correspond to/associated with at least one NTN node. The TRP location information may comprise NTN-configs of the at least one NTN node associated with the TRP.

Each NTN node of the at least one NTN node may be an ARP associated with the TRP. The ARP ID may be an ID/number of the NTN node ID (e.g., provided by the NTN control function). The ARP location information (associated with the TRP) may indicate/comprise ephemeris information of the NTN node. For example, the ARP location information (associated with the TRP) may indicate/comprise the NTN-config (e.g., comprising the ephemeris information, ta-info, Kmac, PCI, or the like) of/correspond to the NTN node.

A regenerative NTN node may be part of the NG. The TRP location information and/or the NG-RAN location information may comprise the NTN-config of the NTN node. For example, the ARP location information (associated with the TRP) may indicate/comprise the NTN-config of/correspond to the NTN node.

The NTN control function sends/provides to the base station 3102 ephemeris information of plurality of NTN nodes to the base station 3102. In at least some wireless communications, as also shown in FIG. 28, the base station 3102 of the serving cell may determine the NTN assistance information based on the ephemeris information (of the plurality of NTN nodes) that the NTN control function sends/provides to the base station 3102. For example, the base station 3102 may determine entries of the SIB19 comprising NTN-config(s) of the serving cell (or a serving NTN node or a reference NTN node or an assistance data reference NTN node) and/or the non-serving (neighbor) cells (or the neighbor NTN nodes) based on the ephemeris information (of the plurality of NTN nodes) that the NTN control function sends/provides to the base station 3102.

The location server 3105 may fail to properly configure the assistance data (e.g., DL PRS assistance data) as the location server 3105 may not have enough information to configure the assistance data for the wireless device in the NTN. Improving the LPP/NRPPa procedures may improve the efficiency of the positioning procedure in the NTN.

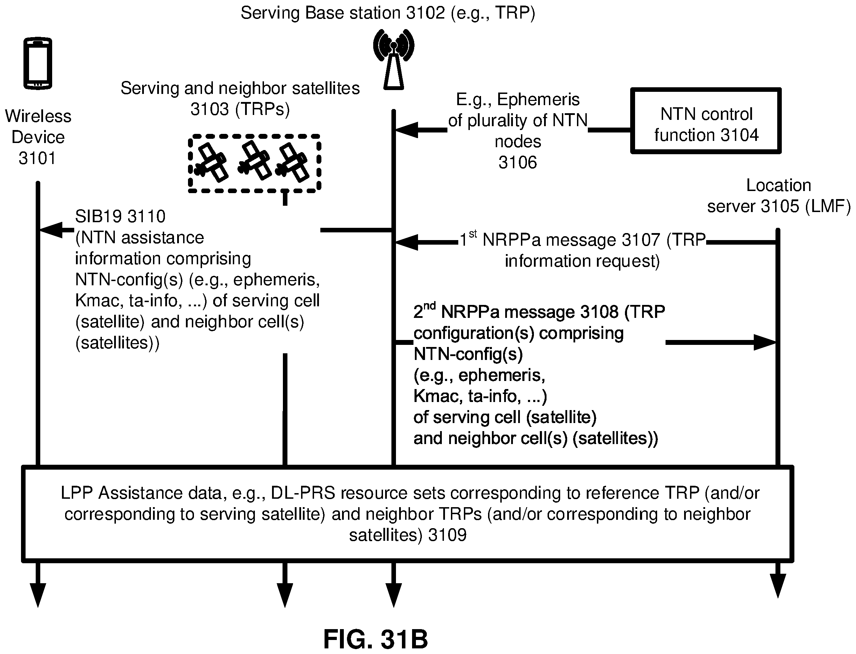

FIG. 31B shows an example of TRP information exchange procedure/function in a non-terrestrial network. For example, a wireless device 3101 may be in an RRC inactive/idle state or in an RRC connected state. As shown in FIG. 31B, a base station 3102 may broadcast the NTN assistance data (e.g., SIB19 3110) in/via the serving cell. The base station 3101 may communicate with a wireless device 3101 via the serving cell (and/or the serving NTN node). For example, ntn-Config-r17 field of the SIB19 3110 may correspond to the serving NTN node. The serving NTN node may not be configured by the IE NTN-NeighCellConfig 2920. For example, ntn-Config-r17 of NTN-NeighCellConfig 2920 of the SIB19 3110 may correspond to the neighbor NTN node.

As shown in FIG. 31B, the TRP location information (e.g., the second NRPPa message 3108) may comprise the NTN assistance information. The NTN assistance information may comprise NTN-config of the at least one NTN node corresponding to the reference TRP. The NTN assistance information may comprise NTN-configs (e.g., ephemeris data/information) of one or more NTN nodes, e.g., the serving NTN node and/or the neighbor NTN nodes, corresponding to the reference TRP and/or the neighbor TRPs.

The base station 3102 may send (e.g., transmit) the NTN assistance information (corresponding to the SIB19) via the second NRPPa message 3108 of the NRPPa messages to a location server 3105. The base station may send (e.g., transmit), for example, once during the validity duration of the NTN-config of the serving cell, the NTN assistance data via the second NRPPa message to the location server 3105. For example, the base station 3102 may, for example, prior to (or in response to) an expiry of the validity duration of the NTN-config of the serving cell (or SIB19), retransmit/resend the NTN assistance information (corresponding to the SIB19) via the second NRPPa message of the NRPPa messages to the location server 3105. The base station 3102 (before the expiry of the validity duration of the NTN assistance information) may update the location server 3105 once during the validity duration of the NTN-config of the serving cell that may moderately increase the signaling overhead between the location server 3105 and the base station 3102.

The second NRPPa message may indicate (to the location server 3105) NTN related parameters of Earth fixed beams/cells and/or Earth moving beams/cells. The location server 3105 may, by using whether the serving cell is provided based on the Earth fixed beams (e.g., NTN quasi-Earth fixed system) and/or the Earth moving beams (e.g., NTN Earth moving system), determine whether to request location information of the wireless device 3101 (via the LPP messages). For example, based on the serving cell being (part of) the Earth fixed beams (e.g., NTN quasi-Earth fixed system), the location server 3105 may send (e.g., transmit) the LPP messages to the wireless device 3101 for triggering/initiating/-starting the wireless device 3101 to start the positioning procedure/session. The location server 3105 may avoid/refrain from sending (e.g., transmitting) the LPP messages to the wireless device 3101 for triggering/initiating/starting the wireless device 3101 to start the positioning procedure/session, for example, based on the serving cell being (part of) the Earth moving beams (e.g., NTN Earth moving system).

The LPP provide capabilities message may indicate whether the wireless device 3101 has/supports/indicates a capability for performing (positioning) measurements (or positioning procedure) in the NTN Earth moving system. Based on the wireless device 3101 having/supporting/indicating the capability for performing (positioning) measurements (or positioning procedure) in the NTN Earth moving system and the serving cell being part of the Earth moving beams (e.g., NTN Earth moving system), the location server (e.g., location service) may send (e.g., transmit) the LPP messages to the wireless device 3101 for triggering/initiating/starting the wireless device 3101 to start the positioning procedure/session.

The location server 3105 may be allowed to obtain/know the NTN assistance information (of the serving cell and/or the neighbor cells of the NTN). As there is no signaling path between the NTN control function 3104 and the location server 3105 (e.g., LMF) (besides the one passing through/via the base station), examples of the present disclosure may allow the location server 3105 to be aware that whether the wireless device 3101 has access (e.g., via SIB19 3110) the NTN-configs of the neighbor cells (e.g., for performing the positioning procedure). For example, the examples of the present disclosure may allow the location server 3105 to be aware that whether the serving cell is part of the NTN quasi-Earth fixed system or the NTN Earth moving system.

The solution may allow the location server 3105 to have fresh/valid NTN assistance information. For example, the location server 3105 may receive the second NRPPa message of the NRPPa messages from the base station 3102. The location server 3105 may, within a duration from receiving the second NRPPa message from the base station, send/transmit a new TRP information request message to the base station 3102 requesting (update) of the NTN assistance information. The duration may be based on the length of the validity duration of the NTN-config. The solution may allow the location server 3105 to determine when to trigger the base station 3102 (e.g., via the TRP location information request message) for (update) of the NTN assistance information. For example, the base station 3102 may, based on (e.g., in response to) receiving the TRP location information request message from the location server 3105, send (e.g., transmit) the second NRPPa message 3108 (comprising updated NTN assistance information) of the NRPPa messages to the location server 3105.

The location server 3105 may use the NTN assistance information to configure the NR-DL-PRS-AssistanceData (comprising the DL-PRS resource sets) corresponding to the reference TRP (and/or the serving NTN node) and/or the neighbor TRPs (and/or the neighbor NTN nodes). The location server 3105 may send (e.g., transmit), to the wireless device 3101, the LPP assistance data message of the LPP messages comprising the NR-DL-PRS-AssistanceData. The wireless device 3101 may use the NR-DL-PRS-AssistanceData to perform the positioning procedure.

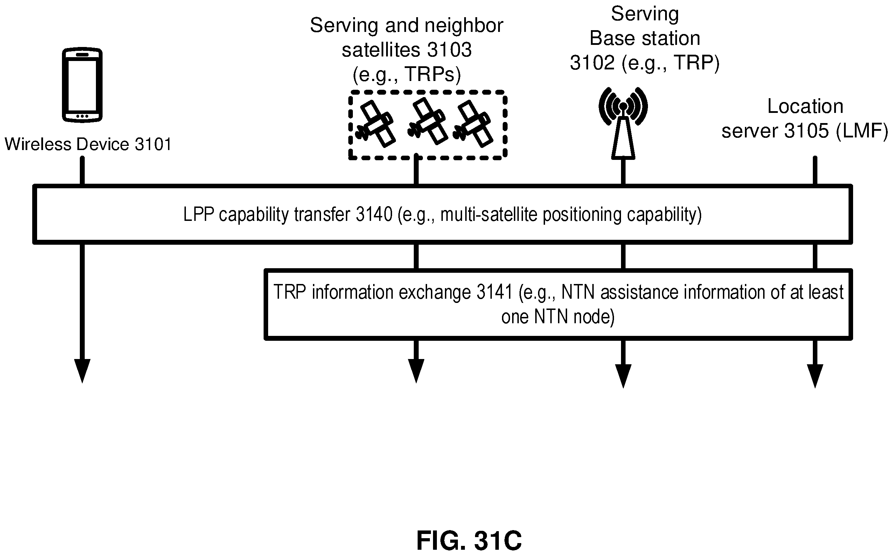

FIG. 31C shows an example of TRP information exchange procedure/function in a non-terrestrial network. For example, the wireless device 3101 may be in an RRC inactive/idle state or in an RRC connected state. As shown in FIG. 31C, the wireless device 3101 may send (e.g., transmit) the LPP provide capabilities message 3140 to the location server 3105. The LPP provide capabilities message may indicate a first capability for performing the positioning procedure based on a multiple satellites/cells/TRPs measurements (e.g., measuring/receiving DL-PRS resources (resource sets) corresponding to multiple satellites/cells/TRPs). For example, the first capability may indicate whether the wireless device 3101 may be capable of measuring/receiving DL-PRS resource(s) that may be associated with (or from) the neighbor NTN nodes (or satellites). The first capability may indicate whether the wireless device 3101v may be capable of sending (e.g., transmitting) SRS resource(s) for positioning that may be associated with (or via) the neighbor NTN nodes (or satellites).

For example, the TRP location exchange procedure/function, discussed herein in connection with FIG. 31A and/or FIG. 31B, may be based on (e.g., in response to) the LPP provide message 3140. For example, based on the LPP provide message indicating the first message, the location server 3105 and the base station 3102 may exchange the TRP location information comprising the NTN assistance information of the at least one NTN node 3103.

The wireless device 3101 may send (e.g., transmit) the LPP provide capabilities message to the location server 3105. The LPP provide capabilities message may indicate a first capability for performing the positioning procedure based on a multiple satellites/cells/TRPs measurements (e.g., measuring/receiving DL-PRS resources (resource sets) corresponding to multiple satellites/cells/TRPs). For example, the first capability may indicate (whether) the wireless device is capable of measuring/receiving DL-PRS resource(s) associated with (or from) the neighbor NTN nodes (satellites). The first capability may indicate (whether) the wireless device is capable of transmitting SRS resource(s) for positioning associated with (or via) the neighbor NTN nodes (satellites).

If the wireless device may indicate the first capability, the location server 3105 may (e.g., based on the first capability indicating the wireless device is capable of measuring/receiving DL-PRS resources associated with/from the neighbor NTN nodes), configure the NR-DL-PRS-AssistanceData (comprising the DL-PRS resource sets) corresponding to the reference TRP (and/or the serving NTN node) and/or the neighbor TRPs (and/or the neighbor NTN nodes). The wireless device may measure one or more DL-PRS transmissions/resources of the reference TRP (and/or the serving NTN node) and/or the neighbor TRPs (and/or the neighbor NTN nodes).

If the wireless device may indicate the first capability, the base station may (e.g., based on the first capability indicating the wireless device is capable of transmitting SRS resources associated with/from the neighbor NTN nodes) configure the SRS resources corresponding to the reference TRP (and/or the serving NTN node) and/or the neighbor TRPs (and/or the neighbor NTN nodes). The wireless device may transmit one or more SRS transmissions to the reference TRP (and/or the serving NTN node) and/or the neighbor TRPs (and/or the neighbor NTN nodes).

If the wireless device 3101 may not indicate the first capability to the location server 3105, the location server 3105 may (e.g., based on the first capability not indicating the wireless device is capable of measuring/receiving DL-PRS resources associated with/from the neighbor NTN nodes) configure the NR-DL-PRS-AssistanceData (e.g., the one or more PRS configuration parameters (e.g., the DL PRS assistance data) comprising the DL-PRS resource sets) corresponding to the reference TRP (and/or the serving NTN node). For example, the wireless device 3101 may measure DL-PRS resources of the reference TRP/serving NTN node.

If the wireless device 3101 may not indicate the first capability, the base station 3102 may (e.g., based on the first capability not indicating the wireless device is capable of transmitting SRS resources associated with/from the neighbor NTN nodes) configure the SRS resources corresponding (only) to the reference TRP (and/or the serving NTN node). The wireless device may transmit SRS resources (only) to the reference TRP. The base station 3102 may configure the SRS resources via one or more SRS configuration parameters (e.g., via the one or more messages). The SRS resources may be for positioning.

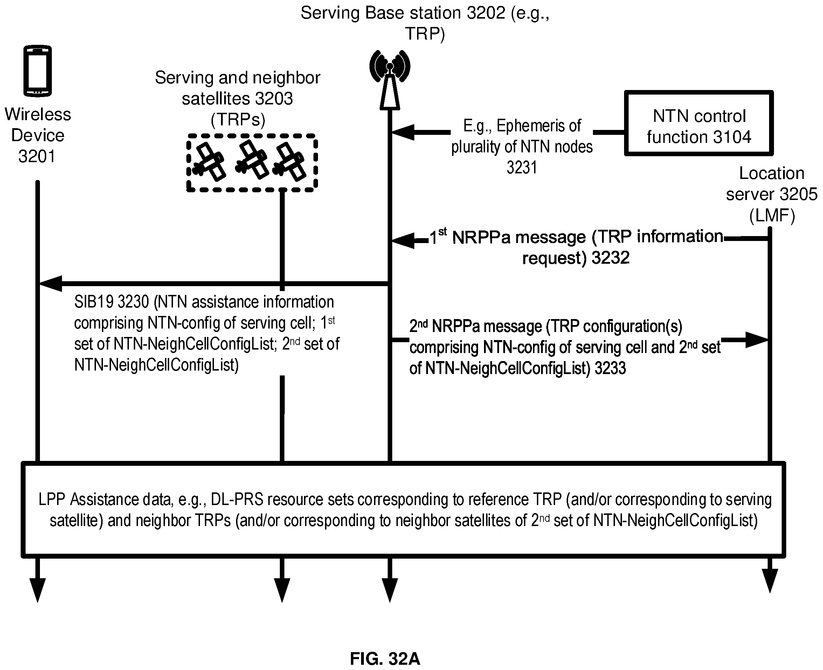

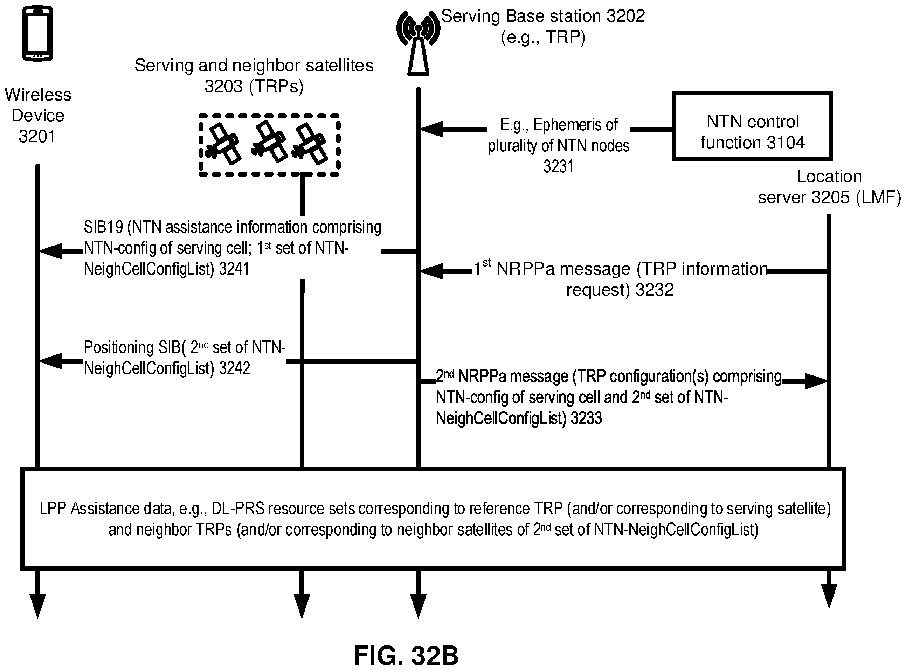

FIG. 32A and FIG. 32B show examples of TRP information exchange procedure/function in a non-terrestrial network. Examples of FIG. 32A and FIG. 32B may show examples of signaling for providing a second (set/list of) neighbor cells, e.g., for measuring/receiving (associated) DL-PRS resources by a wireless device 3201 for performing positioning procedure. The second neighbor cells may be different that a first (set/list of) neighbor cells configured by the SIB19, e.g., for mobility purposes, in legacy systems (e.g., in Release 17 of the 3GPP specifications). As shown the NTN control function sends/provides to the base station may send ephemeris information of plurality of NTN nodes to the base station.

As shown in FIG. 32A, the NTN assistance information of the SIB19 or SIB1 may comprise at least two neighbor cell configurations (e.g., at least two IE NeighCellConfigList). A first neighbor cell configurations of the at least two neighbor cell configurations may configure/indicate a first set of neighbor cell configuration parameters (e.g., a first NTN-NeighCellConfig) for cell selection/reselection (and/or handover) purposes, e.g., SSB/CSR-RS measurements of the first neighbor cells (e.g., during the SMTC periods). The first set of neighbor cell configuration parameters configure-/indicate the first neighbor cells. A second neighbor cell configurations of the at least two neighbor cell configurations may configure/indicate a set second of neighbor cell configuration parameters (e.g., a second NTN-NeighCellConfig) for the positioning procedure based on multi-satellite measurements (e.g., multi-satellite positioning procedure). The second set of neighbor cell configuration parameters configure/indicate the second neighbor cells. For example, the base station 3202 may configure the set second of neighbor cell configuration parameters based on the TRP location information exchange procedure (e.g., the TRP information request message). For example, the set second of neighbor cell configuration parameters may indicate neighbor TRPs/NTN nodes (of the second neighbor cells) that are associated with the (ongoing) positioning procedure.

As shown in FIG. 32B, the base station 3202 may send (e.g., transmit) the second set of neighbor cell configuration parameters via the SIBpos (e.g., the positioning SIB 3242). By transmitting the second set of neighbor cell configuration parameters via the SIBpos (instead of SIB19/SIB1) the base station may have more flexibility in configuration of the second neighbor cells and/or providing sufficient configurations for the wireless devices that are expected to perform the positioning procedure.

As shown in FIG. 32A and FIG. 32B, the TRP information response message (transmitted by the base station to the location server based on (e.g., in response to) the TRP information request) may comprise the second set of neighbor cell configuration parameters. For example, the wireless device 3201 may send (e.g., transmit) the second set of neighbor cell configuration parameters via the second NRPPa message (e.g., the TRP information response message). The TRP information response message may comprise NTN-config(s) of the second neighbor cells and the NTN-config of the serving cell. By only transmitting the second set of neighbor cell configuration parameters instead of transmitting the NTN assistance information (comprising the second set of neighbor cell configuration parameters and the first set of neighbor cell configuration parameters), the payload of the TRP information response message may be reduced (e.g., lower signaling overhead).

As shown in FIG. 32A and FIG. 32B, the LPP messages (e.g., NR-DL-PRS-AssistanceData) may configure DL-PRS resources corresponding to the reference and neighbor TRPs/NTN nodes corresponding to the second neighbor cells and the serving cell. The wireless device may use the DL-PRS resources corresponding to neighbor TRPs/NTN nodes (corresponding to the second neighbor cells) to perform the positioning procedure. By configuring the set second of neighbor cell configuration parameters, the base station may ensure the wireless device has enough information to perform the positioning procedure (e.g., the multi-satellite positioning). For example, the positioning procedure (e.g., the verification of the wireless device location information) may be an optional feature of the wireless device. The base station may configure the set second of neighbor cell configuration parameters for the wireless devices that support the verification of the wireless device location information.

The first neighbor cells configured by the first set of neighbor cell configuration parameters may be configured for mobility services/purposes. The first neighbor cells configured by the first set of neighbor cell configuration parameters may not be adequate for the positioning purposes (e.g., the verification of the wireless device location information). For example, depending on the positioning procedure (e.g., E-CID measurements and/or PRS-RSRP(P) measurements) the base station may not need to configure the second set of neighbor cell configuration parameters as measuring reference signals (e.g., SSBs) from the first neighbor cells configured by the first set of neighbor cell configuration parameters may be enough for the positioning procedure.

The base station may configure the second neighbor cells configured by the second set of neighbor cell configuration parameters, for example, for RSTD measurements and/or wireless device Rx-Tx time difference measurements. The wireless device may measure DL-PRS resources corresponding to the second neighbor cells (e.g., cells with physical cell IDs indicated in the NR-DL-PRS-AssistanceDataPerTRP).

The wireless device may expect to measure DL-PRS resources associated with/corresponding to both the first neighbor cells (e.g., cells with physical cell IDs indicated in the NR-DL-PRS-AssistanceDataPerTRP) and the second neighbor cells (e.g., cells with physical cell IDs indicated in the NR-DL-PRS-AssistanceDataPerTRP). For example, the base station may configure the second neighbor cells (via the second set of neighbor cell configuration parameters) as complementary (or delta) neighbor cells to the neighbor cells configured by the first set of neighbor cell configuration parameters.

In at least some wireless communications, as shown in FIG. 17B and FIG. 23B, the one or more PRS configuration parameters (e.g., the DL PRS assistance data) may configure/indicate the SFN0-Offset (e.g., NR-DL-PRS-SFN0-Offset) corresponding to a neighbor TRP (e.g., a neighbor NTN node). The neighbor TRP (and/or the neighbor NTN node) may correspond to/be associated with neighbor cells (e.g., comprising the first neighbor cells and/or the second neighbor cells). The SFN0-Offset (e.g., via the sfn-offset) may indicate/specify time difference/offset/gap of the SFN 0 slot 0 for a DL PRS resource set (of the neighbor TRP) with respect to SFN 0 slot 0 of the reference TRP provided by nr-DL-PRS-ReferenceInfo. For example, the SFN0-Offset (e.g., via the sfn-offset) may indicate the SFN offset (e.g., in number of subframes/frames/slots) at the TRP antenna location between the reference TRP (e.g., the serving NTN node) and the neighbor TRP (e.g., the neighbor NTN node).

Compared to terrestrial networks with small propagation delay (e.g., lower than 1 ms), in the NTN (e.g., see FIG. 29A) propagation delay of the service link of the serving cell (and the neighbor cells) may be large (e.g., more than 1 ms, e.g., 10 ms, or 20 ms or 300 ms). Further, in the NTN, compared to the terrestrial networks, depending on the location/position of the serving NTN node and the neighbor NTN node, the wireless device may experience large (e.g., greater than 1 ms, e.g., 10 ms or 30 ms) service link propagation delay differences between cells of the NTN, e.g., between the service link of the serving NTN node and the neighbor NTN node. Moreover, compared to the terrestrial network, in the NTN, the service link propagation delay may be varying/changing, e.g., due to movement of the NTN nodes (e.g., the serving NTN node and the neighbor NTN node).

Based on some wireless communications, by (only) knowing the TRP location information (e.g., the geographical coordinates of/for the reference/serving TRP and the neighbor TRPs) based on the TRP information exchange procedure, the location server may incorrectly configure the DL-PRS resources (of the DL PRS resource set) of the neighbor cell(s) (e.g., neighbor TRPs/NTN nodes). The wireless device may fail to (accurately) measure/receive the DL-PRS resources of (of the DL PRS resource set) the neighbor cell(s) (e.g., neighbor TRPs/NTN nodes) as the wireless device may, based on the SFN0-Offset (of the configured the DL-PRS resources) and the beginning/starting/initial/earliest of the radio frame #0 of/associated with the assistance TRP, determine/identify mistakenly a beginning/starting/initial/earliest of a closest subsequent radio frame #0 of the neighbor TRP. Improvements in the LPP/NRPPa procedures may improve the efficiency of the positioning procedure by allowing the location server to properly configure the one or more PRS configuration parameters (e.g., the DL PRS assistance data).

In at least some wireless communications, accurate measurement and/or reception of reference signals may be important for maintaining effective network performance. However, a plurality of challenges may emerge, for example, in dynamic environments such as non-terrestrial networks (NTNs). For example, a wireless device may fail to measure and/or receive one or more reference signals and/or resources from one or more neighbor cell(s). For example, the wireless device may fail to measure and/or receive one or more downlink positioning reference signal (DL-PRS) resources of a DL RPS resource set from one or more neighbor transmission reception points (TRPs)/NTN nodes. The wireless device may fail to measure/receive the one or more reference signals and/or resources, for example, due to movement of one or more nodes, such as NTN nodes (e.g., serving NTN node and/or neighbor NTN node). For example, timing information (e.g., configured SFN0-Offset(s)) that may be set, such as by a location server using a fixed/constant value, may be inadequate to properly configure the reference signal and/or resources from one or more neighbor TRPs/NTN nodes, which may be non-stationary.

Improvements in the positioning procedure as described herein (such as performed by a wireless device) may improve the efficiency of the positioning procedure by allowing the wireless device to adjust for the movement of one or more base stations, such as NTN nodes (e.g., the serving NTN node and the neighbor NTN node), for measuring/receiving reference signals and/or resources (e.g., DL-PRS resources of the DL PRS resource set) from one or more neighbor cell(s) (e.g., neighbor TRPs/NTN nodes).

Examples described herein may be related to an approach for configuring DL PRS assistance data (e.g., SFN0-Offsets) of the reference TRP/serving NTN node and/or neighbor TRPs/neighbor NTN nodes by the location server, for example, based on service link propagation delay differences of cells of the NTN and/or a coarse location information of the wireless device. Examples described herein may be related to an approach for adjusting SFN0-Offsets of the reference TRP/serving NTN node and/or neighbor TRPs/neighbor NTN nodes by the wireless device, for example, based on the service link propagation delay differences of cells of the NTN. These and other features of the present disclosure are described further herein.

A wireless device may (e.g., during the ongoing LPP session between the location server and the wireless device and/or the ongoing positioning procedure) transmit/send/report, at least one service link propagation delay difference (e.g., at least one value) between cells of the NTN (e.g., corresponding to one or more NTN nodes of the NTN) via a message (e.g., LPP provide/request assistance data message) to the location server.

The wireless device may receive, from the base station, one or more NTN configuration parameters (NTN-config(s)), e.g., the NTN assistance information. The wireless device may, using/based on the one or more NTN configuration parameters, measure/determine/calculate one or more service link propagation delay differences between the cells of the NTN (e.g., corresponding to one or more NTN nodes of the NTN). For example, based on communicating with the location server via (a serving cell of the NTN) and/or determining the positioning procedure is related to the measuring DL-PRS resources via at least two cells of the NTN, the wireless device may transmit/send/report, during the LPP session, the at least one service link propagation delay difference to the location server. For example, based on communicating with the location server via (a serving cell of the NTN) and/or determining the positioning procedure is related to the measuring DL-PRS resources via at most one cell of the NTN, the wireless device may avoid/refrain from transmitting/sending/reporting, during the LPP session, the at least one service link propagation delay difference to the location server. For example, based on communicating with the location server via the terrestrial network and/or determining the positioning procedure is related to the measuring DL-PRS resources via the terrestrial network, the wireless device may refrain from transmitting/sending/reporting, during the LPP session, the at least one service link propagation delay difference (e.g., at least one value) via the message to the location server.

The wireless device may receive, from the location server, a first message (e.g., LPP request capabilities message) of the LPP messages comprising a first capability indication. The first capability indication may correspond to whether the wireless device has a capability of measuring (or reporting) service link propagation delay differences between the cells of the NTN. For example, the wireless device may transmit/send/report, to the location server and based on (e.g., in response to) the first message indicating the first capability indication, a second message (e.g., an LPP provide capabilities message) of the LPP messages comprising a first capability. The first capability may indicate (whether) the wireless device has the capability of measuring (or reporting) service link propagation delay differences between the cells of the NTN.

The wireless device may, based on (e.g., in response to) the first message, transmit to the location server the at least one value via the second message. The second message may be the LPP provide assistance data message or the LPP request assistance data message or the LPP provide capabilities message. For example, based on the wireless device not supporting/having the capability of measuring (or reporting) service link propagation delay differences between the cells of the NTN (e.g., corresponding to serving NTN node and neighbor NTN nodes), the wireless device may, e.g., during the LPP session between the wireless device and the location server, refrain from transmitting/sending/reporting, to the location server, the at least one service link propagation delay difference (e.g., at least one value) between the cells of the NTN.

The wireless device may receive, from the location server (LMF), a first message (e.g., LPP request/provide assistance data message), indicating/requesting reporting at least one service link propagation delay difference (e.g., at least one value) between the cells of the NTN (e.g., corresponding to serving NTN node and neighbor NTN nodes to the location server). For example, the wireless device may, based on (e.g., in response to) the first message, measure/determine the at least one service link propagation delay difference (e.g., at least one value). The wireless device may transmit/send/report the at least one service link propagation delay differences (e.g., at least one value) via a second positioning message (e.g., LPP provide/request assistance data message) to the location server.

The wireless device may receive, from a location server (LMF), a first message (e.g., LPP provide assistance data message) comprising DL-PRS assistance data. The DL-PRS assistance data may indicate/configure/comprise one or more first time offsets (e.g., SFNO-Offset(s)) corresponding to reference TRP/serving NTN node and/or neighbor TRPs/NTN nodes. For example, the wireless device may determine/calculate/obtain one or more second time offsets based on one or more NTN configuration parameters (NTN-config(s)). For example, each time offset of the one or more second time offset may be based on service link propagation delay difference between the serving NTN node (e.g., serving cell/reference TRP) and neighbor NTN node/cell/TRP. The wireless device may determine SFN 0 slot 0 of each neighbor NTN node/TRP with respect to SFN 0 slot 0 of the serving NTN/reference TRP based on the one or more second time offsets and/or the one or more first time offsets. For example, the wireless device may determine SFN 0 slot 0 of a neighbor NTN node/TRP with respect to SFN 0 slot 0 of the serving NTN/reference TRP based on a time offset of the one or more second time offsets that corresponds to the neighbor NTN node. For example, the wireless device may determine SFN 0 slot 0 of a neighbor NTN node/TRP with respect to SFN 0 slot 0 of the serving NTN/reference TRP based on a time offset of the one or more first time offsets that corresponds to the neighbor NTN node. The wireless device may measure/receive DL-PRS resource set(s) (e.g., DL-PRS resources of the neighbor NTN node indicated by the DL-PRS assistance data) of the neighbor NTN node based on the (determined) SFN 0 slot 0 of a neighbor NTN node/TRP.

The location server (e.g., LMF) may, e.g., during the ongoing positioning session between the wireless device and the location server (and/or during the ongoing positioning procedure), receiving from an endpoint (e.g., the wireless device or the base station) the at least one service link propagation delay difference (e.g., at least one value) of at least one service link of the NTN, e.g., via a first message. The first message may be an LPP message (e.g., LPP provide/request assistance data message and/or LPP provide capabilities message) of the LPP messages. The first message may be an NRPPa message of NRPPa messages. For example, the location server may, based on (e.g., in response to) the first message, determine/calculate the one or more first time offsets (e.g., SFNO-Offset(s)) of DL-PRS assistance data of reference TRP/NTN node and/or neighbor TRPs/NTN nodes. The location server may transmit the DL-PRS assistance data (comprising the one or more first time offsets) to the endpoint (e.g., via the LPP messages to the wireless device and/or via the NRPPa messages to the base station). The endpoint may perform the positioning procedure based on the DL-PRS assistance data.

The location server may receive from the endpoint (e.g., the wireless device and/or the base station) a first message (e.g., an LPP message or an NRPPa message of the NRPPa messages) indicating the wireless device has a capability of measuring (or reporting) service link propagation delay differences between the cells of the NTN. For example, the location server may, e.g., based on the first message, transmit to the endpoint a second message (e.g., an LPP message of the LPP messages, e.g., the LPP request assistance data message and/or an NRPPa message of the NRPPa messages), indicating/requesting reporting at least one service link propagation delay difference (e.g., at least one value) corresponding to serving NTN node and neighbor NTN nodes.

The location server (e.g., LMF) may, e.g., during the ongoing positioning session between the wireless device and the location server (and/or during the ongoing positioning procedure), receiving from the endpoint (e.g., the wireless device or the base station) the coarse location information of the wireless device (e.g., at least one value), e.g., via a first message. The first message may be an LPP message (e.g., LPP provide/request assistance data message and/or LPP provide capabilities message) of the LPP messages. The first message may be an NRPPa message of NRPPa messages. For example, the location server may, based on (e.g., in response to) the first message (e.g., the coarse location information of the wireless device), determine/calculate the one or more first time offsets (e.g., SFNO-Offset(s)) of DL-PRS assistance data of reference TRP/NTN node and/or neighbor TRPs/NTN nodes. The location server may transmit the DL-PRS assistance data (comprising the one or more first time offsets) to the endpoint (e.g., via the LPP messages to the wireless device and/or via the NRPPa messages to the base station). The endpoint may perform the positioning procedure based on the DL-PRS assistance data.

The location server may receive from the endpoint (e.g., the wireless device and/or the base station) a first message (e.g., an LPP message of the LPP messages or an NRPPa message of the NRPPa messages) indicating the wireless device has a capability of measuring (or reporting) the coarse location information of the wireless device. For example, the location server may, e.g., based on the first message, transmit to the endpoint a second message (e.g., an LPP message of the LPP messages, e.g., the LPP request assistance data message and/or an NRPPa message of the NRPPa messages), indicating/requesting reporting the coarse location information of the wireless device to the location server and/or the base station.

The base station may, e.g., during the ongoing positioning session between the wireless device and the location server (and/or during the ongoing positioning procedure), receiving from the wireless device the at least one service link propagation delay difference (e.g., at least one value) of at least one service link of the NTN, e.g., via a first message. The first message may be an RRC message (e.g., UEassistanceInformation message). For example, the base station may, for example, based on (e.g., in response to) the first message transmit (e.g., via an NRPPa message of the NRPPa messages) the at least one service link propagation delay difference (e.g., at least one value) of at least one service link of the NTN. The location server may determine/calculate the one or more first time offsets (e.g., SFNO-Offset(s)) of DL-PRS assistance data of reference TRP/NTN node and/or neighbor TRPs/NTN nodes based on the at least one service link propagation delay difference (e.g., at least one value) of at least one service link of the NTN.

The base station may receive from the location server a first message (e.g., an NRPPa message of NRPPa messages) indicating/requesting (or triggering) the service link propagation delay differences corresponding to serving NTN node and neighbor NTN nodes to the location server. For example, the base station may, e.g., based on the first message, transmit to the wireless device a second message (e.g., an RRC message of the at least one RRC message), configuring/indicating/requesting reporting the at least one service link propagation delay difference (e.g., at least one value) corresponding to serving NTN node and neighbor NTN nodes.

The base station may, e.g., during the ongoing positioning session between the wireless device and the location server (and/or during the ongoing positioning procedure), receiving from the wireless device the coarse location information of the wireless device (e.g., at least one value), e.g., via a first message (e.g., an RRC message, e.g., measurement report message). For example, the base station may, based on (e.g., in response to) the first message (e.g., the coarse location information of the wireless device), transmit to the location server (e.g., via a second message, e.g., an NRPPa message of the NRPPa messages) the coarse location information of the wireless device. The location server may determine/calculate the one or more first time offsets (e.g., SFNO-Offset(s)) of DL-PRS assistance data of reference TRP/NTN node and/or neighbor TRPs/NTN nodes based on the coarse location information of the wireless device.

The base station may (e.g., from the location server) receive a first message (e.g., an NRPPa message of the NRPPa messages) indicating/requesting/triggering reporting the coarse location information of the wireless device to the location server. For example, the base station may, e.g., based on the first message, send (e.g., transmit) to the wireless device, a second message (e.g., an RRC message of the at least one RRC messages, e.g., the UEinformationRequest message and/or ReportConfigNR message), indicating/requesting/triggering reporting the coarse location information of the wireless device to the location server and/or the base station.

As described herein, a plurality of reference signals and parameters may be used for positioning and/or timing for communications between devices in a communication network. For example, a wireless device may receive and/or measure time differences of received reference signals from a reference TRP/NTN node and at least one neighboring TRP/NTN node. The wireless device may send, to a computing device (e.g., such as a location and/or management server), the time differences. The computing device may configure first timing information. The first timing information may comprise one or more time offsets (e.g., SFNO-Offset(s)) of DL-PRS assistance data of the reference TRP/NTN node and/or the at least one neighboring TRPs/NTN node, for example, based on the time differences sent from the wireless device and/or the coarse location information of the wireless device. The wireless device may receive, from the computing device, the first timing information. The wireless device may determine/calculate/obtain second timing information (e.g., SFN 0 slot 0 of each neighboring NTN node/TRP with respect to SFN 0 slot 0 of the serving NTN/reference TRP), for example, based on the first timing information (e.g., a delay between the reference TRP/NTN node and the at least one neighboring TRP/NTN node). For example, the wireless device may more accurately determine time(s) to receive reference signals for positioning. Based on the time differences and the reporting the time differences by the wireless device, positioning and/or timing information may be improved for a communication network, such as a non-terrestrial network.

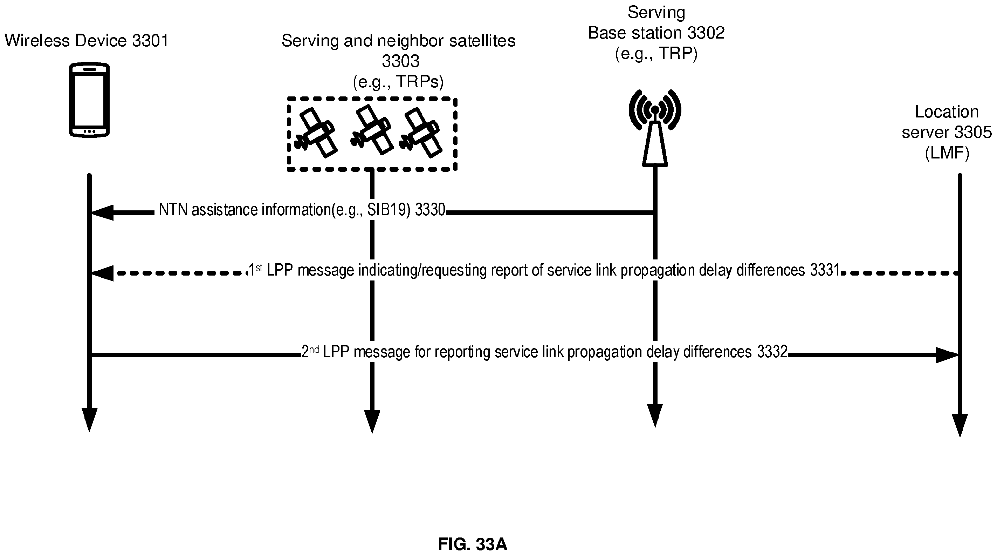

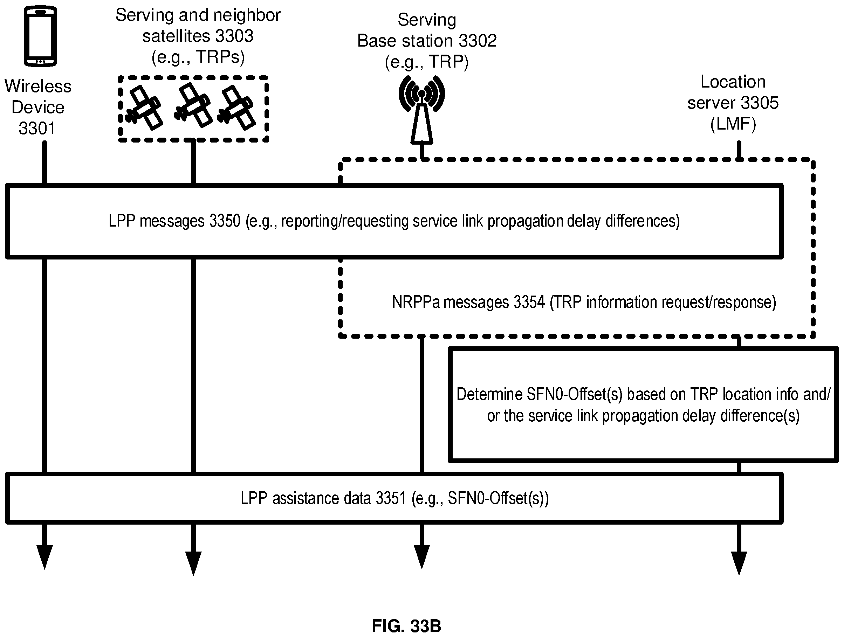

FIG. 33A and FIG. 33B shows examples of LPP assistance data procedure. The LPP assistance data procedure may be for configuring the one or more positioning PRS configuration information (e.g., the NR-DL-PRS-AssistanceData) of the reference TRP (and/or the serving NTN node) and/or the neighbor TRPs (and/or neighbor NTN nodes). The location server and the (serving) base station may communicate/exchange the NRPPa messages (e.g., as part of the TRP information exchange procedure). The base station may send/transmit the TRP location information of plurality of NTN nodes (e.g., the serving NTN node and/or the neighbor NTN nodes). The serving NTN node may correspond to the serving cell and/or the reference TRP. The neighbor NTN nodes may correspond to the neighbor cells (e.g., non-serving cells) and/or neighbor TRPs. In some cases, at least one neighbor NTN node of the neighbor NTN nodes correspond to the serving cell and/or the reference TRP (e.g., each neighbor NTN node of the at least one neighbor NTN node may be (or associated be) an ARP of the reference TRP).

As shown in FIG. 33A, a wireless device 3301 may receive from a base station 3302 (e.g., via the NTN) the NTN assistance information 3330 (e.g., NTN-config(s) of the serving cell/NTN node and/or the neighbor NTN nodes/cells). The wireless device 3301 may, based on the NTN assistance information 3330, may determine/calculate one or more (service link) propagation delay differences of the NTN. The wireless device 3301 may be in an RRC active state (e.g., RRC_ACTIVE) or an RRC inactive state (e.g., RRC_INACTIVE) or an RRC idle state (e.g., RRC_IDLE).

As shown in FIG. 33A, the wireless device 3301 may transmit/send a second LPP message 3332 of the LPP messages (e.g., the LPP provide/request assistance data message) to the location server. The second LPP message 3332 may comprise (or indicate to the location server) the at least one value. The at least one value may correspond to the NTN. The at least one value may correspond to the cells of the NTN (e.g., the serving cell of the NTN and/or the neighbor cells of the NTN). The at least one value may be based on the NTN assistance information. The at least one value may, for example, be based on service link propagation delays between the cells of the NTN (e.g., service link propagation delays between the serving cell/NTN node and the neighbor NTN nodes/cells). The at least one value may, for example, be based on feeder link propagation delays of cells of the NTN (e.g., the serving cell/NTN node and/or the neighbor NTN nodes/cells). The at least one value may comprise/be at least one (service link) propagation delay difference (e.g., between the serving cell of the NTN and a neighbor cell of the NTN) of the one or more (service link) propagation delay differences between the cells of the NTN.

The wireless device 3301 may send (e.g., transmit) the second LPP message during the (ongoing) positioning session (e.g., the ongoing LPP session) and/or the (ongoing) positioning procedure. For example, the wireless device may transmit/send (in response to/based on/after a first LPP message from the location server) the second LPP message of the LPP messages. The second LPP message may be for reporting the at least one value to the location server. Based on the positioning procedure comprising (or being) the Multi-Round Trip Time Positioning (and/or multiple satellites measurements/positioning), the wireless device may transmit the second LPP message to the location server. If the wireless device performs the positioning in the NTN, the wireless device may transmit the second LPP message to the location server. If the wireless device performs the positioning in the NTN by measuring the DL PRS resources/resource sets of the serving cell of the NTN and at least one neighbor cell of the neighbor cells of the NTN, the wireless device may transmit the second LPP message to the location server. If the wireless device performs the positioning in the NTN by transmitting SRS resources/resource sets via the serving cell of the NTN and the at least one neighbor cell of the neighbor cells of the NTN, the wireless device may transmit the second LPP message to the location server.

As shown in FIG. 33A and/or FIG. 33B, the wireless device 3301 may receive from the location server 3305 (e.g., LMF) a first LPP message of the LPP messages (e.g., the LPP request assistance data message). Compared to the legacy systems (see, e.g., FIG. 17B) that the wireless device may transmit the LPP request assistance data message to the location server (e.g., as part of the LPP assistance data operation/procedure), based on examples of FIG. 33A and/or FIG. 33B, the location server may transmit the LPP request assistance data message to the wireless device. The first LPP message may be for requesting a report of the at least one value to the location server. For example, the first LPP message may request (trigger) the wireless device to report/transmit the at least one value to the location server. For example, the first message may be the LPP request assistance data message. For example, the second message may be the LPP provide assistance data message. For example, the first message may be the LPP request capabilities message. For example, the second message may be the LPP provide capabilities message. For example, based on the LPP messages of the FIG. 33A, the location server may request from the wireless device extra assistance data (e.g., the at least one value) corresponding to the TRP information exchange procedure. The extra assistance data may not be available at the base station 3302 and/or the location server 3305. The extra assistance data may correspond to the NTN (e.g., not be applicable to the terrestrial network).

The first LPP may indicate a list of TRPs (or a list of NTN nodes). The list of TRPs/NTN nodes may be based on the plurality of NTN nodes (of the TRP location information). The wireless device may measure/determine/calculate each value of the at least one value based on the NTN assistance data (e.g., the SIB 19 and/or the SIBpos, e.g., the positioning SIB), e.g., the NTN-config of the serving cell and/or the NTN-configs of the neighbor cells (e.g., corresponding to the list of TRPs/NTN nodes). The neighbor cells may comprise the first neighbor cells and/or the second neighbor cells.

The wireless device 3301 may measure/determine/calculate each value of the at least one value based on the NTN assistance data, e.g., the NTN-config of the serving cell and/or the NTN-configs of the second neighbor cells (e.g., if the list of NTN nodes/TRPs not being indicated to the wireless device). For example, the wireless device may measure/determine/calculate each value of the at least one value based on the NTN assistance data, e.g., the NTN-config of the serving cell and/or the NTN-configs of the first neighbor cells (e.g., if the second neighbor cells not being indicated to the wireless device).

Each value of the at least one value may correspond to each service link of the NTN (or each cell of the NTN). For example, a first value of the at least one value may correspond to a first service link of the serving NTN node (or a first cell of the NTN). A second value of the at least one value may correspond to a second service link of the neighbor NTN node (or a second cell of the NTN). The wireless device may determine/measure the first value based on the NTN-config (e.g., ephemeris data and/or ta-info and/or Kmac of the NTN-config) of the serving cell and/or (GNSS) location information of the wireless device. The wireless device may determine/measure the second value based on the NTN-config (e.g., ephemeris data and/or ta-info and/or Kmac of the NTN-config) of the neighbor cell corresponding to the neighbor NTN node and/or location information of the wireless device.

Each value of the at least one value may indicate the service link propagation delay difference between the serving cell (or the serving NTN node or the reference TRP) and each neighbour cell (or each neighbor NTN node or each neighbor TRP) included in neighbor cells, e.g., neighCellInfoList. The neighbor cells may comprise the second neighbor cells and/or the first neighbor cells. A (or each) value of the at least one value may define a service link propagation delay of a neighbour cell (or each neighbor NTN node or each neighbor TRP) minus a service link propagation delay (or the serving NTN node or the reference TRP), in number of ms or slots or subframes or symbols. For example, a first/starting/earliest entry of the at least one value may correspond to a first/starting/earliest entry in the neighbor cells, e.g., neighCellInfoList. For example, a second entry of the at least one value may correspond to a second entry in the neighbor cells, e.g., neighCellInfoList.

The wireless device may determine the at least one value based on a numerology (or an SCS), e.g., 15 KHz. The one or more configuration parameters (e.g. SIB 19 or the positioning SIB) may configure/indicate the numerology. The numerology may be a default numerology (e.g., 15 KHz or 30 KHz).

Each value of the at least one value may correspond to two service links on the NTN (e.g., between two cells of the NTN). Each value of the at least one value may be a propagation delay difference between the two service links on the NTN, e.g., each value of the at least one value may include/comprise or correspond to the propagation delay difference of each neighbor cell/neighbor NTN/neighbor TRP in the neighbor cells (e.g., with respect to the reference TRP/serving cell/serving NTN node). For example, a first value of the at least one value may correspond to the first service link of the serving NTN node (or the serving cell of the NTN) and the second service link of a first neighbor NTN node (e.g., a first neighbor cell of the NTN). The first value may be a service link propagation delay difference between the first service link of the serving NTN node and the second service link of the first neighbor NTN node (or between the first cell and the second cell). A second value of the at least one value may correspond to the first service link of the serving NTN node (or the first cell of the NTN) and a third service link of a second neighbor NTN node (or a third NTN cell of the NTN). The wireless device may determine/measure the first value based on the NTN-config (e.g., ephemeris data and/or ta-info and/or Kmac of the NTN-config) of the serving cell the NTN-config (e.g., ephemeris data and/or ta-info and/or Kmac of the NTN-config) of a first neighbor cell corresponding to the first neighbor NTN node. The second value may be a service link propagation delay difference between the first service link of the serving NTN node and the third service link of the second neighbor NTN node (or between the first cell of the NTN and the second cell of the NTN). The wireless device may determine/measure the second value based on the NTN-config (e.g., ephemeris data and/or ta-info and/or Kmac of the NTN-config) of the serving cell the NTN-config (e.g., ephemeris data and/or ta-info and/or Kmac of the NTN-config) of a second neighbor cell corresponding to the second neighbor NTN node.

As shown in FIG. 33B, the location server 3305 may, based on the TRP information exchange procedure and/or the at least one value received from the wireless device via the second LPP message, calculate/determine one or more first time offsets (or one or more first time offsets or one or more first time gaps or one or more first offsets). Each time offset of the one or more first time offsets may correspond to each NTN node (e.g., the serving NTN node or a neighbor NTN node) and/or each cell of the NTN (e.g., the serving cell and the neighbor cells of the NTN). Each time offset of one or more first time offsets may correspond to each TRP (e.g., the reference TRP or the neighbor TRP). A time offset of the one or more first time offsets may be (or correspond to) a SFN0-Offset of the NR-DL-PRS-AssistanceDataPerTRP. For example, a time offset of the one or more first time offsets may indicate/define/configure a time offset (or difference or gap), e.g., in number of frames/subframes and/or slots/symbols or in milliseconds, of the SFN0 slot 0 for a DL PRS resource set with respect to SFN0 slot 0 of reference provided by nr-DL-PRS-ReferenceInfo (e.g., the reference TRP and/or the serving NTN node and/or an NTN node associated with/corresponding to the reference TRP).

The location server 3305 may determine/calculate a first timing offset (e.g., corresponding to the serving NTN node or the reference TRP) of the one or more first time offsets equal to a first fixed number/value (e.g., y). The first fixed number/value (e.g., y) may be 0. The first fixed number/value (e.g., y) may be K-mac of the NTN-config of the serving cell. The first fixed number/value (e.g., y) may be based on propagation delay of the feeder link between the serving NTN node and the base station (of the serving cell). The first fixed number/value (e.g., y) may be based on geographical coordinates of the reference TRP and/or the serving NTN node (e.g., ephemeris data the serving NTN node).

For example, the location server 3305 may determine/calculate a second time offset (e.g., corresponding to a first neighbor NTN node or a first neighbor TRP) of the one or more first time offsets based on the first value of the at least one value (indicated by the second LPP message). The location server 3305 may, for example, determine/calculate the second time offset of the one or more first time offsets based on the geographical coordinates of the reference TRP (and/or the serving NTN node (e.g., ephemeris data the serving NTN node)) and/or geographical coordinates of the first neighbor TRP (and/or the first neighbor NTN node (e.g., ephemeris data the first neighbor NTN node)). For example, the second time offset of the one or more first time offsets may be based on the first time offset of the one or more first time offsets. In some cases, the second time offset of the one or more first time offsets may be based on Kmac of an NTN-config of the first neighbor NTN node. For example, the second time offset of the one or more first time offsets may be based on propagation delay of the feeder link between the first neighbor NTN node and the base station (of the serving cell).

The location server 3305 by calculating/determining the one or more first time offsets (e.g., based on the TRP information exchange procedure and/or the at least one value received from the wireless device via the second LPP message) may consider impact of large service link propagation delays in the NTN. For example, the location server 3305 may transmit/send a third LPP message of the LPP messages (e.g., the LPP provide assistance data) comprising the one or more first time offsets to the wireless device. The wireless device (as discussed herein with respect to FIG. 23A and FIG. 23B) may determine the DL-PRS resource set(s) corresponding to the list of TRPs/NTN nodes. Some examples of the disclosure may allow the wireless device to properly receive/measure the DL PRS resources from the reference TRP (and/or serving NTN node) and/or the neighbor TRPs (e.g., the neighbor NTN nodes). Some examples of the present disclosure may improve efficiency of the positioning procedure in the NTN.

Due to movement of the NTN nodes, the examples of FIG. 33A and/or FIG. 33B may be based on (or part of) an LPP Periodic Assistance Data Transfer with Update procedure and/or an LPP Periodic Assistance Data Transfer procedure. For example, the signaling/procedure of the FIG. 33A and/or FIG. 33B may be performed repeatedly (or periodically). In one example, the wireless device may, within a periodicity (or within each duration) from a last/latest/final report of the at least one value to the location server, measure/calculate the at least one value (and/or transmit the at least one value to the location server). For example, the wireless device may, within the periodicity (or the duration) from a last/latest/final LPP message (indicating the one or more first time offsets) received from the location server, measure/calculate the at least one value (and/or transmit the at least one value to the location server). The location server may configure the periodicity (or the length of the duration) to balance between the signaling overhead and accuracy/efficiency of the positioning procedure. The wireless device may (periodically) transmit/report the at least one value to the location server via the first LPP message of the LPP messages.

The solution allows the location server to (regularly/periodically) receive the at least one value from the wireless device. For example, the location server may determine/calculate (or update) the one or more first time offsets based on the at least one value to the location server (received via the first LPP message). Based on (e.g., in response to) the first LPP message, the location server may (periodically) transmit/send the second LPP message of the LPP messages (e.g., the LPP provide assistance data message) to update the one or more positioning PRS configuration information (e.g., the NR-DL-PRS-AssistanceData) of the reference TRP (and/or the serving NTN node) and/or the neighbor TRPs (and/or neighbor NTN nodes).

The signaling/procedure of the FIG. 33A and/or FIG. 33B may be performed based on whether at least one condition is satisfied. The wireless device may, based on the at least one condition being satisfied, transmit/report the at least one value to the location server. The at least one condition may correspond to change(s)/variation(s) of service link propagation delays (e.g., corresponding to the serving cell and the neighbor cells) due to movement of the serving/neighbor NTN nodes. For example, a third LPP message of the LPP messages may configure/indicate a threshold. For example, based on a value of the at least one value being changed (increased/decreased) more than the threshold (e.g., the at least one condition being satisfied), the wireless device may trigger reporting/transmitting the at least one value (latest available) to the location server. Based on a value of the at least one value being changed (increased/decreased) more than the threshold (e.g., the at least one condition being satisfied) compared to a last/latest reported value of the at least one value, the wireless device may report/transmit the at least one value (latest available) to the location server. The location server may configure the threshold to balance signaling overhead (e.g., for reporting the at least one value) and accuracy/efficacy of the positioning procedure. The wireless device may be enabled/configured to (directly, e.g., via the LPP messages) send/transmit to the at least one value (e.g., the (service link) propagation delay difference(s)), e.g., prior to the LPP information transfer/delivery messages (e.g., as part of the LPP assistance data procedure in FIG. 17B), to the location server.

In at least some wireless communications, the LPP provide/request capabilities message (see, e.g., FIG. 18A and/or FIG. 18B) may restrict the location server about whether the wireless device has a capability for reporting the (service link) propagation delay difference(s) or not. The examples of FIG. 33A and/or FIG. 33B may require signaling between the base station and/or the location server to enable/configure the location server to be aware of (or know) whether the wireless device has a capability for reporting the (service link) propagation delay difference(s) or not. Examples of the present disclosure may enable/configure the wireless device to (directly, e.g., via the LPP messages) inform the location server whether the wireless device has the capability for reporting the (service link) propagation delay difference(s) or not reporting.

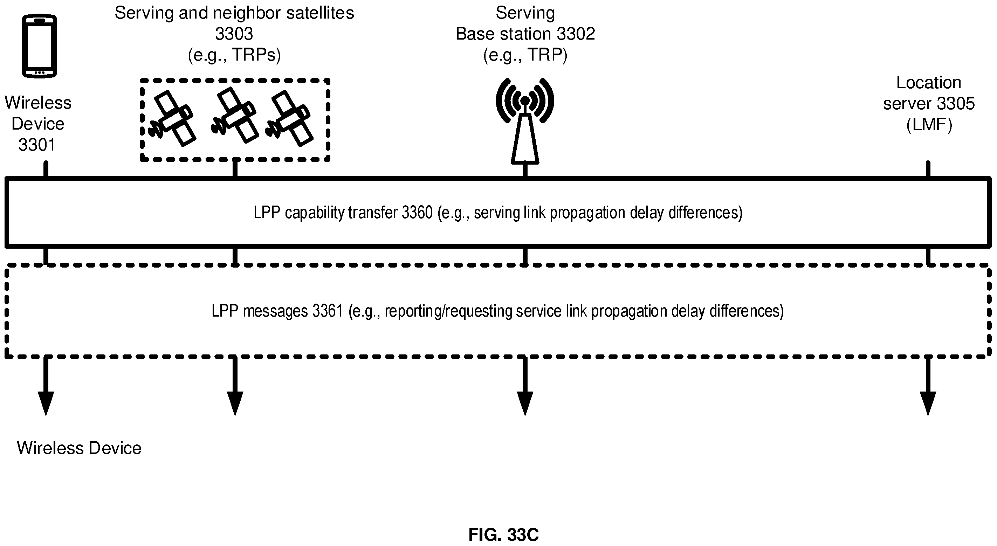

FIG. 33C shows an example of an LPP capability procedure. The LPP capability procedure may be an LPP capability transfer 3360 procedure and/or the LPP capability indication procedure. The LPP capability procedure may allow a wireless device 3301 to transmit/report a capability message (e.g., the LPP capability message) to a location server 3305. The capability message may comprise/indicate a first capability. The first capability may indicate whether the wireless device 3301 supports (or has capability of) measuring/determining the at least one value (e.g., service link propagation delay differences between the serving cell/NTN node/reference TRP and neighbor cell(s)/neighbor TRPs/neighbor NTN nodes). The first capability may, for example, indicate whether the wireless device 3301 supports (or has capability of) reporting the at least one value to the location server 3305. The capability message may further (or need to) indicate whether the wireless device 3301 has a capability of (or a support for) satellite access or NTN access (e.g., nonTerrestrialNetwork-r17).

By reporting/indicating the first capability to the location server 3305 (or base station 3302), the location server 3305 may be able to properly configure the LPP messages (e.g., for requesting the at least one value as described herein related to FIG. 33A and/or FIG. 33B). For example, based on the first capability indicating the wireless device supports (or has capability of) reporting/measuring the at least one value, the location server may request transmission/report of the at least one value. Based on the first capability not indicating the wireless device supports (or has capability of) reporting/measuring the at least one value, the location server may avoid requesting the transmission/report of the at least one value. For example, based on the first capability indicating the wireless device supports (or has capability of) reporting/measuring the at least one value, the location server may configure the DL-PRS resource(s)/resource set(s) of the neighbor TRPs/neighbor NTN nodes (e.g., allowing the wireless device to measure DL-PRS resources of the neighbor TRPs/neighbor NTN nodes), e.g., the wireless device expects to measure/receive DL-PRS resources of the neighbor TRPs/neighbor NTN nodes. Based on the first capability not indicating the wireless device supports (or has capability of) reporting/measuring the at least one value, the location server may avoid configuring/indicating the DL-PRS resource(s)/resource set(s) of the neighbor TRPs/neighbor NTN nodes, e.g., the wireless device does not expect to measure/receive DL-PRS resources of the neighbor TRPs/neighbor NTN nodes.

The first capability may be based on a second capability (e.g., serviceLinkPropDelayDiffReporting-r17). The first capability may be the second capability or may be different than the second capability. The second capability (e.g., serviceLinkPropDelayDiffReporting-r17) may indicate whether the wireless device supports the reporting of service link propagation delay difference between the serving cell and neighbor cell(s) to the base station. The second capability may correspond to (or be for) SMTCs (SSB-based Measurement Timing configuration), e.g., for measuring the SSBs of the serving/non-serving cells (e.g., the neighbor cells) in the NTN, e.g., for cell reselection/selection and/or mobility. In the contrary, the first capability may correspond to the positioning procedure (e.g., measuring DL-PRS resources of the neighbor cells) in the NTN. Based on example of FIG. 33C (e.g., indicating the first capability to the location server), the wireless device may be able to inform the location server whether the wireless device has the first capability or not (e.g.,

compared to some wireless communications that the wireless device informs the base station whether the wireless device has the second capability or not).

The base station may, via the NRPPa messages, report/transmit the second capability to the location server. The location server may, based on receiving the second capability via the NRPPa messages from the base station, determine whether to configure the DL-PRS resource(s)/resource set(s) of the neighbor TRPs/neighbor NTN nodes or not. By reporting the second capability to the location server, the location server may be able to properly configure the LPP messages (e.g., for requesting the at least one value as described herein related to FIG. 33A and/or FIG. 33B). For example, based on the second capability indicating the wireless device supports (or has capability of) reporting/measuring the at least one value, the location server may request transmission/report of the at least one value. Based on the second capability not indicating the wireless device supports (or has capability of) reporting/measuring the at least one value, the location server may avoid requesting the transmission/report of the at least one value. For example, based on the second capability indicating the wireless device supports (or has capability of) reporting/measuring the at least one value, the location server may configure the DL-PRS resource(s)/resource set(s) of the neighbor TRPs/neighbor NTN nodes (e.g., allowing the wireless device to measure DL-PRS resources of the neighbor TRPs/neighbor NTN nodes), e.g., the wireless device expects to measure/receive DL-PRS resources of the neighbor TRPs/neighbor NTN nodes. Based on the second capability not indicating the wireless device supports (or has capability of) reporting/measuring the at least one value, the location server may avoid configuring/indicating the DL-PRS resource(s)/resource set(s) of the neighbor TRPs/neighbor NTN nodes, e.g., the wireless device does not expect to measure/receive DL-PRS resources of the neighbor TRPs/neighbor NTN nodes.

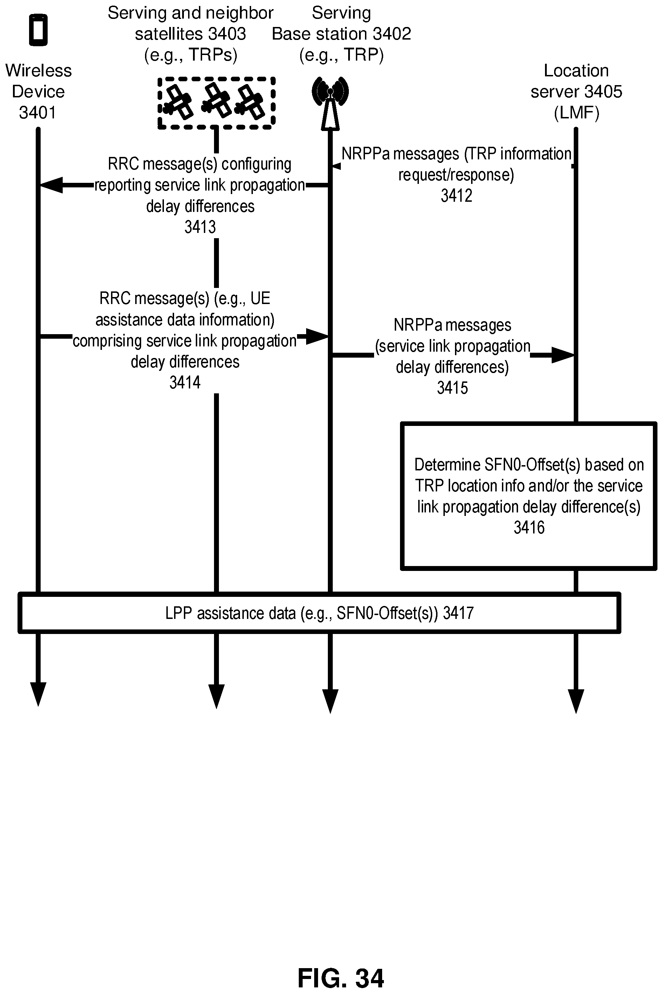

FIG. 34 shows an example of an LPP assistance data procedure. The LPP assistance data procedure is for configuring the one or more positioning PRS configuration information (e.g., the NR-DL-PRS-AssistanceData) of the reference TRP (and/or the serving NTN node) and/or the neighbor TRPs (and/or neighbor NTN nodes). A location server 3405 and the (serving) base station 3402 may communicate the NRPPa messages (e.g., as part of the TRP information exchange procedure). The base station 3402 may send/transmit the TRP location information of plurality of NTN nodes (e.g., the serving NTN node and/or the neighbor NTN nodes). The serving NTN node may correspond to the serving cell and/or the reference TRP. The neighbor NTN nodes may correspond to the neighbor cells (e.g., non-serving cells) and/or neighbor TRPs. For example, at least one neighbor NTN node of the neighbor NTN nodes correspond to the serving cell and/or the reference TRP (e.g., each neighbor NTN node of the at least one neighbor NTN node may be (or associated be) an ARP of the reference TRP).

As shown in FIG. 34, the base station 3401 may, in response to/based on the NRPPa messages (e.g., as part of the TRP information exchange procedure), send (e.g., transmit) at least one (RRC) message to a wireless device 3401. The at least one RRC messages may be for configuring the wireless device 3401 to measure and/or report the at least one value to the base station and/or to the location server 3405. Compared to some wireless communications that the base station may send (e.g., transmit )the at least one RRC messages to the wireless device for configuring the SMTCs (for measuring the SSBs), the example of FIG. 34 may allow the base station to configure the wireless device (via the at least one RRC message) based on (e.g., in response to) (as part of) the TRP information exchange procedure.

As shown in FIG. 34, the wireless device may, based on (e.g., in response to) receiving the at least one RRC message from the base station, measure/determine the at least one value. The wireless device may, for example, report/transmit the at least one value to the base station (via RRC messages or MAC CE or UCI). For example, the RRC messages comprising the at least one value may be part of wireless device assistance information (report). The wireless device may support (or indicate to the base station) the second capability indicating the capability for reporting/measuring the at least one value service link propagation delay difference between serving cell and neighbor cell(s). The base station may, via the NRPPa messages and based on (e.g., in response to) receiving the at least one value from the wireless device, report/transmit the at least one value to the location server. For example, the wireless device may, via the LPP messages and based on (e.g., in response to) the at least one RRC message, report/transmit the at least one value to the location server.

The at least one RRC message may configure a first threshold. The first threshold may be different than the threshold. The first threshold may be threshPropDelayDiff. The wireless device may, based on (e.g., in response to) the at least one condition being satisfied, measure/determine the at least one value and transmit/report the at least one value to the base station (e.g., via the UE assistance information). For example, based on a value of the at least one value being changed (increased/decreased) more than the first threshold (e.g., the at least one condition being satisfied) compared to a last/latest reported value of the at least one value, the wireless device may trigger reporting/transmitting the at least one value (latest available) and/or transmit the at least one value to the location server (e.g., via the LPP messages) and/or the base station (e.g., as part of the wireless device assistance information).

The wireless device may receive one or more messages (e.g., the at least one RRC message and/or the first LPP message of the LPP messages) configuring/enabling (or indicating to) the wireless device to provide/transmit the at least one value (e.g., the service link propagation delay difference between serving cell and neighbour cell(s)) to the base station and/or the location server. Based on determining the at least one value not being sent (e.g., transmitted) (e.g., to the base station and/or the location server) since/after the receiving the one or more messages, the wireless device may trigger reporting/transmitting the at least one value (latest available) and/or send (e.g., transmit) the at least one value to the location server (e.g., via the LPP messages) and/or the base station (e.g., as part of the wireless device assistance information). For example, for any neighbor cell in the first neighbor cells and/or the second neighbor cells the corresponding value of the at least one value (e.g., the corresponding service link propagation delay difference between serving cell/serving NTN/reference TRP and the neighbour cell/neighbor TRP/neighbor NTN node) being changed more than first threshold (e.g., threshPropDelayDiff) since the last/final transmission of the at least one value to the base station/location server, the wireless device trigger reporting/transmitting the at least one value (latest available) and/or send (e.g., transmit) the at least one value to the location server (e.g., via the LPP messages) and/or the base station (e.g., as part of the wireless device assistance information).

The base station may, via the NRPPa messages and based on (e.g., in response to) receiving the at least one value from the wireless device, report/transmit the at least one value to the location server. For example, the wireless device may, via the LPP messages and based on (e.g., in response to) the at least one RRC message, report/transmit the at least one value to the location server.

As shown in FIG. 34 and similar to example of FIG. 33A and/or FIG. 33B, the location server based on receiving the at least one value (e.g., from the base station via the NRPPa messages and/or the wireless device via the LPP messages) calculate/determine the one or more first time offsets. The location server may, via the LPP messages (e.g., LPP assistance data), send/transmit the DL PRS assistance data comprising the one or more first time offsets to the wireless device.

In at least some wireless communications, the base station may send (e.g., transmit) the at least one (RRC) message to the wireless device. The at least one RRC messages may be for configuring the wireless device to measure and/or report coarse location information to the base station. For example, the at least one RRC message may comprise a report configuration (e.g., ReportConfigNR) message (or configurations). The report configuration (e.g., the ReportConfigNR) message may specify/indicate/define criteria (or conditions or events or requirements) for triggering of a measurement reporting (e.g., an NR measurement report) event. The report configuration (e.g., the ReportConfigNR) message may specify/indicate/define criteria (or conditions or events or requirements) for triggering a handover (e.g., conditional handover, CHO) event and/or a conditional PSCell addition (CPA) event and/or a conditional PSCell change (CPC) event or of an L2 U2N relay measurement reporting event (e.g., based on SS/PBCH block or CSI-RS). For example, the criteria defined/specified by the ReportConfigNR (in the legacy systems) may comprise at least one of the following: Event A1; and/or Event A2; and/or Event A3; and/or Event A4; and/or Event A5; and/or Event A6; and/or Event D1; and/or CondEvent A3; and/or CondEvent A4; and/or CondEvent A5; and/or CondEvent D1; and/or distanceThreshFromReference2; and/or CondEvent T1; and/or Event X1; and/or Event X2; and/or Event I1; a coarse location request (e.g., coarseLocationRequest) event/condition.

In at least some wireless communications, in an NTN and for mobility (e.g., cell selection/reselection), a base station may transmit the at least one RRC messages comprising the coarse location request (e.g., coarseLocationRequest) to the wireless device. For example, the base station may use the (received/reported) coarse location information (or coarse position information or coarse location coordinates) of a wireless device for configuring the SMTCs (SSB-based Measurement Timing configuration), e.g., for measuring the SSBs of serving cell and non-serving cells. For example, the wireless device may, via an assistance TRP response (e.g., UEInformationResponse) message, transmit the coarse location information to the base station.

In at least some wireless communications, the base station may optionally indicate the coarse location request (e.g., coarseLocationRequest) event/criterion (via the at least one RRC message) to the wireless device, e.g., only for mobility procedures. There is a need to enhance/improve some wireless communications for allowing/enabling the base station to configure the wireless device with the coarse location request (e.g., coarseLocationRequest), e.g., if the wireless device is expected/requested to perform the positioning procedure (based on multiple-RTT and/or multiple-satellite measurements).

The at least one RRC messages may be for configuring the wireless device to measure and/or report the coarse location information to the base station and/or the location server (as part of the positioning procedure). Some examples of the disclosure enables/configures the wireless device to report the coarse location information to the base station (or the location server) for performing the multiple-RTT and/or multiple-satellite measurements.

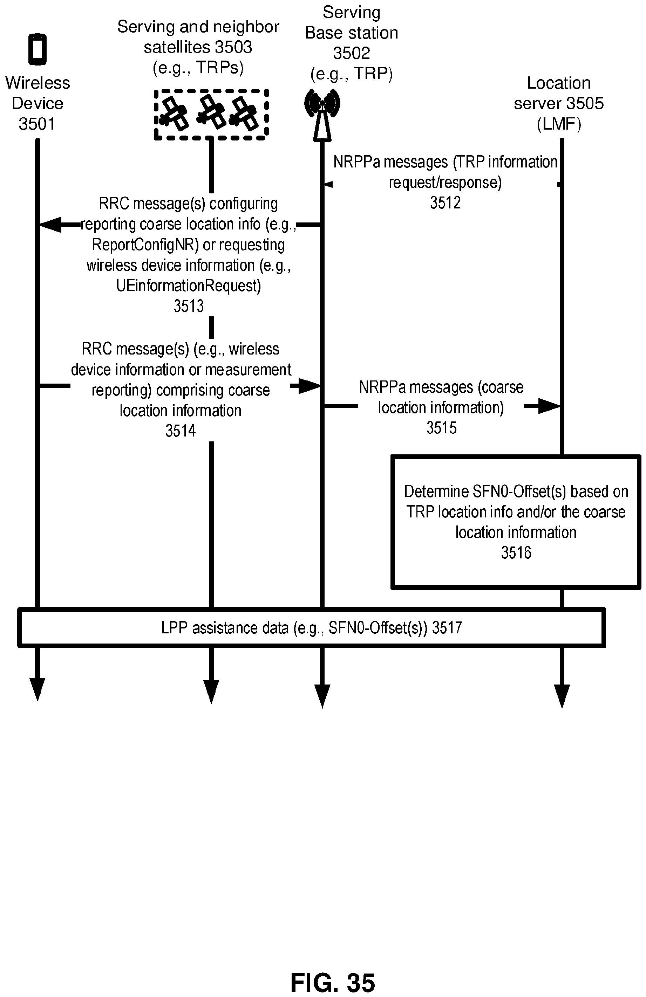

FIG. 35 shows an example of an LPP assistance data procedure. The LPP assistance data procedure is for configuring the one or more positioning PRS configuration information (e.g., the NR-DL-PRS-AssistanceData) of the reference TRP (and/or the serving NTN node) and/or the neighbor TRPs (and/or neighbor NTN nodes). The LPP assistance data procedure may allow the location server to acquire necessary information for the configuring the one or more positioning PRS configuration information (e.g., the NR-DL-PRS-AssistanceData). As shown in FIG. 35, similar to discussion herein related to FIG. 34, a location server 3505 and a (serving) base station 3502 may communicate the NRPPa messages 3512 (e.g., as part of the TRP information exchange procedure).

As shown in FIG. 35, the base station 3502 may, in response to/based on the NRPPa messages 3512 (e.g., as part of the TRP information exchange procedure), send (e.g., transmit) the at least one (RRC) message 3513 to a wireless device 3501. As shown in FIG. 35, the at least one RRC message 3513 may comprise the report configuration message (e.g., the ReportConfigNR) and/or a wireless device information request message (e.g., UEinformationRequest message).

The ReportConfigNR message 3513 in the FIG. 35 may specify/indicate/define a first criterion (among the criteria) for triggering of a measurement reporting event for the positioning procedure. The first criterion may be a coarse location request (e.g., coarseLocationRequest). The example of FIG. 35 may allow/enable the base station to transmit ReportConfigNR message to the wireless device 3501 based on (e.g., in response to) the receiving the NRPPa messages (e.g., as part of the TRP information exchange procedure) from the location server. For example, the first criterion may be associated with the positioning procedure/positioning measurements and/or the measurement reporting event. For example, the first criterion may specifically be associated with the positioning procedure/positioning measurements (may not be associated with the measurement reporting event), e.g., the wireless device may only use the first criterion for sending (e.g., transmitting) wireless device information and/or measurement reporting (e.g., to the base station) as part of the positioning procedure. For example, the wireless device information may comprise the coarse location information (e.g., coarseLocationInfo).

The wireless device information may not be part of the LPP location (transfer/delivery/request) procedure(s) discussed herein as part of the examples of FIG. 17B. For example, the wireless device information may indicate/provide assistance information (e.g., the coarse location information and/or the service link propagation delay differences) to the base station and/or the location server for configuration of the (LPP) assistance data message. The coarse location information may be different than an estimate of the location of the wireless device that the wireless device may send (e.g., transmit) to the location server via the LPP provide location information message of the LPP location (transfer/delivery/request) procedure(s).

The wireless device information request message may indicate/comprise a first request. The first request may be a coarse location request (e.g., coarseLocationRequest). The wireless device may determine the first request filed of the wireless device information request message (e.g., the coarse location request (e.g., coarseLocationRequest) of the wireless device information request message) being set to true. The wireless device may, based on (e.g., in response to) receiving the wireless device information request message (e.g., comprising the first request with value true), send (e.g., transmit) the wireless device information comprising the coarse location information to the base station. The example of FIG. 35 may allow/enable the base station to send (e.g., transmit) wireless device information request message (indicating the first request, e.g., with value true) to the wireless device based on (e.g., in response to) the receiving the NRPPa messages (e.g., as part of the TRP information exchange procedure) from the location server. For example, the first request may be associated with the positioning procedure/positioning measurements (e.g., the first criterion) and/or the measurement reporting event (e.g., the coarse location request). For example, the first request may specifically be associated with the positioning procedure/positioning measurements (may not be associated with the measurement reporting event), e.g., the wireless device may only use the first request for sending (e.g., transmitting) the wireless device information and/or measurement reporting (e.g., to the base station) as part of the positioning procedure.

The at least one value may be the coarse location information of the wireless device (e.g., coarseLocationInfo). The wireless device may, depending on/based on the purpose of the positioning procedure, determine/calculate the coarse location information. For example, based on the positioning procedure being part of the location verification procedure, the wireless device may set/determine a least significant bits of degreesLatitude and degreesLongitude of the coarse location information to 0 to meet the accuracy requirement corresponds to a granularity of approximately D km (e.g., D=5 km, and/or D=10 km and/or D=15 km). Based on the positioning procedure not being part of the location verification procedure (e.g., being part of mobility or TA adjustment or the like), the wireless device may set/determine a least significant bits of degreesLatitude and degreesLongitude of the coarse location information to 0 to meet the accuracy requirement corresponds to a granularity of approximately d km (e.g., d=1 km, and/or d=100 m and/or d=20 m). It may be up to wireless device implementation how many LSBs are set to 0 to meet the accuracy requirement.

The base station may, via the NRPPa messages and based on (e.g., in response to) receiving the at wireless device information message (comprising the coarse location information of the wireless device) from the wireless device, report/transmit the coarse location information to the location server. For example, the wireless device may, via the LPP messages and based on (e.g., in response to) the at least one RRC message, report/transmit the coarse location information to the location server. As shown in FIG. 35 and similar to example of FIG. 33B and/or FIG. 34, the location server based on receiving the coarse location information of the wireless device (e.g., from the base station via the NRPPa messages and/or the wireless device via the LPP messages) calculate/determine the one or more first time offsets. The location server may, via the LPP messages (e.g., LPP assistance data), send/transmit the DL PRS assistance data comprising the one or more first time offsets to the wireless device.

Compared to some wireless communications that the base station may send (e.g., transmit) the at least one RRC messages (comprising the coarse location request (e.g., coarseLocationRequest)) to the wireless device for configuring the SMTCs (SSB-based Measurement Timing configuration), e.g., for measuring the SSBs of serving cell and non-serving cells, the example of FIG. 35 allows/enables the base station to configure the wireless device (via the at least one RRC message comprising the coarse location request), e.g., based on (e.g., in response) to (as part of) the TRP information exchange procedure, to report/transmit the coarse location information to the base station and/or the location server.

In at least some wireless communications, the LPP provide/request capabilities message (see, e.g., FIG. 18A and/or FIG. 18B) may restrict the location server to know whether the wireless device has the capability for reporting the coarse location information or not. The examples of FIG. 35 may require signaling between the base station and/or the location server to enable the location server to be aware of (or know) the coarse location information of the wireless device. Solutions that may allow the location server to be aware of (or know) the coarse location information of the wireless device via the LPP procedures/messages may be desirable for reducing the signaling overhead and/or reducing delay in acquiring the assistance data from the wireless device.

The wireless device may be enabled to (directly, e.g., via the LPP messages) inform the location server whether the wireless device has the capability for reporting the coarse location information or not. The wireless device may be enabled to (directly, e.g., via the LPP messages) send/transmit to the location server coarse location information of the wireless device prior to the LPP information transfer/delivery messages (e.g., as part of the LPP assistance data procedure in FIG. 17B). For example, "serving NTN node" may refer to, for example, a "reference NTN node" or "assistance data reference NTN node" or "serving cell of the NTN" or "reference TRP" or "assistance data reference TRP". For example, "neighbor NTN node" may refer to, for example, a "non-reference NTN node" or "non assistance data reference NTN node" or "neighbor cell of the NTN" or "neighbor TRP" or "non assistance data reference TRP". For example, "performing the positioning procedure" may refer to, for example, "measuring/receiving DL PRS resources/resources sets configured by the DL PRS assistance data" and/or "transmitting SRS resources/resource sets configured by the one or more SRS configuration parameters". For example, "multi-satellite measurement" may refer to, for example, a "measuring DL-PRS resources/resource sets transmitted from multiple satellites". Enhancements may be provided for configuring DL-PRS assistance data in the NTN if the NTN nodes/satellite are moving. Signaling (e.g., LPP messages) between the wireless device and the location server may be allowed for requesting/providing (service link) propagation delay differences corresponding to at least two NTN nodes/TRPs. The location server may be allowed to configure DL-PRS resource sets of the reference TRP and/or the neighbor TRPs based on the (service link) propagation delay differences corresponding to at least two NTN nodes/TRPs.

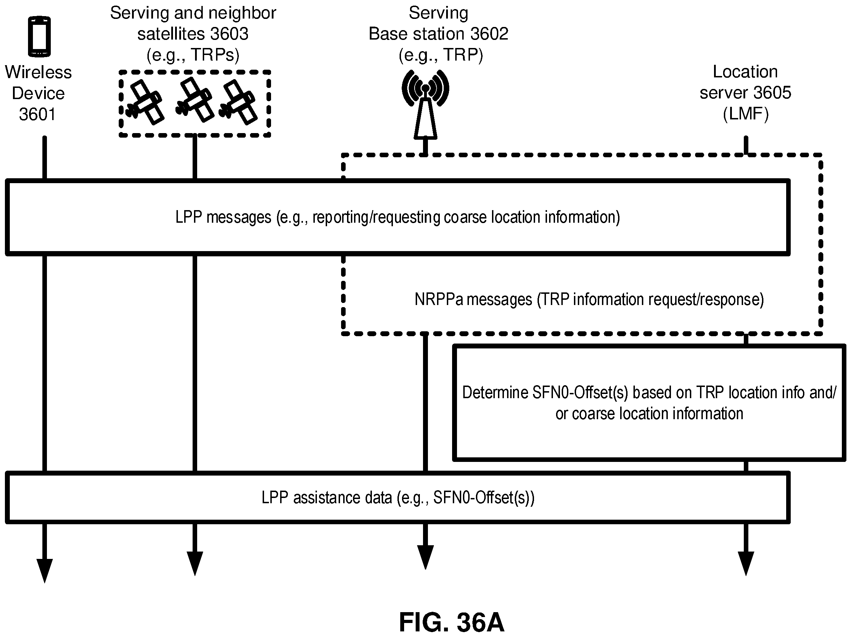

FIG. 36A shows an example of an LPP procedure for coarse location information reporting from a wireless device 3601 to a location server. Signaling/procedure/call flow of FIG. 36A may be similar to signaling/procedure/call flow described herein related to FIG. 33A and/or FIG. 33B. For example, a wireless device 3601 may, via the LPP messages, send/transmit/report the at least one value (e.g., the coarse location information of the wireless device 3601) to a location server 3605. The location server 3605 may, based on (e.g., in response to) the coarse location information of the wireless device and/or the TRP location information (as part of the TRP information exchange procedure), determine/calculate the one or more first time offsets (e.g., SFNO-Offset(s)). The location server may, based on the coarse location information of the wireless device and/or the TRP location information (as part of the TRP information exchange procedure), determine/calculate the service link propagation delay differences between NTN nodes of the neighbor cells and/or the serving cell to calculate the one or more first time offsets (e.g., SFNO-Offset(s)). Compared to examples of FIG. 33A and/or FIG. 33B, signaling overhead of example of FIG. 36A may be smaller. A disadvantage of the example of FIG. 36A may be that the coarse location information may not indicate sufficiently accurate information for configuration of the DL-PRS assistance data (e.g., the one or more DL PRS configuration parameters).

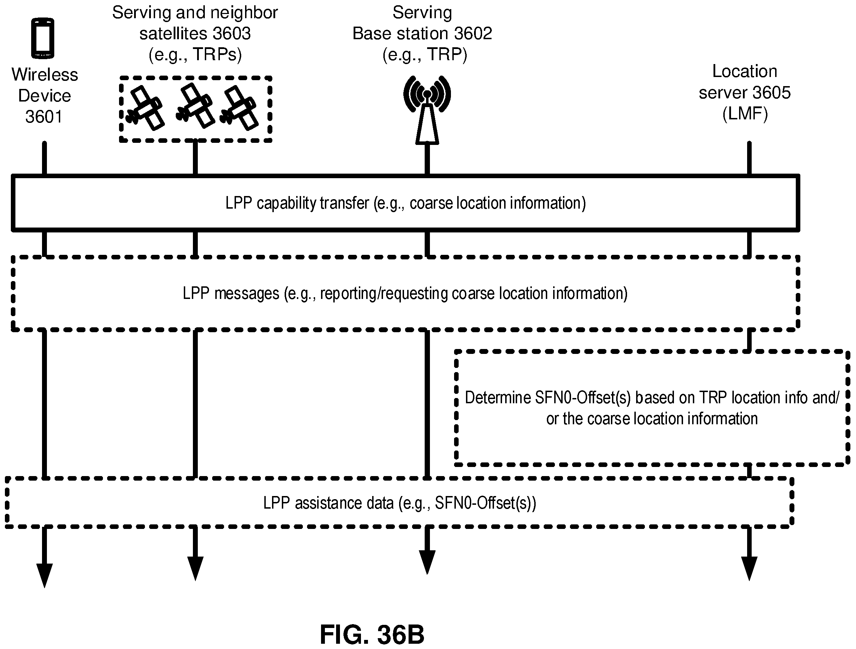

FIG. 36B shows an example of an LPP capability procedure for coarse location information reporting from a wireless device 3601 to a location server 3605. The LPP capability procedure may be the LPP capability transfer procedure and/or the LPP capability indication procedure. The LPP capability procedure may allow the wireless device 3601 to send/transmit/report a capability message (e.g., the LPP capability message) to the location server 3605. The capability message may comprise/indicate a third capability. The third capability may indicate whether the wireless device supports (or has capability of) measuring/determining the coarse location information of the wireless device (e.g., via/based on GNSS signals or terrestrial network signals). The third capability may, for example, indicate whether the wireless device supports (or has capability of) reporting the at least one value (e.g., the coarse location information) to the location server.

By reporting/indicating the third capability to the location server 3605 (or base station 3602), the location server 3605 may be able to properly configure the LPP messages (e.g., for requesting the at least one value, e.g., the coarse location information of the wireless device, as described herein related to FIG. 36A and/or FIG. 33A). For example, based on the third capability indicating the wireless device supports (or has capability of) reporting/measuring the at least one value (e.g., the coarse location information of the wireless device), the location server may request transmission/report of the at least one value (e.g., the coarse location information of the wireless device). Based on the third capability not indicating the wireless device supports (or has capability of) reporting/measuring the at least one value (e.g., the coarse location information of the wireless device), the location server may avoid requesting the transmission/report of the at least one value (e.g., the coarse location information of the wireless device). For example, based on the third capability indicating the wireless device supports (or has capability of) reporting/measuring the at least one value (e.g., the coarse location information of the wireless device), the location server may configure the DL-PRS resource(s)/resource set(s) of the neighbor TRPs/neighbor NTN nodes (e.g., allowing the wireless device to measure DL-PRS resources of the neighbor TRPs/neighbor NTN nodes), e.g., the wireless device expects to measure/receive DL-PRS resources of the neighbor TRPs/neighbor NTN nodes. Based on the third capability not indicating the wireless device supports (or has capability of) reporting/measuring the at least one value (e.g., the coarse location information of the wireless device), the location server may avoid configuring/indicating the DL-PRS resource(s)/resource set(s) of the neighbor TRPs/neighbor NTN nodes, e.g., the wireless device does not expect to measure/receive DL-PRS resources of the neighbor TRPs/neighbor NTN nodes.

The third capability may be based on a fourth capability (e.g., gnss-Location-r16 indicating whether the wireless device is equipped with a GNSS or A-GNSS receiver that may be used to provide detailed location information). The third capability may be the fourth capability or may be different than the fourth capability.

The base station 3602 may, via the NRPPa messages, report/transmit the third capability of the wireless device to the location server. The location server may, based on receiving the third capability via the NRPPa messages from the base station 3602, determine whether to configure the DL-PRS resource(s)/resource set(s) of the neighbor TRPs/neighbor NTN nodes or not. By reporting the third capability to the location server, the location server may be able to properly configure the LPP messages (e.g., for requesting the at least one value as described herein related to FIG. 36A or FIG. 33A). For example, based on the third capability indicating the wireless device supports (or has capability of) reporting/measuring the at least one value (e.g., the coarse location information of the wireless device), the location server may request transmission/report of the at least one value (e.g., the coarse location information of the wireless device) from the wireless device. Based on the third capability not indicating the wireless device supports (or has capability of) reporting/measuring the at least one value (e.g., the coarse location information of the wireless device), the location server may avoid requesting the transmission/report of the at least one value (e.g., the coarse location information of the wireless device) from the wireless device. For example, based on the third capability indicating the wireless device supports (or has capability of) reporting/measuring the at least one value (e.g., the coarse location information of the wireless device), the location server may configure the DL-PRS resource(s)/resource set(s) of the neighbor TRPs/neighbor NTN nodes (e.g., allowing the wireless device to measure DL-PRS resources of the neighbor TRPs/neighbor NTN nodes), e.g., the wireless device expects to measure/receive DL-PRS resources of the neighbor TRPs/neighbor NTN nodes. Based on the third capability not indicating the wireless device supports (or has capability of) reporting/measuring the at least one value (e.g., the coarse location information of the wireless device), the location server may avoid configuring/indicating the DL-PRS resource(s)/resource set(s) of the neighbor TRPs/neighbor NTN nodes, e.g., the wireless device does not expect to measure/receive DL-PRS resources of the neighbor TRPs/neighbor NTN nodes.

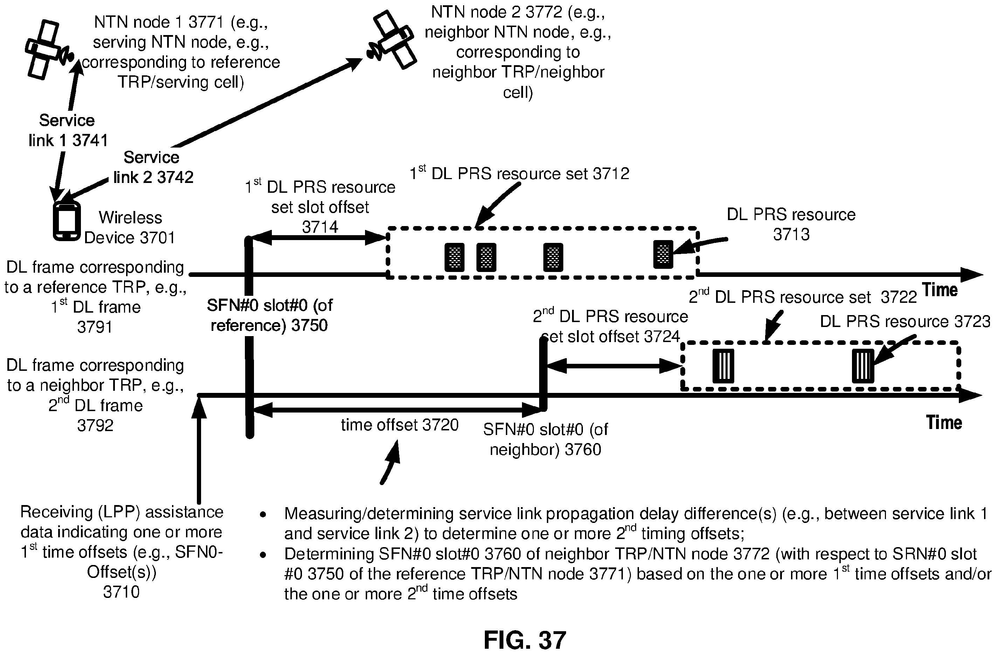

FIG. 37 shows an example of DL PRS resource set configuration in a non-terrestrial network. As shown in FIG. 37, a wireless device 3701 may communicate via (or connect to) NTN nodes (e.g., a serving NTN node 3771 and/or neighbor NTN node(s) 3772). The serving NTN node 3771 (e.g., NTN node 1 or a first NTN node) may be the reference TRP or be associated with/corresponding to the reference TRP. The serving NTN node may correspond to the serving cell. Connection of the wireless device 3701 to the first NTN node 3771 may be via a first service link 3741 (e.g., service link 1). The neighbor NTN node 3772 (e.g., NTN node 2 or a second NTN node) may be associated with/correspond to a neighbor cell of the neighbor cells (or a neighbor TRP). The neighbor NTN node 3772 may be the neighbor TRP. Connection of the wireless device 3701 to the second NTN node 3772 may be via a second service link 3742 (e.g., service link 2).

As shown in FIG. 37, the wireless device 3701 may receive from a base station (e.g., via the serving cell and/or the serving NTN node and/or the first service link), LPP messages (e.g., the LPP provide assistance data message) comprising the one or more DL-PRS configuration parameters. For example, the wireless device 3701 may receive from the base station (e.g., via the serving cell and/or the serving NTN node and/or the first service link) the one or more DL-PRS configuration parameters (e.g., the DL PRS assistance data). The one or more DL-PRS configuration parameters indicate/configure/comprise a first DL-PRS resource set 3712 corresponding to the reference TRP (and/or the serving NTN node 3771 and/or the first service link 3741) and/or a second DL-PRS resource set 3722 corresponding to the neighbor TRP (and/or the neighbor NTN node 3772 and/or the second service link 3742).

The one or more DL-PRS configuration parameters may further comprise the one or more first time offsets (e.g., SFNO-Offset(s)). Each time offset (e.g., SFNO-Offset or NR-DL-PRS-SFNO-Offset) of the one or more first time offsets may correspond to each TRP/NTN node (e.g., the first NTN node/reference TRP 3771 or the second NTN node/neighbor TRP 3772).

As shown in FIG. 37, the wireless device 3701 may, based on the one or more first time offsets, determine the time/frequency location of one or more DL-PRS resource sets (e.g., the first DL-PRS resource set 3712 with respect to a first DL frame/configuration/timing 3791 of the wireless device 3701 and/or the second DL-PRS resource set 3722 with respect to a second DL frame/configuration/timing 3792 of the wireless device 3701). The first DL frame/configuration (or timing) 3791 of the wireless device 3701 (shown in FIG. 37) may correspond to the serving NTN node 3771 (e.g., the reference TRP). The second DL frame (or configuration or timing) 3792 of the wireless device 3701 may correspond to/be associated with to the neighbor NTN 3772 (e.g., the neighbor TRP).

A time offset of the one or more first time offsets may comprise at least one parameter. The at least one parameter of the time offset of the one or more first time offsets may be a sfn-offset and/or a subframe offset (e.g., integerSubframeOffset). The sfn-offset of the time offset (e.g., SFNO-Offset) may indicate/specify an SFN offset between the reference TRP/serving NTN node 3771 and the neighbor TRP/neighbor NTN node 3772. The sfn-offset of time offset (e.g., SFNO-Offset) may indicate a number of full radio frames (or subframes/slots) counted from a beginning/starting/initial/earliest of a radio frame #0 of/associated with the reference TRP/serving NTN node 3771 to a beginning starting/initial/earliest of a closest subsequent radio frame #0 of the neighbor TRP/neighbor NTN node 3772. The integerSubframeOffset of the SFNO-Offset may specify/indicate a frame boundary offset between the reference TRP/serving NTN node 3771 and the neighbor TRP/neighbor NTN node 3772 (e.g., counted in full subframes/slots). The integerSubframeOffset of the time offset may indicate a number of full subframes/slots counted from the beginning/starting/initial/earliest of a subframe #0 of the reference TRP/serving NTN node 3771 to the beginning/starting/initial/earliest of a closest subsequent subframe #0 of the neighbor TRP/neighbor NTN node 3772.

For example, for the serving NTN node/reference TRP 3771, a corresponding time offset (e.g., SFNO-Offset or the sfn-offset and/or the subframe offset) of the one or more first time offsets may be a first fixed number (e.g., 0 or Kmac of the serving NTN node 3771). For each neighbor TRP/neighbor NTN node 3772, a corresponding time offset (e.g., SFNO-Offset or the sfn-offset and/or the subframe offset) of the one or more first time offsets may indicate a relative SFN offset with respect to a SFN#0 slot#0 3750 (or SFNO slot 0 or SFN 0) of the reference TRP/serving NTN node 3771, e.g., a time offset 3720 (e.g., in number of subframes and/or slots) of a SFN#0 slot#0 3760 for the second DL PRS resource set 3722 with respect to SFN#0 slot#0 3750 of a reference provided by nr-DL-PRS-ReferenceInfo (e.g., corresponding to the reference TRP/serving NTN node 3771). As shown in FIG. 37, the wireless device 3701 may determine SFN#0 slot#0 3760 of the neighbor TRP/neighbor NTN node 3772, for example, based on the indicated time offset 3720 of the one or more first time offsets (e.g., SFNO-offset corresponding to the neighbor TRP/neighbor NTN node 3772) and/or the at least one value.

The SFN#0 slot#0 3750 (or SFNO slot 0 or SFN 0) of the reference TRP/serving NTN node/serving cell 3771 may be a reference time (or occasion/slot/subframe/frame/symbol) of the reference TRP/serving NTN node/serving cell 3771. The SFN#0 slot#0 (or SFNO slot 0 or SFN 0) of the reference TRP/serving NTN node/serving cell 3771 may correspond to/be associated with or be an SFN initialization time (or occasion/slot/subframe/frame/symbol) of the reference TRP/serving NTN node/serving cell 3771.

The SFN#0 slot#0 3760 (or SFNO slot 0 or SFN 0) of a neighbor TRP/ NTN node/cell 3772 may be a reference time (or occasion/slot/subframe/frame/symbol) of the neighbor TRP/ NTN node/cell 3772. The SFN#0 slot#0 3760 (or SFNO slot 0 or SFN 0) of the neighbor TRP/ NTN node/cell 3772 may correspond to/be associated with or be an SFN initialization time (or occasion/slot/subframe/frame/symbol) of the neighbor TRP/ NTN node/cell 3772.

A wireless device may assume/consider that a location server uses a service link propagation delay differences of zero (or a fixed value, e.g., Kmac) for configuring the one or more first time offsets in a network, such as ain an NTN. For example, the wireless device may assume/consider that the location server does not determine the one or more first time offsets based on/using the service link propagation delay differences (e.g., the at least one value). For example, the wireless device may determine the LPP messages not requesting the wireless device to report/transmit the at least one value to the location server (during the positioning procedure).

For example, the location server may determine the one or more first time offsets based on/using the NTN assistance data, e.g., NTN-configs of the serving NTN node and the neighbor NTN nodes (e.g., the TRP location information). For example, the location server may the one or more first time offsets based on/using propagation delays of the feeder link of the serving NTN node and the neighbor NTN nodes. In yet another example, the location server may the one or more first time offsets based on/using Kmac(s) of the serving NTN node and the neighbor NTN nodes (e.g., the serving NTN node and the neighbor NTN nodes are synchronized with respect to the reference points on the feeder links). For example, the location server may know (or consider) that the reference TRP/serving base station pre-compensates a portion of corresponding feeder link propagation delay (e.g., Kmac of the corresponding NTN-config) for transmitting DL-PRS resources of the corresponding DL-PRS resource set (e.g., the first DL-PRS resource set of the reference TRP). The location server may further know (or consider) that each neighbor TRP/neighbor base station pre-compensates a portion of corresponding feeder link propagation delay (e.g., Kmac of the corresponding NTN-config) for transmitting DL-PRS resources of the corresponding DL-PRS resource set (e.g., the second DL-PRS resource set of the neighbor TRP).

For example, in the NTN, the wireless device may, based on the at least one value (e.g., service link propagation delay differences, e.g., between the first service link and the second service link or between the first cell and the second cell of the NTN), determine the time/frequency location of the one or more DL-PRS resource sets. The wireless device may determine the at least one value based on service link propagation delays (between the serving NTN node/cell and/or the neighbor NTN nodes/cells). The wireless device may, for example, determine the at least one value based on feeder link propagation delays (between the serving NTN node/cell and/or the neighbor NTN nodes/cells). In other examples, the wireless device may, for example, determine the at least one value based on common propagation delays/TAs (of the serving NTN node and/or the neighbor NTN nodes). The wireless device may determine common propagation delays/TAs (of the serving NTN node and/or the neighbor NTN nodes) based on the NTN assistance information (e.g., ta-Info(s) of the NTN-config(s)).

As shown in FIG. 37, a wireless device 3701 may determine one or more second time offsets, for example, based on/using the NTN assistance data (e.g., of the serving cell (e.g., NTN node 1 3771) and/or the neighbor cells (e.g., NTN node 2 3772)). For example, the wireless device 3701 may determine the one or more second time offsets, for example, based on/using the at least one value (e.g., the service link propagation delay differences, e.g., between the first service link/cell (e.g., service link 1 3741 or NTN node 1 3771) and the second service link/cell (e.g., service link 2 3742 or NTN node 2 3772)). For example, each time offset of the one or more second time offsets may be equal to (or correspond to) a value of the at least one value. Each time offset of the one or more second time offsets may correspond to at least two cells of the NTN and/or at least two service links of the NTN (e.g., the first service link 3741 of the NTN node 1 3771 and a service link 3742 of the neighbor NTN node 3772, e.g., the second service link 3742). For example, cardinality of the one or more second time offsets may be one (as there may be only one service link propagation delay difference between the serving cell and a neighbor cell). For example, cardinality of the one or more second time offsets may be N-1, where N is a number of NTN nodes (e.g., in the SIB 19 or the positioning SIB). N may be a number of the NTN nodes that the wireless device 3701 may be expected to measure DL-PRS resources from them. N-1 may be a number of the neighbor cells of the NTN. N-1 may be a number of first neighbor cells and/or a number of the second neighbor cells.

The wireless device 3701 may (corresponding to each neighbor NTN node/neighbor TRP/cell 3772) determine a time offset (e.g., time offset 3720), for example, based on the one or more first time offsets and/or the one or more second time offsets. The wireless device 3701 may (corresponding to each neighbor NTN node/neighbor TRP/cell 3772) determine SFN#0 slot#0 3760 of (or corresponding to) the neighbor NTN node/neighbor TRP/cell 3772 with respect to SFN#0 slot#0 of the reference (e.g., corresponding to the reference TRP/serving NTN node/serving cell 3771), for example, based on the (determined) time offset (e.g., time offset 3720).

As shown in FIG. 37, the wireless device 3701 may measure/receive (for example, to perform the positioning procedure) DL-PRS resources 3723 of the second DL-PRS resource set 3722 after the second PRS resource set slot offset 3724 after/from the SFN#0 slot#0 3760 of (or corresponding to) the neighbor NTN node/neighbor TRP/neighbor cell 3772. The wireless device 3701 may measure/receive (for example, to perform the positioning procedure) DL-PRS resources 3713 of the first DL-PRS resource set 3712 after the first PRS resource set slot offset 3714 after/from the SFN#0 slot#0 3750 of (or corresponding to) the serving NTN node/reference TRP/serving cell 3771.

The one or more configuration parameters (e.g., the one or more PRS configuration parameters) and/or the LPP messages may configure/enable the wireless device 3701 to determine a time offset 3720, for example, based on the one or more first time offsets and/or the one or more second time offsets. For example, the one or more configuration parameters may comprise a first configuration parameter. Based on the first configuration parameter being enabled (with value true) or being configured (or not being absent from the one or more configuration parameters or not being disabled with value false), the wireless device 3701 may determine (corresponding to each neighbor NTN node/neighbor TRP/cell 3772) the SFN#0 slot#0 3760 of (or corresponding to) the neighbor NTN node/neighbor TRP/cell 3772 with respect to the SFN#0 slot#0 3750 of the reference (e.g., corresponding to the reference TRP/serving NTN node/serving cell 3771), for example, based on the (determined) time offset (e.g., time offset 3720).

Based on the first configuration parameter not being enabled (with value true) or not being configured (or being absent from the one or more configuration parameters or being disabled with value false), the wireless device 3701 may avoid determining the time offset (e.g., time offset 3720) based on the one or more second time offsets, e.g., the time offset (e.g., time offset 3720) may be based on the one or more first time offsets.

The wireless device 3701 may be allowed to determine SFN#0 slot#0 3760 of a DL-PRS resource set 3722 corresponding to a neighbor TRP/NTN node 3772 with respect to SFN#0 slot#0 3750 of the reference TRP/serving NTN node 3771, for example, based on the (service link) propagation delay difference of the serving NTN node 3771 and the neighbor NTN node 3772.

Without enhancements provided by example embodiments of the present disclosure, the wireless device 3701 may fail to measure/receive DL-PRS resources of the DL-PRS resource set corresponding to a neighbor TRP/NTN node. Without enhancements provided by example embodiments of the present disclosure, the efficiency/accuracy of the positioning procedure may reduce.

A DL PRS resource set is configured by NR-DL-PRS-ResourceSet. A DL PRS resource set consists of one or more DL PRS resources and it is defined by NR-DL-PRS-SFN0-Offset defines the time offset of the SFN0 slot 0 for the DL PRS resource set with respect to SFN0 slot 0 of reference provided by nr-DL-PRS-ReferenceInfo. In the NTN, the wireless device 3701 may adjust NR-DL-PRS-SFN0-Offset based on service link propagation delay difference between a neighbor cell of the NTN (e.g., a cell/TRP associated with PRS resource set) and the serving cell of the NTN (e.g., a cell/TRP associated with reference provided by nr-DL-PRS-ReferenceInfo).

In the NTN (e.g., if DL PRS assistance data is received from the NTN), the wireless device 3701 may assume a time offset of the SFN#0 slot#0 for the given TRP (e.g., a neighbor TRP/neighbor cell/neighbor NTN node 3772) with respect to SFN#0 slot#0 of the assistance data reference TRP (e.g., reference TRP/serving cell/serving NTN node) does no consider impact of propagation delay difference between the given TRP and the assistance data reference TRP. The wireless device 3701 may adjust the actual time offset of the SFN#0 slot#0 for the given TRP with respect to SFN#0 slot#0 of the assistance data reference TRP based on the configured time offset of the SFN#0 slot#0 for the given TRP with respect to SFN#0 slot#0 of the assistance data reference TRP and the propagation delay difference between the given TRP and the assistance data reference TRP.

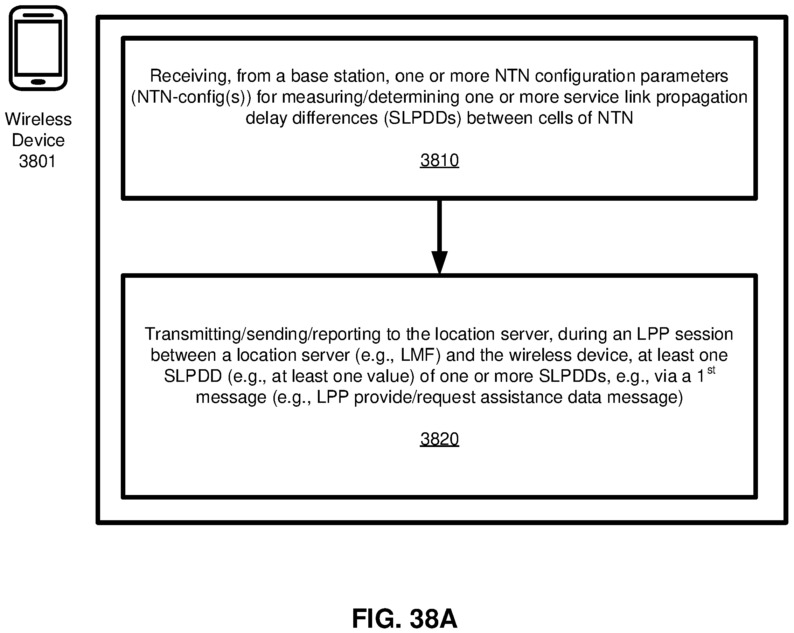

FIG. 38A shows an example method for sending service link propagation delay differences in an NTN to a location server. At step 3810, a wireless device 3801 may receive, from a base station, one or more NTN configuration parameters (NTN-config(s)), e.g., the NTN assistance information. The wireless device may, for example, using/based on the one or more NTN configuration parameters, measure/determine/calculate one or more service link propagation delay differences corresponding to one or more NTN nodes of the NTN. For example, the wireless device may transmit/send/report, during a positioning session (e.g., the LPP session) between the location server (e.g., LMF) and the wireless device, at least one service link propagation delay difference (e.g., at least one value) between cells of the NTN (e.g., corresponding to one or more NTN nodes of the NTN) via a message (e.g., LPP provide/request assistance data message) to the location server.

For example, based on communicating with the location server via a serving cell of the NTN and/or determining the positioning procedure may be related to the measuring DL-PRS resources via the NTN, at step 3820, the wireless device may transmit/send/report, during the LPP session, the at least one service link propagation delay difference (e.g., at least one value) between at least two cells of the NTN via the message to the location server.

For example, based on communicating with the location server via the terrestrial network and/or determining the positioning procedure is related to the measuring DL-PRS resources via the terrestrial network, the wireless device may refrain from transmitting/sending/reporting, during the LPP session, the at least one service link propagation delay difference (e.g., at least one value) between at least two cells of the NTN via the message to the location server.

The wireless device may perform the positioning procedure, for example, during the LPP session. The location server may, during the LPP session (as described in example of FIG. 17B), obtain location related measurements from the wireless device and/or determine a location estimate of the wireless device and/or transfer assistance data to the wireless device. The wireless device may, during the LPP session between the location server (e.g., LMF) and the wireless device, transmit/send/report, the at least one service link propagation delay difference (e.g., at least one value) between cells of the NTN (e.g., corresponding to one or more NTN nodes of the NTN) via a message (e.g., LPP provide/request assistance data message) to the location server. The wireless device may, during the ongoing positioning procedure, transmit/send/report, the at least one service link propagation delay difference (e.g., at least one value) between cells of the NTN (e.g., corresponding to one or more NTN nodes of the NTN) via a message (e.g., LPP provide/request assistance data message) to the location server.

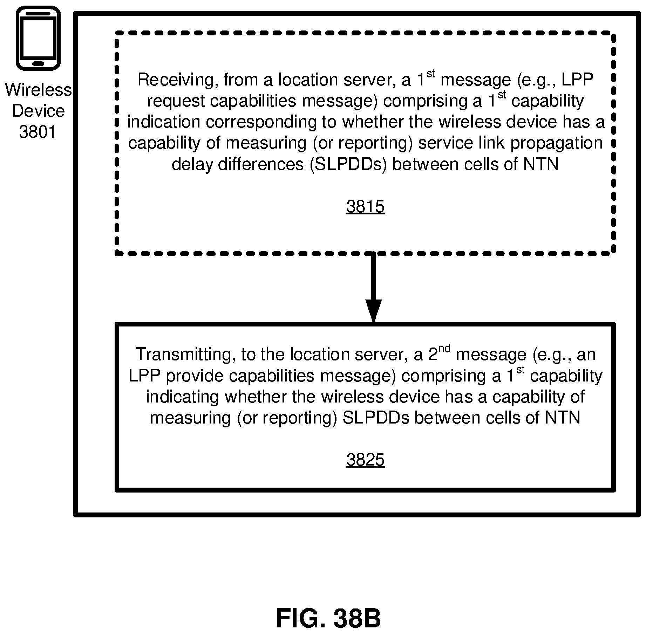

FIG. 38B shows an example method for indicating a capability of measuring/reporting service link propagation delay differences in an NTN to a location server. At step 3815, a wireless device 3801 may receive, from the location server, a first message (e.g., LPP request capabilities message) of the LPP messages comprising a first capability indication. The first capability indication may correspond to whether the wireless device has a capability of measuring (or reporting) service link propagation delay differences between cells of the NTN (e.g., corresponding to serving NTN node and neighbor NTN nodes), e.g., to the location server and/or the base station. For example, the wireless device may transmit/send/report, to the location server and based on (e.g., in response to) the first message indicating the first capability indication, a second message (e.g., an LPP provide capabilities message) of the LPP messages comprising a first capability. The first capability may indicate whether the wireless device has a capability of measuring (or reporting) service link propagation delay differences between the cells of the NTN (e.g., corresponding to serving NTN node and neighbor NTN nodes).

At step 3825, the wireless device may transmit/send/report, to the location server and during the ongoing LPP session, the second message (e.g., an LPP provide capabilities message) of the LPP messages comprising the first capability. The transmission of the second message may not be based on the first message. For example, the wireless device may not receive the first message from the location server (e.g., the wireless device may automatically/autonomously transmit the second message to the location server, e.g., for transmitting unsolicited capabilities to the location server).

The wireless device may, based on (e.g., in response to) the first message, send (e.g., transmit) to the location server the at least one value via the second message. The second message may be the LPP provide assistance data message or the LPP request assistance data message or the LPP provide capabilities message.

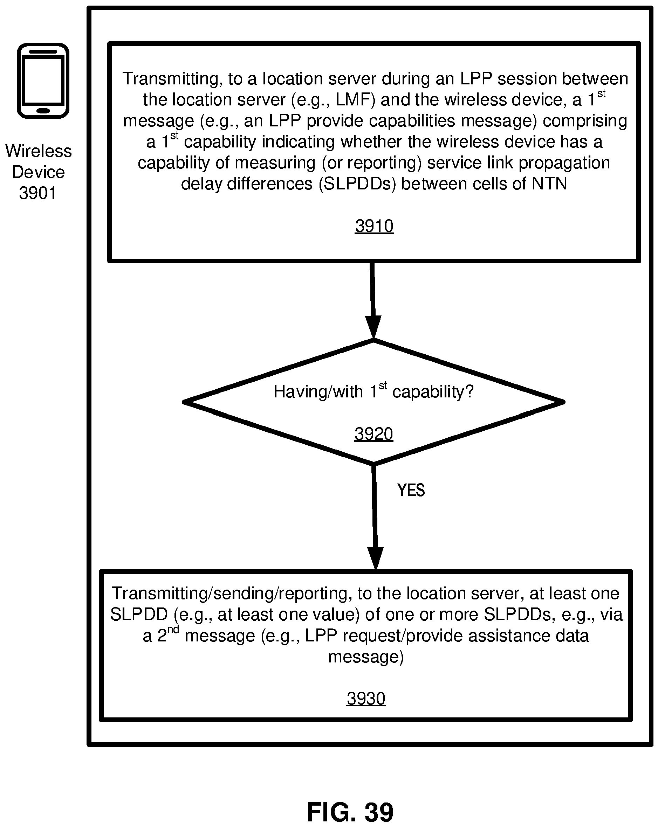

FIG. 39 shows an example method for indicating a capability of measuring/reporting service link propagation delay differences between the cells of an NTN to a location server. At step 3910, a wireless device 3901 may, during the LPP session between the wireless device and the location server, transmit/send/report, to the location server, a first message (e.g., an LPP provide/request capabilities message) of the LPP messages comprising a first capability. At step 3920, the first capability may indicate whether the wireless device has a capability of measuring (or reporting) service link propagation delay differences between cells of the NTN (e.g., corresponding to serving NTN node and neighbor NTN nodes).

As shown in FIG. 39, for example, based on the wireless device supporting/having the capability of measuring (or reporting) service link propagation delay differences corresponding to serving NTN node and neighbor NTN nodes, at step 3930, the wireless device may, e.g., during the LPP session between the wireless device and the location server, transmit/send/report, to the location server, at least one service link propagation delay difference (e.g., at least one value) between at least two cells of the NTN (e.g., corresponding to serving NTN node and neighbor NTN nodes) via a second message (e.g., LPP provide/request assistance data message) of the LPP messages to the location server.

The wireless device may, e.g., during the LPP session between the wireless device and the location server, refrain from transmitting/sending/reporting, to the location server, the at least one service link propagation delay difference (e.g., at least one value) corresponding to serving NTN node and neighbor NTN nodes, for example, based on the wireless device not supporting/having the capability of measuring (or reporting) service link propagation delay differences between the cells of the NTN (e.g., corresponding to serving NTN node and neighbor NTN nodes).

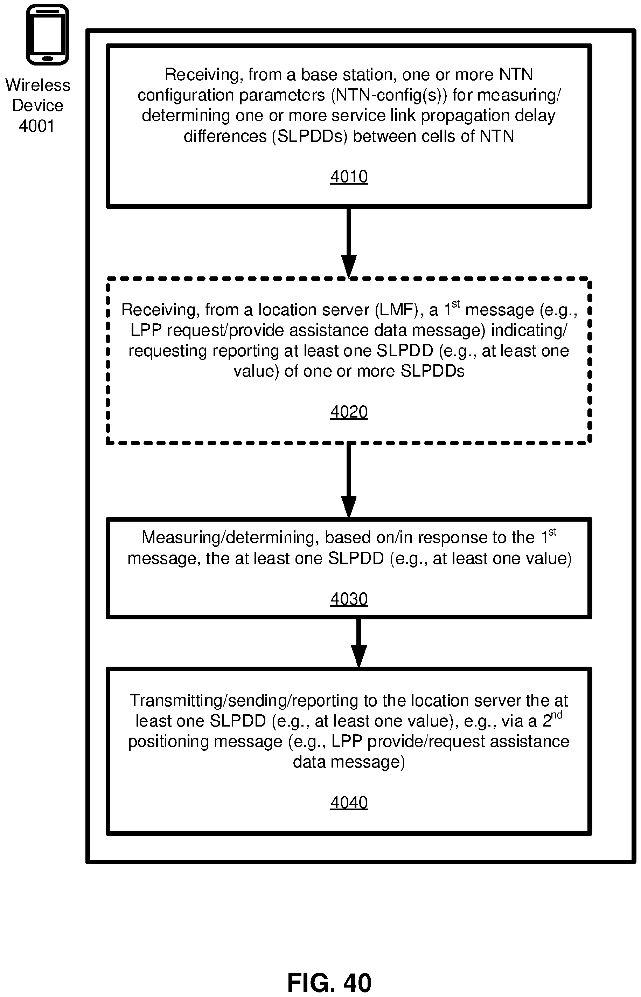

FIG. 40 shows an example method for sending service link propagation delay differences in an NTN to a location server. At step 4010, a wireless device 4001 may receive, from a base station, one or more NTN configuration parameters (NTN-config(s)), e.g., the NTN assistance information. The wireless device may, for example, using/based on the one or more NTN configuration parameters, measure/determine/calculate one or more service link propagation delay differences between cells of the NTN (e.g., corresponding to one or more NTN nodes and/or corresponding to serving NTN node and neighbor NTN nodes).

As shown in FIG. 40, at step 4020, the wireless device 4001 may receive, from the location server (LMF), a first message (e.g., LPP request/provide assistance data message), indicating/requesting reporting at least one service link propagation delay difference (e.g., at least one value) between at least two cells of the NTN (corresponding to serving NTN node and neighbor NTN nodes) to the location server. For example, at step 4030, the wireless device may, based on (e.g., in response to) the first message, measure/determine the at least one service link propagation delay difference (e.g., at least one value) corresponding to serving NTN node and neighbor NTN nodes.

At step 4040, the wireless device 4001 may transmit/send/report the at least one service link propagation delay difference (e.g., at least one value) between at least two cells of the NTN (corresponding to serving NTN node and neighbor NTN nodes) via a second positioning message (e.g., LPP provide/request assistance data message) to the location server.

The wireless device 4001 may not receive the first message from the location server. For example, the transmission of the second message may not be based on (e.g., in response to) receiving the first message from the location server. For example, the wireless device may automatically/autonomously send (e.g., transmit) the second message to the location server, for example, for transmitting unsolicited assistance data to the location server).

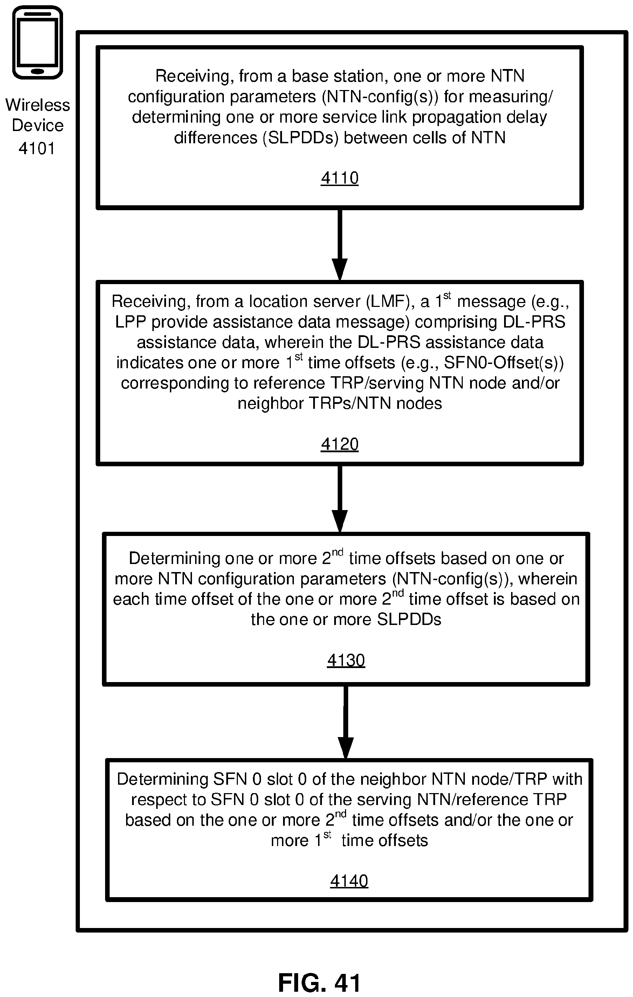

FIG. 41 shows an example method for corresponding to DL-PRS assistance data in a non-terrestrial network. At step 4110, a wireless device 4101 may receive, for example, from a base station, one or more NTN configuration parameters (NTN-config(s)) for measuring/determining one or more service link propagation delay differences between at least two cells of the NTN (corresponding to serving NTN node and neighbor NTN nodes). At step 4120, the wireless device may receive, from a location server (LMF), a first message (e.g., LPP provide assistance data message) comprising DL-PRS assistance data. The DL-PRS assistance data may indicate/configure/comprise the one or more first time offsets (e.g., SFNO-Offset(s)) corresponding to reference TRP/serving NTN node and/or neighbor TRPs/NTN nodes.

At step 4130, the wireless device may determine/calculate/obtain the one or more second time offsets based on one or more NTN configuration parameters (NTN-config(s)). For example, each time offset of the one or more second time offset may be based on service link propagation delay difference between the serving NTN node and neighbor NTN node. At step 4140, the wireless device may determine SFN 0 slot 0 of each neighbor NTN node/TRP with respect to SFN 0 slot 0 of the serving NTN/reference TRP based on the one or more second time offsets and/or the one or more first time offsets. The wireless device may determine SFN 0 slot 0 of a neighbor NTN node/TRP with respect to SFN 0 slot 0 of the serving NTN/reference TRP based on a time offset of the one or more second time offsets that corresponds to the neighbor NTN node. For example, the wireless device may determine SFN 0 slot 0 of a neighbor NTN node/TRP with respect to SFN 0 slot 0 of the serving NTN/reference TRP based on a time offset of the one or more first time offsets that corresponds to the neighbor NTN node. The wireless device 4101 may measure/receive DL-PRS resource set(s) (e.g., DL-PRS resources of the neighbor NTN node indicated by the DL-PRS assistance data) of the neighbor NTN node based on the (determined) SFN 0 slot 0 of a neighbor NTN node/TRP.

A wireless device may perform a method comprising multiple operations. The wireless device may receive, from a base station, one or more non-terrestrial network (NTN) configuration parameters for determining service link propagation delay differences between cells of an NTN. The wireless device may send (e.g., transmit), to a location server, a message that may comprise a service link propagation delay difference between at least two cells of the cells. The message may be a long-term evolution (LTE)-based positioning protocol (LPP) message. The message may be an LPP provide assistance data message. The message may be an LPP request assistance data message. The wireless device may send (e.g., transmit), to the location server, a second message indicating the wireless device has a capability for reporting/measuring the service link propagation delay differences between the cells of the NTN. The second message may be an LPP provide capabilities message. The message may be an LPP provided capabilities message. The wireless device may receive, from the location server, an LPP request capabilities message indicating whether the wireless device has a capability for reporting/measuring the service link propagation delay differences of the cells of the NTN. The sending (e.g., transmitting) the message may be based on (e.g., in response to) the LPP request capabilities message. The wireless device may receive, from the location server, a third message indicating/requesting reporting the service link propagation delay difference between the at least two cells of the NTN to the location server. The sending (e.g., transmitting) the message may be based on (e.g., in response to) the receiving the third message. The third message may be an LPP request assistance data message. The third message may be an LPP provide assistance data message. The sending (e.g., transmitting) the message may be during an LPP session between the wireless device and the location server. The LPP sessions may correspond to (or may be for performing) at least one positioning procedure. A positioning procedure of the at least one positioning procedure may be a location verification procedure for verification a location of the wireless device by the location server. The wireless device may send (e.g., transmit), to the location server and corresponding to an LPP sessions between the wireless device and the location server, a provide capabilities message indicating the wireless device has a capability for measuring downlink positioning reference signal (DL-PRS) resources of difference cells of the NTN. The wireless device may receive, from the location server, a request capabilities message indicating whether the wireless device has a capability for measuring downlink positioning reference signal (DL-PRS) resources of different cells of the NTN. The wireless device may send (e.g., transmit), to the location server and corresponding to an LPP sessions between the wireless device and the location server, a provide capabilities message indicating the wireless device has a capability for transmitting positioning sounding reference signal (SRS) resources via difference cells of the NTN. The wireless device may receive, from the location server, a request capabilities message indicating whether the wireless device has a capability for transmitting positioning sounding reference signal (SRS) resources via difference cells of the NTN. A service link propagation difference between a first cell of the cells and a second cell of the cells may comprise a second service link propagation delay of the second cell minus a first service link propagation delay of the first cell. The first cell may be a serving cell and the second cell may be a neighbor cell. Determining a service link propagation delay of a cell of the cells may be based on the one or more NTN configuration parameters and/or a global navigation satellite system (GNSS) estimate of the wireless device. Determining a service link propagation delay of a cell of the cells may be further based on a global navigation satellite system (GNSS) estimate of the wireless device. The determining the service link propagation delay of the cell of the cells may be based on ephemeris information of an NTN node of the cell. The one or more NTN configuration parameters may indicate the ephemeris information of an NTN node. The determining the service link propagation delay of the cell of the cells may be based on common timing advance (TA) information of the cell. The one or more NTN configuration parameters may indicate the common TA information of the cell. The determining the service link propagation delay of the cell of the cells may be based on a portion of a feeder link propagation delay of the cell. The one or more NTN configuration parameters may indicate the portion of a feeder link propagation delay of the cell. The portion of a feeder link propagation delay of the cell may be Kmac of the cell. The sending (e.g., transmitting) the message to the location server may comprise: sending (e.g., transmitting), for example, using radio resource control (RRC) protocol, the message to a base station via a cell of the cells; and sending (e.g., transmitting), by the base station to the location server, the message. The message may comprise an LPP packet data unit (PDU). The LPP PDU may comprise the service link propagation delay difference of the at least two cells of the cells. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

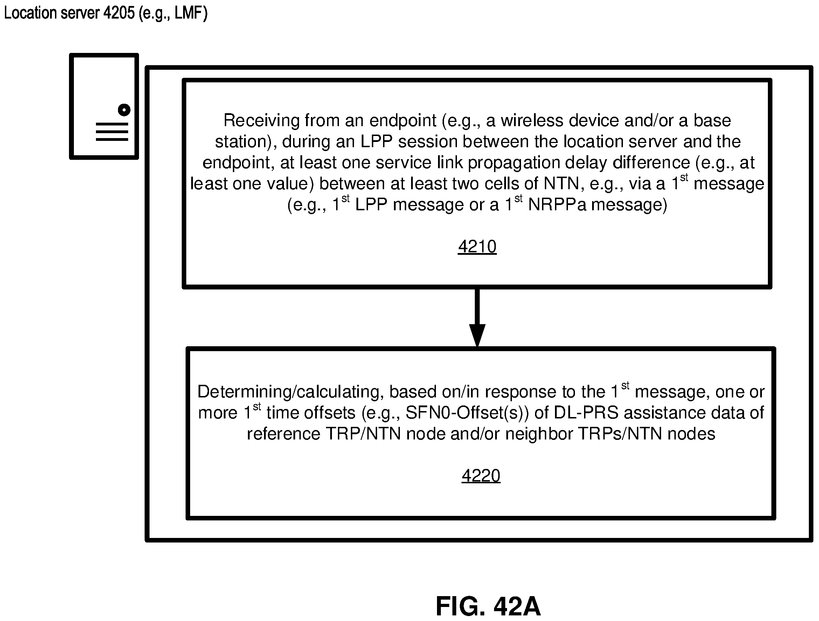

FIG. 42A shows an example method for configuring DL-PRS assistance data of a positioning procedure in an NTN. At step 4210, location server 4205 (e.g., LMF) may, e.g., during the ongoing positioning session between the wireless device and the location server (and/or during the ongoing positioning procedure), receive from an endpoint (e.g., the wireless device or the base station) the at least one service link propagation delay difference (e.g., at least one value) between at least two cells of the NTN (e.g., of at least one service link of the NTN), e.g., via a first message. The first message may be an LPP message (e.g., LPP provide/request assistance data message and/or LPP provide capabilities message) of the LPP messages. The first message may be an NRPPa message of NRPPa messages. For example, at step 4220, the location server may, based on (e.g., in response to) the first message, determine/calculate the one or more first time offsets (e.g., SFNO-Offset(s)) of DL-PRS assistance data of reference TRP/NTN node and/or neighbor TRPs/NTN nodes. The location server may transmit the DL-PRS assistance data (comprising the one or more first time offsets) to the endpoint (e.g., via the LPP messages to the wireless device and/or via the NRPPa messages to the base station). The endpoint may perform the positioning procedure based on the DL-PRS assistance data.

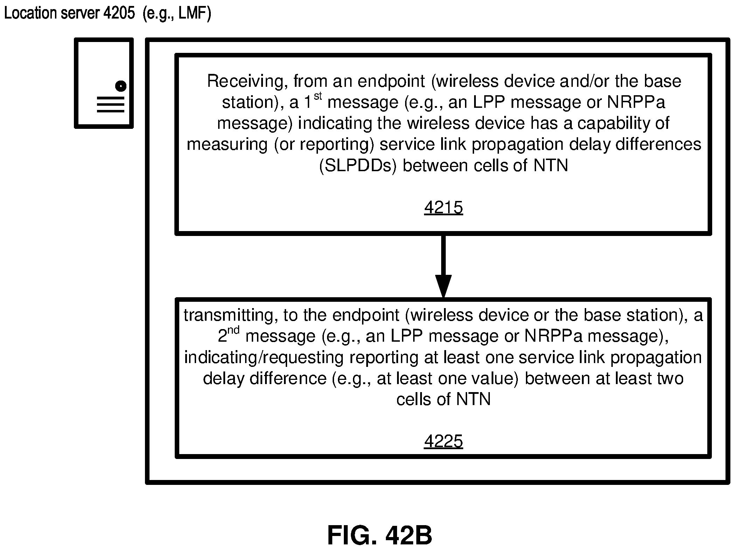

FIG. 42B shows an example method of a capability operation for positioning in the NTN. At step 4215, a location server 4205 may receive from the endpoint (e.g., the wireless device and/or the base station) a first message (e.g., an LPP message or an NRPPa message of the NRPPa messages) indicating the wireless device has a capability of measuring (or reporting) service link propagation delay differences between at least two cells of the NTN (corresponding to serving NTN node and neighbor NTN nodes). For example, at step 4225, the location server may, e.g., based on the first message, send (e.g., transmit) to the endpoint, a second message (e.g., an LPP message of the LPP messages, e.g., the LPP request assistance data message and/or an NRPPa message of the NRPPa messages), indicating/requesting reporting at least one service link propagation delay difference (e.g., at least one value) between at least two cells of the NTN (corresponding to serving NTN node and neighbor NTN nodes). Example of FIG. 42B may be combined by example of FIG. 42A discussed herein, e.g., for configuration of the DL-PRS assistance data.

The location server 4205 may, for example, to determine/choose/select a (type of the) positioning procedure, determine/identify (e.g., corresponding to an ongoing LPP session between the wireless device and the location server) that the wireless device accessing via an NTN (e.g., satellite access). The location server 4205 may receive, from the endpoint, a capability message (e.g., an LPP message of the LPP messages or an NRPPa message of the NRPPa messages) indicating the wireless device has a first capability for multi-satellite (multi-RTT) positioning procedure/measurements. For example, the location server may (e.g., based on the capability message) determine the (type of the) positioning procedure (of the LPP session) between/among a single-satellite (multi-RTT) positioning procedure/measurements (e.g., multi-RTT measurements based on single satellite/NTN node measurements of the DL-PRS resources or SRS transmissions) or the multi-satellite (multi-RTT) positioning procedure/measurements (e.g., multi-RTT measurements based on multiple satellite/NTN nodes measurements of the DL-PRS resources or SRS transmissions).

Based on the (type of the) positioning procedure being the multi-satellite (multi-RTT) positioning procedure/measurements, the location server may send (e.g., transmit) to the endpoint (the wireless device and/or the base station), a third message (e.g., an LPP message of the LPP messages, e.g., the LPP request capabilities message or an NRPPa message of the NRPPa messages) comprising at least one capability indication. The at least one capability indication may indicate whether the wireless device has a first capability of measuring (or reporting) service link propagation delay differences between at least two cells of the NTN (corresponding to serving NTN node and neighbor NTN nodes). For example, the endpoint may send (e.g., transmit) the first message to the location server based on the third message.

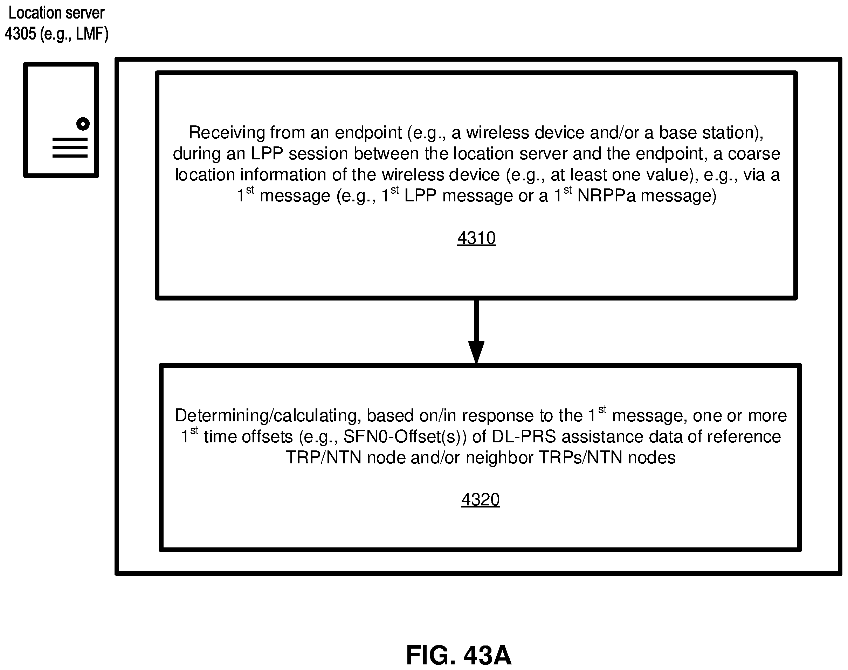

FIG. 43A shows an example method for configuring DL-PRS assistance data of a positioning procedure in an NTN. At step 4310, a location server 4305 (e.g., LMF) may, e.g., during the ongoing positioning session between the wireless device and the location server (and/or during the ongoing positioning procedure), receive from the endpoint (e.g., the wireless device or the base station) the coarse location information of the wireless device (e.g., at least one value), e.g., via a first message. The first message may be an LPP message (e.g., LPP provide/request assistance data message and/or LPP provide capabilities message) of the LPP messages. The first message may be an NRPPa message of NRPPa messages. For example, at step 4320, the location server may, based on (e.g., in response to) the first message (e.g., the coarse location information of the wireless device), determine/calculate the one or more first time offsets (e.g., SFNO-Offset(s)) of DL-PRS assistance data of reference TRP/NTN node and/or neighbor TRPs/NTN nodes. The location server may send (e.g., transmit) the DL-PRS assistance data (comprising the one or more first time offsets) to the endpoint (e.g., via the LPP messages to the wireless device and/or via the NRPPa messages to the base station). The endpoint may perform the positioning procedure based on the DL-PRS assistance data.

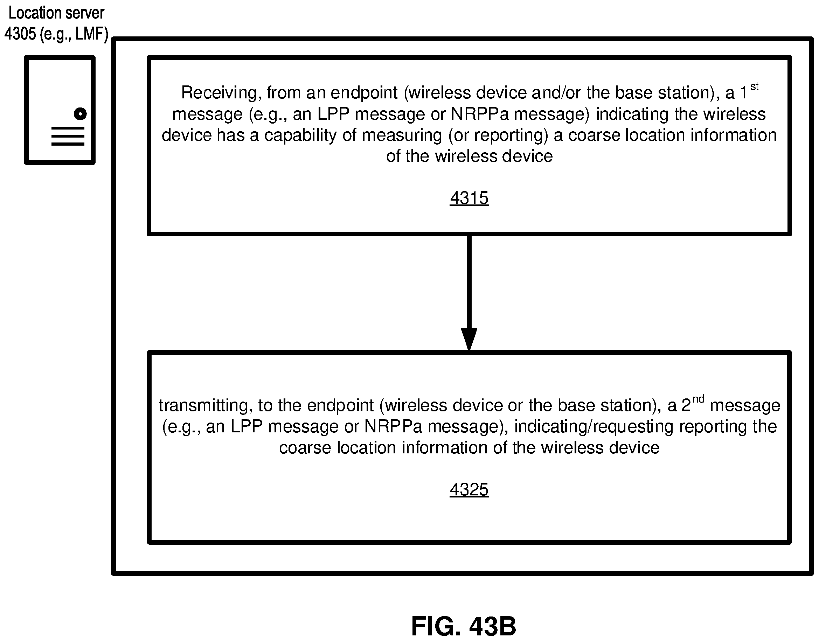

FIG. 43B shows an example method of a capability operation for positioning in the NTN. At step 4315, a location server 4305 may receive from the endpoint (e.g., the wireless device and/or the base station) a first message (e.g., an LPP message of the LPP messages or an NRPPa message of the NRPPa messages) indicating the wireless device has a capability of measuring (or reporting) the coarse location information of the wireless device. For example, at step 4325, the location server 4305 may, e.g., based on the first message, send (e.g., transmit) to the endpoint a second message (e.g., an LPP message of the LPP messages, e.g., the LPP request assistance data message and/or an NRPPa message of the NRPPa messages), indicating/requesting reporting the coarse location information of the wireless device to the location server and/or the base station. Example of FIG. 43B may be combined by example of FIG. 43A discussed herein, e.g., for configuration of the DL-PRS assistance data.

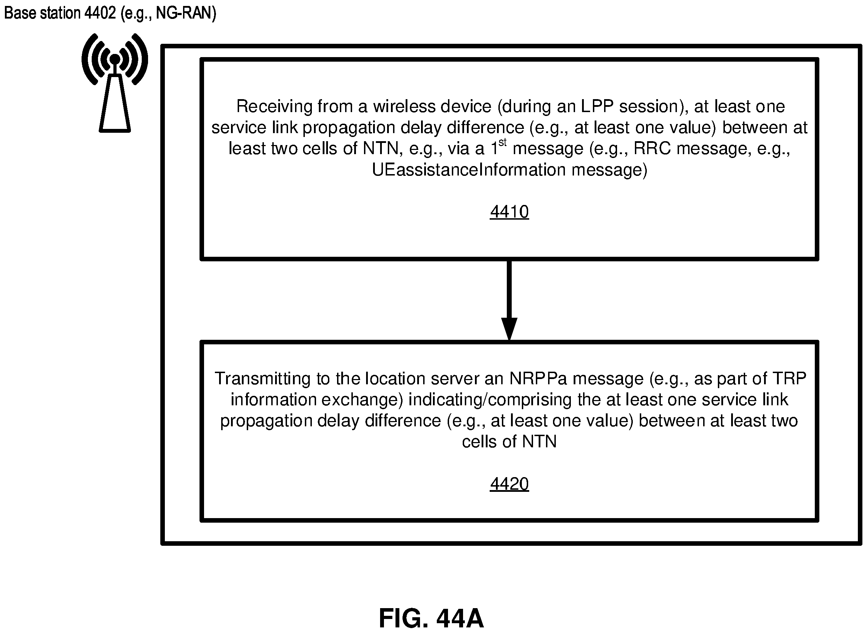

FIG. 44A shows an example method for configuring DL-PRS assistance data of a positioning procedure in the NTN. At step 4410, a base station 4402 may, e.g., during the ongoing positioning session between a wireless device and a location server (and/or during the ongoing positioning procedure), receive, from the wireless device, the at least one service link propagation delay difference (e.g., at least one value) of at least one service link of the NTN, e.g., via a first message. The first message may be an RRC message (e.g., UEassistanceInformation message). For example, at step 4420, the base station 4402 may, e.g., based on (e.g., in response to) the first message, send (e.g., transmit) (e.g., via an NRPPa message of the NRPPa messages) the at least one service link propagation delay difference (e.g., at least one value) of at least one service link of the NTN. The location server may determine/calculate the one or more first time offsets (e.g., SFNO-Offset(s)) of DL-PRS assistance data of reference TRP/NTN node and/or neighbor TRPs/NTN nodes based on the at least one service link propagation delay difference (e.g., at least one value) between at least two cells of the NTN (corresponding to serving NTN node and neighbor NTN nodes).

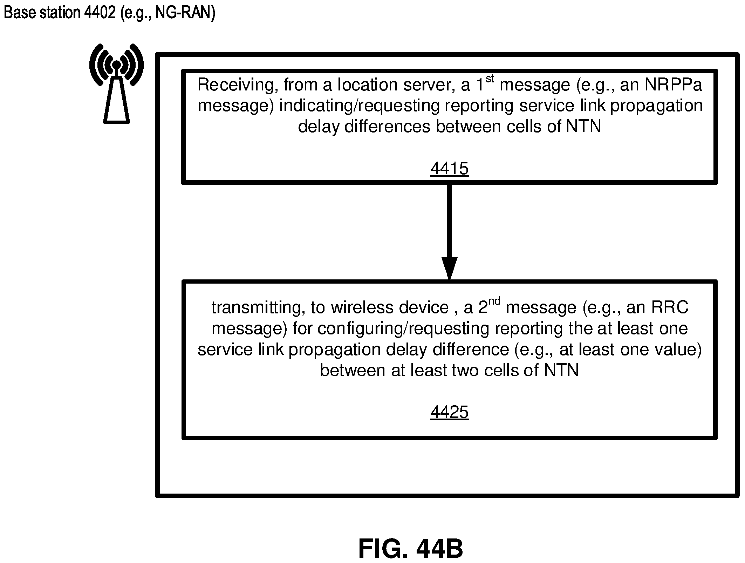

FIG. 44B shows an example method of a capability operation for positioning in the NTN. At step 4415, a base station 4402 may receive, from a location server, a first message (e.g., an NRPPa message of NRPPa messages) indicating/requesting (or triggering) the service link propagation delay differences between at least two cells of the NTN (corresponding to serving NTN node and neighbor NTN nodes) to the location server. For example, at step 4425, the base station 4402 may, e.g., based on the first message, send (e.g., transmit) to the wireless device a second message (e.g., an RRC message of the at least one RRC message), configuring/indicating/requesting reporting the at least one service link propagation delay difference (e.g., at least one value) corresponding to serving NTN node and neighbor NTN nodes. Example of FIG. 44B may be combined by example of FIG. 44A discussed herein, e.g., for configuration of the DL-PRS assistance data by the location server and/or the base station 4402.

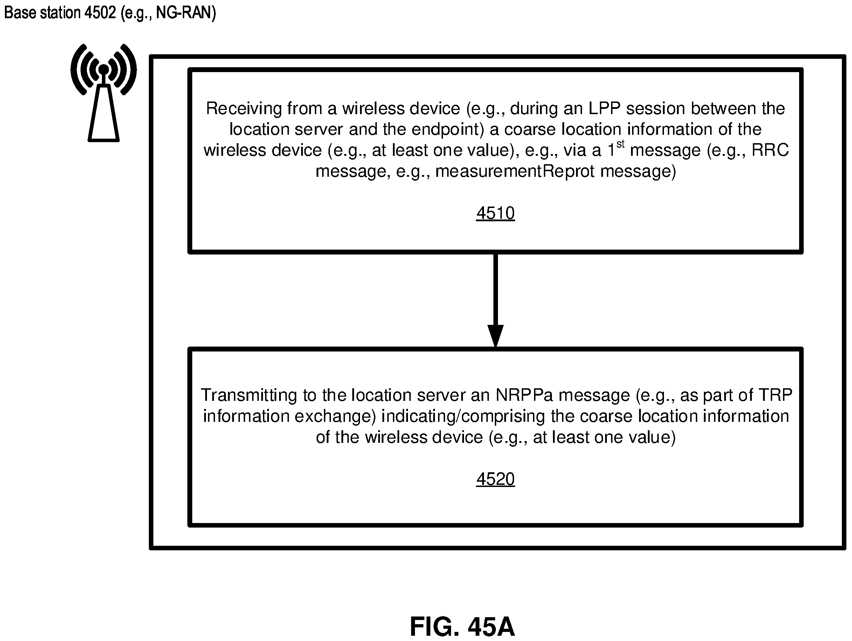

FIG. 45A shows an example method of a reporting coarse location information of a wireless device during a positioning procedure in the NTN. At step 4510, a base station 4502 may, e.g., during the ongoing positioning session between the wireless device and the location server (and/or during the ongoing positioning procedure), receive, from the wireless device, the coarse location information of the wireless device (e.g., at least one value), e.g., via a first message (e.g., an RRC message, e.g., measurement report message). For example, at step 4520, the base station 4402 may, based on (e.g., in response to) the first message (e.g., the coarse location information of the wireless device), send (e.g., transmit), to the location server (e.g., via a second message, e.g., an NRPPa message of the NRPPa messages), the coarse location information of the wireless device. The location server may determine/calculate the one or more first time offsets (e.g., SFNO-Offset(s)) of DL-PRS assistance data of reference TRP/NTN node and/or neighbor TRPs/NTN nodes based on the coarse location information of the wireless device.

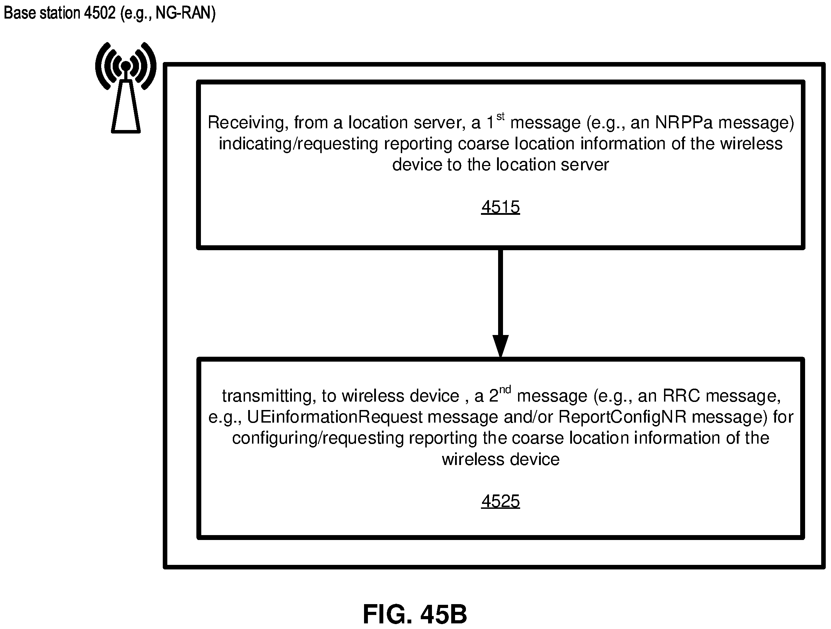

FIG. 45B shows an example method of a reporting coarse location information of a wireless device during a positioning procedure in the NTN. At step 4515, a base station 4502 may (e.g., from the location server) receive a first message (e.g., an NRPPa message of the NRPPa messages) indicating/requesting/triggering reporting the coarse location information of the wireless device to the location server. For example, at step 4525, the base station 4502 may, e.g., based on the first message, transmit to the wireless device a second message (e.g., an RRC message of the at least one RRC messages, e.g., the UEinformationRequest message and/or ReportConfigNR message), indicating/requesting/triggering reporting the coarse location information of the wireless device to the location server and/or the base station. Example of FIG. 45B may be combined by example of FIG. 45A discussed herein, e.g., for configuration of the DL-PRS assistance data by the location server.

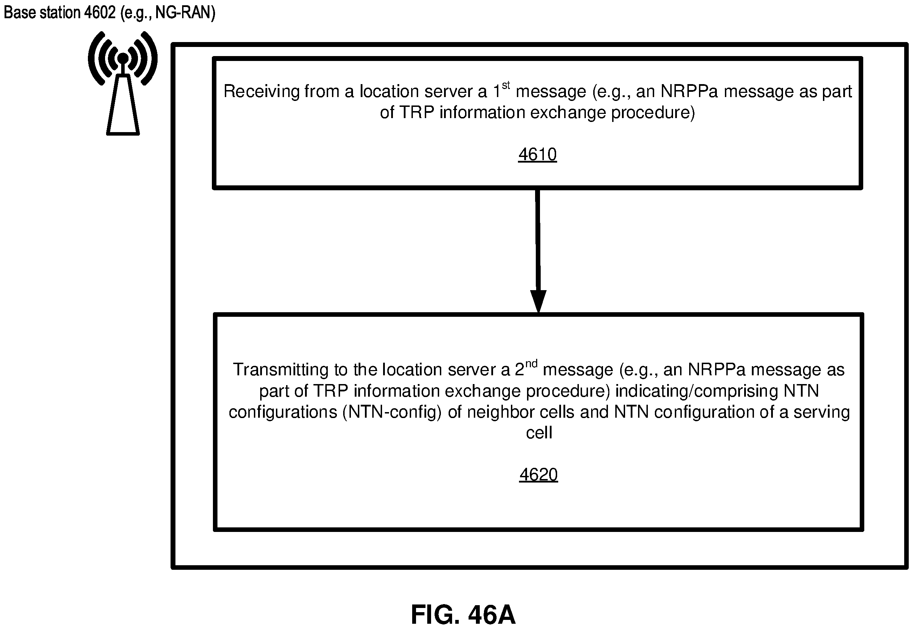

FIG. 46A shows an example method of a TRP information exchange procedure in an NTN. At step 4610, a base station 4602 may (e.g., from the location server) receive a first message (e.g., an NRPPa message of the NRPPa messages, e.g., as part of the TRP information exchange procedure). The first message may be the TRP information request message. For example, at step 4620, the base station may, e.g., based on (e.g., in response to) the first message, send (e.g., transmit) to the location server a second message (e.g., an NRPPa message of the NRPPa messages, e.g., as part of the TRP information exchange procedure), indicating/comprising the NTN assistance information. The NTN assistance information may comprise NTN configuration parameters (NTN-config) of the serving cell and the neighbor cells (e.g., the first neighbor cells and/or the second neighbor cells) of the NTN. The second message may be the TRP information response message.

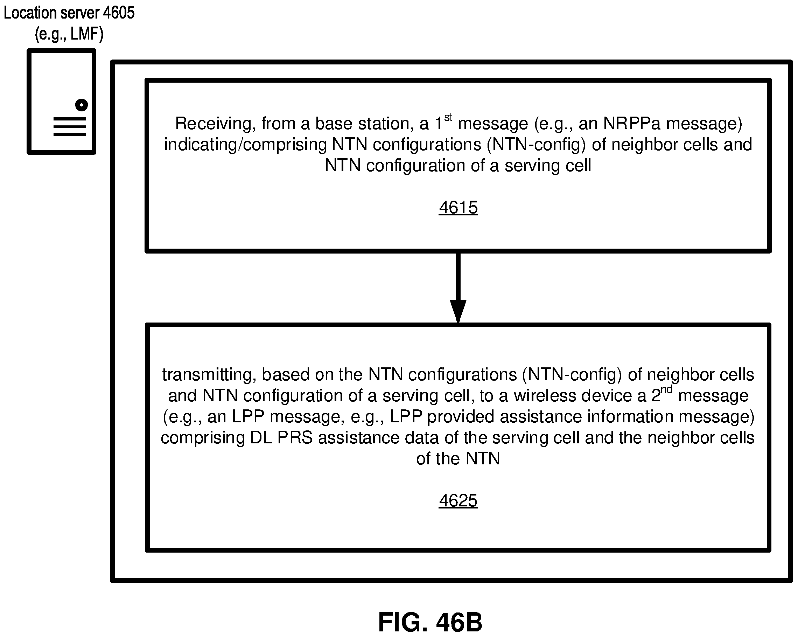

FIG. 46B shows an example method of a TRP information exchange procedure in an NTN. At step 4615, a location server 4605 may (e.g., from the base station) receive a first message (e.g., an NRPPa message of the NRPPa messages, e.g., as part of the TRP information exchange procedure). The first message may be the TRP information response message. The first message may indicate/comprise the NTN assistance information (e.g., NTN configuration parameters (NTN-config) of the serving cell and the neighbor cells (e.g., the first neighbor cells and/or the second neighbor cells) of the NTN). For example, the location server may, e.g., based on (e.g., in response) to the first message (and/or based on the NTN assistance information), configure the DL PRS assistance data. For example, at step 4625, the location server may send (e.g., transmit) to the wireless device a second message (e.g., an LPP message of the LPP messages, e.g., as part of the LPP assistance data procedure), indicating/comprising the DL PRS assistance data.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device and from a base station, one or more configuration parameters indicating propagation delay associated with a non-terrestrial network.

Clause 2. The method of clause 1, further comprising sending, by the wireless device and based on the indicated propagation delay, a message comprising a propagation delay difference between a first node and a second node in the non-terrestrial network.

Clause 3. The method of any one of clauses 1-2, further comprising receiving, by the wireless device and from the first node and the second node, one or more downlink positioning reference signal configuration parameters indicating: a first downlink positioning reference signal resource set; a second downlink positioning reference signal resource set; and a time offset of a second system frame number associated with the second downlink positioning reference signal resource set with respect to a first system frame number associated with the first downlink positioning reference signal resource set.

Clause 4. The method of any one of clauses 1-3, further comprising receiving, from the second node, a downlink positioning reference signal resource of the second downlink positioning reference signal resource set.

Clause 5. The method of any one of clauses 1-4, wherein the receiving is based on: the time offset; and the propagation delay difference between the first node and the second node.

Clause 6. The method of any one of clauses 1-5, further comprising measuring, based on the one or more configuration parameters, one or more propagation delay differences associated with the first node and the second node in the non-terrestrial network.

Clause 7. The method of any one of clauses 1-6, further comprising receiving, by the wireless device, at least one of: a provide-assistance data message; or a request-assistance data message.

Clause 8. The method of any one of clauses 1-7, further comprising receiving, by the wireless device, one or more messages indicating downlink positioning reference signal resources.

Clause 9. The method of any one of clauses 1-8, further comprising receiving, based on the propagation delay difference, the downlink positioning reference signal resources.

Clause 10. The method of any one of clauses 1-9, further comprising sending, by the wireless device, a second message indicating whether the wireless device has a capability to measure propagation delay differences between the first node and the second node in the non-terrestrial network.

Clause 11. The method of any one of clauses 1-10, wherein the first node is a serving node and the second node is a neighboring node.

Clause 12. The method of any one of clauses 1-11, further comprising sending, by the wireless device, a message indicating whether the wireless device has a capability to measure downlink positioning reference signal resources from the first node and the second node in the non-terrestrial network.

Clause 13. The method of any one of clauses 1-12, further comprising sending, by the wireless device, a message indicating whether the wireless device has a capability for transmitting positioning sounding reference signal resources to the first node and the second node in the non-terrestrial network.

Clause 14. The method of any one of clauses 1-13, wherein the propagation delay difference between the first node and the second node comprises a second propagation delay of the second node minus a first propagation delay of the first node.

Clause 15. A wireless device comprising one or more processors and memory storing instructions that, when executed by the one or more processors, cause the wireless device to perform the method of any one of claims 1-14.

Clause 16. A system comprising a wireless device configured to perform the method of any one of claims 1-14, and a base station configured to send one or more configuration parameters.

Clause 17. A computing-readable medium storing instructions that, when executed, cause performance of the method of any one of claims 1-14.

Clause 18. A method comprising receiving, by a wireless device and from a first node and a second node in a non-terrestrial network, one or more downlink positioning reference signal configuration parameters indicating: a first downlink positioning reference signal resource set; a second downlink positioning reference signal resource set; and a time offset of a second system frame number associated with the second downlink positioning reference signal resource set with respect to a first system frame number associated with the first downlink positioning reference signal resource set.

Clause 19. The method of clause 18, further comprising receiving, by a wireless device and from a first node and a second node in a non-terrestrial network, one or more non-terrestrial network configuration parameters indicating: a first non-terrestrial network configuration parameters associated with the first node; and a second non-terrestrial network configuration parameters associated with the second node.

Clause 20. The method of any one of clauses 18-19, further comprising receiving, from the second node, a downlink positioning reference signal resource of the second downlink positioning reference signal resource set based on: the time offset; and a propagation delay difference between the first node and the second node.

Clause 21. The method of any one of clauses 18-20, further comprising sending, by the wireless device, a message comprising at least one propagation delay difference between the first node and the second node in the non-terrestrial network.

Clause 22. The method of any one of clauses 18-21, wherein the first downlink positioning reference signal resource set is associated with the first node in the non-terrestrial network.

Clause 23. The method of any one of clauses 18-22, wherein the second downlink positioning reference signal resource set is associated with the second node in the non-terrestrial network.

Clause 24. A wireless device comprising one or more processors and memory storing instructions that, when executed by the one or more processors, cause the wireless device to perform the method of any one of claims 18-23.

Clause 25. A system comprising a wireless device configured to perform the method of any one of claims 18-23, and a base station configured to send one or more configuration parameters.

Clause 26. A computing-readable medium storing instructions that, when executed, cause performance of the method of any one of claims 18-23.

Clause 27. A method comprising sending, by a server and to a wireless device, a first message requesting to report at least one service link propagation delay difference between a first node and a second node in a non-terrestrial network.

Clause 28. The method of clause 27, further comprising receiving, based on the first message and from the wireless device, a second message comprising the at least one service link propagation delay difference.

Clause 29. The method of any one of clauses 27-28, further comprising sending, by the server, at least one of: a provide-assistance data message; or a request-assistance data message.

Clause 30. The method of any one of clauses 27-29, further comprising receiving, from the wireless device, a second message whether the wireless device has a capability to measure propagation delay differences between the first node and the second node in the non-terrestrial network.

Clause 31. The method of any one of clauses 27-30, wherein the first node is a serving node and the second node is a neighboring node.

Clause 32. The method of any one of clauses 27-31, further comprising receiving, from the wireless device, a message indicating whether the wireless device has a capability to measure downlink positioning reference signal resources from the first node and the second node in the non-terrestrial network.

Clause 33. The method of any one of clauses 27-32, wherein the propagation delay difference between the first node and the second node comprises a second propagation delay of the second node minus a first propagation delay of the first node.

Clause 34. A wireless device comprising one or more processors and memory storing instructions that, when executed by the one or more processors, cause the wireless device to perform the method of any one of claims 27-33.

Clause 35. A system comprising a wireless device configured to perform the method of any one of claims 27-33, and a base station configured to send one or more configuration parameters.

Clause 36. A computing-readable medium storing instructions that, when executed, cause performance of the method of any one of claims 27-33.

Clause 37. A method comprising receiving, by a wireless device from a base station, one or more non-terrestrial network (NTN) configuration parameters for determining service link propagation delay differences between cells of an NTN; and

Clause 38. The method of clause 37, further comprising transmitting, to a location management function (LMF), a message comprising a service link propagation delay difference between at least two cells of the cells.

Clause 39. The method of any one of clauses 37-38, further comprising receiving, from the location management function (LMF), one or more long-term evolution (LTE)-based positioning protocol (LPP) messages indicating downlink positioning reference signal (DL-PRS) resources.

Clause 40. The method of any one of clauses 37-39, further comprising receiving the DL-PRS resources based on the service link propagation delay difference.

Clause 41. The method of any one of clauses 37-40, wherein the one or more LPP messages further indicate a system frame number (SFN) offset corresponding to the two cells.

Clause 42. The method of any one of clauses 37-41, wherein the receiving the DL-PRS resources is further based on the SFN offset.

Clause 43. The method of any one of clauses 37-42, wherein the message is a long-term evolution (LTE)-based positioning protocol (LPP) message, wherein the message is at least one of: an LPP provide assistance data message; or an LPP request assistance data message.

Clause 44. The method of any one of clauses 37-43, further comprising transmitting, to the LMF, a second message indicating the wireless device has a capability for reporting or measuring the service link propagation delay differences between the cells of the NTN, wherein the second message is an LPP provide capabilities message.

Clause 45. The method of any one of clauses 37-44, wherein the message is an LPP provided capabilities message.

Clause 46. The method of any one of clauses 37-45, further comprising receiving, from the LMF, an LPP request capabilities message indicating whether the wireless device has a capability for reporting or measuring the service link propagation delay differences of the cells of the NTN, wherein the transmitting the message is in response to the LPP request capabilities message.

Clause 47. The method of any one of clauses 37-46, further comprising receiving, from the LMF, a third message indicating or requesting reporting the service link propagation delay difference between the at least two cells of the NTN to the LMF, wherein the transmitting the message is in response to the receiving the third message.

Clause 48. The method of any one of clauses 37-47, further comprising transmitting, to the LMF and corresponding to an LPP session, an LPP provide capabilities message indicating the wireless device has a capability for measuring downlink positioning reference signal (DL-PRS) resources of difference cells of the NTN.

Clause 49. The method of any one of clauses 37-48, further comprising receiving, from the LMF, an LPP request capabilities message indicating whether the wireless device has a capability for measuring downlink positioning reference signal (DL-PRS) resources of different cells of the NTN.

Clause 50. The method of any one of clauses 37-49, further comprising receiving, from the LMF, an LPP request capabilities message indicating whether the wireless device has a capability for transmitting positioning sounding reference signal (SRS) resources via difference cells of the NTN.

Clause 51. The method of any one of clauses 37-50, wherein a service link propagation difference between a first cell of the cells and a second cell of the cells comprises a second service link propagation delay of the second cell minus a first service link propagation delay of the first cell.

Clause 52. The method of any one of clauses 37-51, wherein the first cell is a serving cell and the second cell is a neighbor cell.

Clause 53. The method of any one of clauses 37-52, wherein determining a service link propagation delay of a cell of the cells is based on the one or more NTN configuration parameters and a global navigation satellite system (GNSS) estimate of the wireless device.

Clause 54. The method of any one of clauses 37-53, wherein the transmitting the message to the LMF comprises: transmitting, using radio resource control (RRC) protocol, the message to a base station via a cell of the cells.

Clause 55. The method of any one of clauses 37-54, further comprising transmitting, by the base station to the LMF, the message using uplink non-access stratum (NAS) transport.

Clause 56. The method of any one of clauses 37-55, wherein the message comprises an LPP packet data unit (PDU), wherein the LPP PDU comprises the service link propagation delay difference of the at least two cells of the cells.

Clause 57. The method of any one of clauses 37-56, wherein the third message is an LPP request assistance data message.

Clause 58. The method of any one of clauses 37-57, wherein the third message is an LPP provide assistance data message.

Clause 59. The method of any one of clauses 37-58, wherein the transmitting the message is during an LPP session between the wireless device and the LMF.

Clause 60. The method of any one of clauses 37-59, wherein the LPP sessions corresponds to (or is for performing) at least one positioning procedure.

Clause 61. The method of any one of clauses 37-60, wherein a positioning procedure of the at least one positioning procedure is a location verification procedure for verification a location of the wireless device by the LMF.

Clause 62. The method of any one of clauses 37-61, further comprising transmitting, to the LMF and corresponding to an LPP sessions between the wireless device and the LMF, a provide capabilities message indicating the wireless device has a capability for measuring downlink positioning reference signal (DL-PRS) resources of difference cells of the NTN.

Clause 63. The method of any one of clauses 37-62, further comprising transmitting, to the LMF and corresponding to an LPP sessions between the wireless device and the location server, a provide capabilities message indicating the wireless device has a capability for transmitting positioning sounding reference signal (SRS) resources via difference cells of the NTN.

Clause 64. The method of any one of clauses 37-63, wherein determining a service link propagation delay of a cell of the cells is further based on a global navigation satellite system (GNSS) estimate of the wireless device.

Clause 65. The method of any one of clauses 37-64, wherein the determining the service link propagation delay of the cell of the cells is based on ephemeris information of an NTN node of the cell, wherein the one or more NTN configuration parameters indicate the ephemeris information of an NTN node.

Clause 66. The method of any one of clauses 37-65, wherein the determining the service link propagation delay of the cell of the cells is based on common timing advance (TA) information of the cell, wherein the one or more NTN configuration parameters indicate the common TA information of the cell.

Clause 67. The method of any one of clauses 37-66, wherein the determining the service link propagation delay of the cell of the cells is based on a portion of a feeder link propagation delay of the cell.

Clause 68. The method of any one of clauses 37-67, wherein the one or more NTN configuration parameters indicate the portion of a feeder link propagation delay of the cell.

Clause 69. The method of any one of clauses 37-68, wherein the portion of a feeder link propagation delay of the cell is Kmac of the cell.

Clause 70. A wireless device comprising one or more processors and memory storing instructions that, when executed by the one or more processors, cause the wireless device to perform the method of any one of claims 37-69.

Clause 71. A system comprising a wireless device configured to perform the method of any one of claims 37-69, and a base station configured to send one or more configuration parameters.

Clause 72. A computing-readable medium storing instructions that, when executed, cause performance of the method of any one of claims 37-69.

Clause 73. A method comprising receiving, by a wireless device from a base station, one or more non-terrestrial network (NTN) configuration parameters for determining service link propagation delay differences corresponding to one or more service links of an NTN.

Clause 74. The method of clause 73, further comprising receiving, from a location server, a first message indicating/requesting reporting at least one service link propagation delay difference corresponding to at least two service links of the one or more service links.

Clause 75. The method of any one of clauses 73-74, further comprising, based on the first message, transmitting, to the location server, a second message comprising the at least one service link propagation delay difference.

Clause 76. The method of any one of clauses 73-75, wherein: the first message is a long-term evolution (LTE)-based positioning protocol (LPP) request assistance data message; and a second message is an LPP provide assistance data message.

Clause 77. The method of any one of clauses 73-76, further comprising transmitting, to the location server, a provide capabilities message indicating the wireless device has a capability for reporting/measuring the service link propagation delay differences corresponding to one or more service links of the NTN.

Clause 78. The method of any one of clauses 73-77, further comprising receiving, from the location server, a request capabilities message indicating whether the wireless device has a capability for reporting/measuring the service link propagation delay differences corresponding to one or more service links of the NTN.

Clause 79. The method of any one of clauses 73-78, wherein the first message indicates the at least two service links of the one or more service links.

Clause 80. The method of any one of clauses 73-79, further comprising transmitting, during an LPP session between the wireless device and the location server, a third message comprising the at least one service link propagation delay difference.

Clause 81. The method of any one of clauses 73-80, further comprising transmitting, to the location server and corresponding to an LPP sessions between the wireless device and the location server, a provide capabilities message indicating the wireless device has a capability for measuring downlink positioning reference signal (DL-PRS) resources corresponding to different NTN nodes of the NTN.

Clause 82. The method of any one of clauses 73-81, further comprising receiving, from the location server, a request capabilities message indicating whether the wireless device has a capability for measuring downlink positioning reference signal (DL-PRS) resources corresponding to different NTN nodes of the NTN.

Clause 83. A wireless device comprising one or more processors and memory storing instructions that, when executed by the one or more processors, cause the wireless device to perform the method of any one of claims 73-82.

Clause 84. A system comprising a wireless device configured to perform the method of any one of claims 73-82, and a base station configured to send one or more configuration parameters.

Clause 85. A computing-readable medium storing instructions that, when executed, cause performance of the method of any one of claims 73-82.

Clause 86. A method comprising receiving, by a wireless device from a base station, one or more non-terrestrial network (NTN) configuration parameters for determining service link propagation delay differences corresponding to one or more service links of an NTN.

Clause 87. The method of clause 86, further comprising starting a positioning procedure.

Clause 88. The method of any one of clauses 86-87, transmitting, during the positioning procedure and to a location server, a message comprising at least one service link propagation delay difference corresponding to at least one service link of the one or more service links.

Clause 89. A method comprising receiving, by a wireless device via a first service link of non-terrestrial network (NTN), one or more downlink positioning reference signal (DL-PRS) configuration parameters indicating: a first DL-PRS resource set corresponding to the first service link; a second DL-PRS resource set corresponding to a second service link of the NTN; and a time offset of a second system frame number (SFN) for the second DL-PRS resource set with respect to a first SFN of the set.

Clause 90. The method of clause 89, further comprising receiving, via the second service link, a DL-PRS resource of the second DL-PRS resource set based on: the time offset; and a propagation delay difference between the first service link and the second service link.

Clause 91. A method comprising receiving, by a wireless device from a location management function (LMF), one or more messages indicating downlink positioning reference signal (DL-PRS) resources.

Clause 92. The method of clause 91, further comprising receiving, DL-PRS resources, based on a service link propagation delay difference two cells.

Clause 93. The method of any one of clauses 91-92, wherein the one or more messages further indicate a system frame number (SFN) offset corresponding to the two cells.

Clause 94. The method of any one of clauses 91-93, wherein the receiving the DL-PRS resources is further based on the SFN offset.

Clause 95. A method comprising receiving, by a wireless device via a non-terrestrial network (NTN), one or more configuration parameters comprising: one or more downlink positioning reference signal (DL-PRS) configuration parameters indicating: a first DL-PRS resource set; a second DL-PRS resource set; and a time offset of a second system frame number (SFN) for the second DL-PRS resource set with respect to a first SFN of the first DL-PRS resource set; and one or more NTN configuration parameters indicating: a first NTN configuration parameters corresponding to a first service link of the NTN; and a second NTN configuration parameters corresponding to a second service link of the NTN.

Clause 96. The method of clause 95, further comprising receiving, via the second service link, a DL-PRS resource of the second DL-PRS resource set based on: the time offset; and a propagation delay difference between the first service link and the second service link.

Clause 97. The method of any one of clauses 95-96, wherein the first DL-PRS resources correspond to a first transmission-reception point (TRP) of the NTN, corresponding to a first service link of the NTN.

Clause 98. A wireless device comprising one or more processors and memory storing instructions that, when executed by the one or more processors, cause the wireless device to perform the method of any one of claims 86-97.

Clause 99. A system comprising a wireless device configured to perform the method of any one of claims 86-97, and a base station configured to send one or more configuration parameters.

Clause 100. A computing-readable medium storing instructions that, when executed, cause performance of the method of any one of claims 86-97.

A wireless device may perform a method comprising multiple operations. The wireless device may receive, from a base station, one or more configuration parameters indicating propagation delay that may be associated with a non-terrestrial network. The wireless device may send, for example, based on the indicated propagation delay, a message that may comprise a propagation delay difference between a first node and a second node in the non-terrestrial network. The wireless device may receive, from the first node and the second node, one or more downlink positioning reference signal configuration parameters that may indicate a first downlink positioning reference signal resource set; a second downlink positioning reference signal resource set and/or a time offset of a second system frame number that may be associated with the second downlink positioning reference signal resource set with respect to a first system frame number that may be associated with the first downlink positioning reference signal resource set. The wireless device may receive, from the second node, a downlink positioning reference signal resource of the second downlink positioning reference signal resource set, for example, based on the time offset and/or the propagation delay difference between the first node and the second node. The wireless device may measure, for example, based on the one or more configuration parameters, one or more propagation delay differences that may be associated with the first node and the second node in the non-terrestrial network. The wireless device may receive at least one of: a provide-assistance data message; or a request-assistance data message. The wireless device may receive one or more messages indicating downlink positioning reference signal resources. The wireless device may receive, for example, based on the propagation delay difference, the downlink positioning reference signal resources. The wireless device may send a second message indicating whether the wireless device may have a capability to measure propagation delay differences between the first node and the second node in the non-terrestrial network. The first node may be a serving node and the second node may be a neighboring node. The wireless device may send a message that may indicate whether the wireless device may have a capability to measure downlink positioning reference signal resources from the first node and the second node in the non-terrestrial network. The wireless device may send a message that may indicate whether the wireless device may have a capability for sending (e.g., transmitting) positioning sounding reference signal resources to the first node and the second node in the non-terrestrial network. The propagation delay difference between the first node and the second node may comprise a second propagation delay of the second node minus a first propagation delay of the first node. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

A wireless device may perform a method comprising multiple operations. The wireless device may receive, from a first node and a second node in a non-terrestrial network, one or more downlink positioning reference signal configuration parameters that may indicate a first downlink positioning reference signal resource set, a second downlink positioning reference signal resource set, and/or a time offset of a second system frame number that may be associated with the second downlink positioning reference signal resource set with respect to a first system frame number that may be associated with the first downlink positioning reference signal resource set. The wireless device may receive, from a first node and a second node in a non-terrestrial network, one or more non-terrestrial network configuration parameters that may indicate a first non-terrestrial network configuration parameters associated with the first node and/or a second non-terrestrial network configuration parameters associated with the second node. The wireless device may receive, from the second node, a downlink positioning reference signal resource of the second downlink positioning reference signal resource set based on the time offset and/or a propagation delay difference between the first node and the second node. The wireless device may send a message that may comprise at least one propagation delay difference between the first node and the second node in the non-terrestrial network. The first downlink positioning reference signal resource set may be associated with the first node in the non-terrestrial network. The second downlink positioning reference signal resource set may be associated with the second node in the non-terrestrial network. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

A server may perform a method comprising multiple operations. The server may send, to a wireless device, a first message that may request to report at least one service link propagation delay difference between a first node and a second node in a non-terrestrial network. The server may receive, for example, based on the first message, from the wireless device, a second message that may comprise the at least one service link propagation delay difference. The server may send at least one of a provide-assistance data message or a request-assistance data message. The server may receive, from the wireless device, a second message whether the wireless device may have a capability to measure propagation delay differences between the first node and the second node in the non-terrestrial network. The first node may be a serving node and the second node may be a neighboring node. The server may receive, from the wireless device, a message that may indicate whether the wireless device may have a capability to measure downlink positioning reference signal resources from the first node and the second node in the non-terrestrial network. The propagation delay difference between the first node and the second node may comprise a second propagation delay of the second node minus a first propagation delay of the first node. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

A wireless device may perform a method comprising multiple operations. The wireless device may receive, from a base station, one or more non-terrestrial network (NTN) configuration parameters for determining service link propagation delay differences corresponding to one or more service links of an NTN. The wireless device may receive, from a location server, a first message indicating/requesting reporting at least one service link propagation delay difference corresponding to at least two service links of the one or more service links. The wireless device may, for example, based on the first message, send (e.g., transmit), to the location server, a second message comprising the at least one service link propagation delay difference. The first message may be a long-term evolution (LTE)-based positioning protocol (LPP) request assistance data message, and/or a second message may be an LPP provide assistance data message. The wireless device may send (e.g., transmit), to the location server, a provide capabilities message indicating the wireless device has a capability for reporting/measuring the service link propagation delay differences corresponding to one or more service links of the NTN. The wireless device may receive, from the location server, a request capabilities message indicating whether the wireless device has a capability for reporting/measuring the service link propagation delay differences corresponding to one or more service links of the NTN. The first message may indicate the at least two service links of the one or more service links. The wireless device may send (e.g., transmit), for example, during an LPP session between the wireless device and the location server, a third message comprising the at least one service link propagation delay difference. The wireless device may send (e.g., transmit), to the location server and corresponding to an LPP sessions between the wireless device and the location server, a provide capabilities message indicating the wireless device has a capability for measuring downlink positioning reference signal (DL-PRS) resources corresponding to different NTN nodes of the NTN. The wireless device may receive, from the location server, a request capabilities message indicating whether the wireless device has a capability for measuring downlink positioning reference signal (DL-PRS) resources corresponding to different NTN nodes of the NTN. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

A wireless device may perform a method comprising multiple operations. The wireless device may receive, from a base station, one or more non-terrestrial network (NTN) configuration parameters for determining service link propagation delay differences corresponding to one or more service links of an NTN. The wireless device may start a positioning procedure. The wireless device may send (e.g., transmit), during the positioning procedure and to a location server, a message comprising at least one service link propagation delay difference corresponding to at least one service link of the one or more service links. A wireless device may receive, via a first service link of non-terrestrial network (NTN), one or more downlink positioning reference signal (DL-PRS) configuration parameters indicating: a first DL-PRS resource set corresponding to the first service link; a second DL-PRS resource set corresponding to a second service link of the NTN; and a time offset of a second system frame number (SFN) for the second DL-PRS resource set with respect to a first SFN of the set. The wireless device may receive, via the second service link, a DL-PRS resource of the second DL-PRS resource set based on: the time offset; and a propagation delay difference between the first service link and the second service link. A wireless device may receive, from a location management function (LMF), one or more messages indicating downlink positioning reference signal (DL-PRS) resources. The wireless device may receive DL-PRS resources, for example, based on a service link propagation delay difference two cells. The one or more messages may further indicate a system frame number (SFN) offset corresponding to the two cells. The receiving the DL-PRS resources may be further based on the SFN offset. A wireless device may receive, via a non-terrestrial network (NTN), one or more configuration parameters comprising: one or more downlink positioning reference signal (DL-PRS) configuration parameters indicating: a first DL-PRS resource set; a second DL-PRS resource set; and a time offset of a second system frame number (SFN) for the second DL-PRS resource set with respect to a first SFN of the first DL-PRS resource set; and one or more NTN configuration parameters indicating: a first NTN configuration parameters corresponding to a first service link of the NTN; and a second NTN configuration parameters corresponding to a second service link of the NTN. The wireless device may receive, via the second service link, a DL-PRS resource of the second DL-PRS resource set based on: the time offset; and a propagation delay difference between the first service link and the second service link. The first DL-PRS resources may correspond to a first transmission-reception point (TRP) of the NTN, corresponding to a first service link of the NTN. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to send the one or more configuration parameters. A computer-readable medium may store instructions that, when executed, cause performance of the described method, additional operations and/or include the additional elements.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or Lab VIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described herein, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a wireless device and from a base station, one or more configuration parameters indicating propagation delay associated with a non-terrestrial network; and
   sending, by the wireless device and based on the indicated propagation delay, a message comprising a propagation delay difference between a first node and a second node in the non-terrestrial network.

2. The method of claim 1, further comprising:

   receiving, by the wireless device and from the first node and the second node, one or more downlink positioning reference signal configuration parameters indicating:

      a first downlink positioning reference signal resource set;
      a second downlink positioning reference signal resource set; and
      a time offset of a second system frame number associated with the second downlink positioning reference signal resource set with respect to a first system frame number associated with the first downlink positioning reference signal resource set; and

   receiving, from the second node, a downlink positioning reference signal resource of the second downlink positioning reference signal resource set, wherein the receiving is based on:

      the time offset; and
      the propagation delay difference between the first node and the second node.

3. The method of any one of claims 1-2, further comprising:
   measuring, based on the one or more configuration parameters, one or more propagation delay differences associated with the first node and the second node in the non-terrestrial network.

4. The method of any one of claims 1-3, further comprising receiving, by the wireless device, at least one of:

a provide-assistance data message; or
a request-assistance data message.

5. The method of any one of claims 1-4, further comprising:

receiving, by the wireless device, one or more messages indicating downlink positioning reference signal resources; and
receiving, based on the propagation delay difference, the downlink positioning reference signal resources.

6. The method of any one of claims 1-5, further comprising sending, by the wireless device, a second message indicating whether the wireless device has a capability to measure propagation delay differences between the first node and the second node in the non-terrestrial network.

7. The method of any one of claims 1-6, wherein the first node is a serving node and the second node is a neighboring node.

8. The method of any one of claims 1-7, further comprising sending, by the wireless device, a message indicating whether the wireless device has a capability to measure downlink positioning reference signal resources from the first node and the second node in the non-terrestrial network.

9. The method of any one of claims 1-8, further comprising sending, by the wireless device, a message indicating whether the wireless device has a capability for transmitting positioning sounding reference signal resources to the first node and the second node in the non-terrestrial network.

10. The method of any one of claims 1-9, wherein the propagation delay difference between the first node and the second node comprises a second propagation delay of the second node minus a first propagation delay of the first node.

11. The method of any one of claims 1-10, wherein the sending the message is during a session between the wireless device and a server.

12. The method of any one of claims 1-11, wherein the message comprises a packet data unit, and wherein the packet data unit comprises the propagation delay difference between the first node and the second node.

13. A wireless device comprising:

one or more processors; and
memory storing instructions that, when executed by the one or more processors, cause the wireless device to perform the method of any one of claims 1-12.

14. A system comprising:

a wireless device configured to perform the method of any one of claims 1-12; and
a base station configured to send one or more configuration parameters.

15. A computing-readable medium storing instructions that, when executed, cause performance of the method of any one of claims 1-12.

**FIG. 1A**

**FIG. 1B**

EP 4 496 292 A1

**FIG. 2A**

**FIG. 2B**

**IP Packets**

**SDAP
215/225** — QoS Flow Handling — **QoS Flows**

**Radio Bearers**

**PDCP
214/224** — Header Comp., Ciphering | Header Comp., Ciphering — Reordering, Retransmission | Reordering, Retransmission

**RLC Channels**

**RLC
213/223** — Segmentation, ARQ | Segmentation, ARQ

**Logical Channels**

**MAC
212/222** — Multiplexing — HARQ

**Transport Channel**

**PHY
211/221** — Coding, Resource Mapping

**FIG. 3**

| IP Packet | IP Packet | IP Packet |
|---|---|---|
| *n* | *n+1* | *m* |

SDAP 225

| radio bearer 402 | H | SDAP SDU | | H | SDAP SDU | | radio bearer 404 | H | SDAP SDU |

PDCP 224

SDAP PDU

| H | PDCP SDU | | H | PDCP SDU | | H | PDCP SDU |

RLC 223

| H | RLC SDU | | H | RLC SDU | | H | SDU Seg. | | H | SDU Seg. |

MAC 222

| H | MAC SDU | H | MAC SDU | H | MAC SDU | | H | MAC SDU |

PHY 221

| PHY SDU (Transport Block) | | PHY SDU |

**FIG. 4A**

| R | F | LCID | SDU Length |

| H | MAC CE | H | MAC CE | H | MAC SDU | H | MAC SDU |

MAC PDU

**FIG. 4B**

**Logical Channels** PCCH BCCH CCCH DCCH DTCH

**Transport Channels** PCH BCH DL-SCH

DCI

**Physical Channels** PBCH PDSCH PDCCH

**Physical Signals** PSS/ SSS CSI-RS DM-RS PT-RS

Downlink

**FIG. 5A**

**Logical Channels** CCCH DCCH DTCH

**Transport Channels** UL-SCH RACH

UCI

**Physical Channels** PUSCH PUCCH PRACH

**Physical Signals** DM-RS PT-RS SRS

Uplink

**FIG. 5B**

FIG. 6

1 Frame (10 ms)

| 0 | 1 | 2 | 3 | 4 | 5 | 6 | 7 | 8 | 9 |

1 Subframe (1 ms)

Subcarrier spacing = 15 kHz
1 slot per subframe

1 Slot (1 ms, 14 OFDM Symbols)

Subcarrier spacing = 30 kHz
2 slots per subframe

1 Slot (0.5 ms, 14 OFDM Symbols)

Subcarrier spacing = 60 kHz
4 slots per subframe

1 Slot (0.25 ms, 14 OFDM Symbols)

Subcarrier spacing = 120 kHz
8 slots per subframe

1 Slot (0.0125 ms, 14 OFDM Symbols)

FIG. 7

FIG. 8

FIG. 9

EP 4 496 292 A1

Component Carrier

Intraband,
contiguous
1002

Freq. Band
A

Freq. Band
B

Intraband,
non-contiguous
1004

Freq. Band
A

Freq. Band
B

Interband
1006

Freq. Band
A

Freq. Band
B

## FIG. 10A

PUCCH Group
1010

PUCCH Group
1050

Downlink
Component
Carriers

PCell
1011

SCell
1012

SCell
1013

PSCell
1051

SCell
1052

SCell
1053

UCI
1031

UCI
1032

UCI
1033

UCI
1071

UCI
1072

UCI
1073

Uplink
Component
Carriers

PCell
1021

SCell
1022

SCell
1023

PSCell
1061

SCell
1062

SCell
1063

## FIG. 10B

**FIG. 11A**

**FIG. 11B**

FIG. 12A

FIG. 12B

Wireless Device — Base Station

Configuration 1310

⋮

Msg 1 1311

Msg 2 1312

Msg 3 1313

Msg 4 1314

**FIG. 13A**

Wireless Device — Base Station

Configuration 1320

⋮

Msg 1 1321

Msg 2 1322

**FIG. 13B**

Wireless Device — Base Station

Configuration 1330

⋮

Msg A 1331

Preamble 1341

⋮

1342 Transport block

Msg B 1332

**FIG. 13C**

EP 4 496 292 A1

EP 4 496 292 A1

CORESET
1404

CORESET
1403

CORESET
1402

CORESET
1401

Bandwidth

One slot

**FIG. 14A**

CORESET

CCE-to-REG
mapping

Search Space

PDCCH candidate
PDCCH candidate
PDCCH candidate

**FIG. 14B**

FIG. 15A

**FIG. 15B**

EP 4 496 292 A1

**FIG. 16A**

**FIG. 16B**

**FIG. 16D**

**FIG. 16C**

FIG. 17A

FIG. 17B

```
RequestCapabilities-r9-IEs ::= SEQUENCE {
  commonIEsRequestCapabilities
  ...,
  [[...]],
  [[ nr-ECID-RequestCapabilities-r16
     nr-Multi-RTT-RequestCapabilities-r16
     nr-DL-AoD-RequestCapabilities-r16
     nr-DL-TDOA-RequestCapabilities-r16
     nr-UL-RequestCapabilities-r16 ]]
}
```

**FIG. 18A**

```
ProvideCapabilities-r9-IEs ::= SEQUENCE {
  commonIEsProvideCapabilities
  ...,
  [[ nr-ECID-ProvideCapabilities-r16
     nr-Multi-RTT-ProvideCapabilities-r16
     nr-DL-AoD-ProvideCapabilities-r16
     nr-DL-TDOA-ProvideCapabilities-r16
     nr-UL-ProvideCapabilities-r16            ]]
}
```

**FIG. 18B**

```
RequestAssistanceData-r9-IEs ::= SEQUENCE {
  ...,
  [[ nr-Multi-RTT-RequestAssistanceData-r16
     nr-DL-AoD-RequestAssistanceData-r16
     nr-DL-TDOA-RequestAssistanceData-r16
  ]]
}
NR-Multi-RTT-RequestAssistanceData-r16 ::= SEQUENCE {
  nr-PhysCellID-r16          NR-PhysCellID-r16
  nr-AdType-r16
  ...,
  [[
  nr-on-demand-DL-PRS-Request-r17
  nr-DL-PRS-ExpectedAoD-or-AoA-Request-r17
  pre-configured-AssistanceDataRequest-r17
  ]]
}
```

**FIG. 18C**

```
CommonIEsRequestLocationInformation ::= SEQUENCE {
   LocationInformationType,
   triggeredReporting       TriggeredReportingCriteria
   periodicalReporting      PeriodicalReportingCriteria
   additionalInformation    AdditionalInformation
   scheduledLocationTime-r17
...,
}
TriggeredReportingCriteria ::=    SEQUENCE {
   cellChange               BOOLEAN,
   reportingDuration          ReportingDuration,
}

PeriodicalReportingCriteria ::=    SEQUENCE {
   reportingAmount
   reportingInterval
}



ResponseTime ::= SEQUENCE {
   time
   responseTimeEarlyFix-r12
   unit-r15
}

ScheduledLocationTime-r17 ::= SEQUENCE {
   utcTime-r17
   gnssTime-r17
   networkTime-r17
   relativeTime-r17   INTEGER (1..1024)
}
```

# FIG. 19

```
NR-Multi-RTT-ProvideAssistanceData-r16 ::= SEQUENCE {
   nr-DL-PRS-AssistanceData-r16
   nr-SelectedDL-PRS-IndexList-r16
   ...,
   [[
   nr-On-Demand-DL-PRS-Configurations-r17
   nr-On-Demand-DL-PRS-Configurations-Selected-
IndexList-r17
   assistanceDataValidityArea-r17 AreaID-CellList-r17
   ]]
}
NR-DL-TDOA-ProvideAssistanceData-r16 ::= SEQUENCE {
   nr-DL-PRS-AssistanceData-r16
   nr-SelectedDL-PRS-IndexList-r16
   ...,
   [[
   nr-On-Demand-DL-PRS-Configurations-r17
   nr-On-Demand-DL-PRS-Configurations-Selected-
IndexList-r17
   assistanceDataValidityArea-r17 AreaID-CellList-r17
   ]]
}
AreaID-CellList-r17 ::= SEQUENCE
(SIZE(1..maxCellIDsPerArea-r17)) OF NR-Cell-IDs-r17
NR-Cell-IDs-r17 ::= SEQUENCE {
   nr-CellGlobalID-r17
   nr-PhysCellID-r17
   nr-ARFCN-r17
}
```

## FIG. 20A

```
NR-Multi-RTT-RequestAssistanceData-r16 ::= SEQUENCE {
   nr-PhysCellID-r16
   nr-AdType-r16
   [[
   nr-on-demand-DL-PRS-Request-r17
   nr-DL-PRS-ExpectedAoD-or-AoA-Request-r17
   pre-configured-AssistanceDataRequest-r17
   ]]
}
```

## FIG. 20B

```
NR-DL-PRS-AssistanceData-r16 ::= SEQUENCE {
   nr-SSB-Config-r16
   nr-DL-PRS-ReferenceInfo-r16      DL-PRS-ID-Info-r16,
   nr-DL-PRS-AssistanceDataList-r16  SEQUENCE (SIZE
   (1..nrMaxFreqLayers-r16)) OF NR-DL-PRS-
                        AssistanceDataPerFreq-r16,
}
NR-DL-PRS-AssistanceDataPerFreq-r16 ::= SEQUENCE {
   nr-DL-PRS-PositioningFrequencyLayer-r16
   nr-DL-PRS-AssistanceDataPerFreq-r16 SEQUENCE (SIZE
(1..nrMaxTRPsPerFreq-r16)) OF
                        NR-DL-PRS-
AssistanceDataPerTRP-r16,
}
NR-DL-PRS-AssistanceDataPerTRP-r16 ::= SEQUENCE {
   dl-PRS-ID-r16
   nr-PhysCellID-r16
   nr-CellGlobalID-r16
   nr-ARFCN-r16
   nr-DL-PRS-SFN0-Offset-r16   NR-DL-PRS-SFN0-Offset-r16,
   nr-DL-PRS-ExpectedRSTD-r16      INTEGER (-3841..3841),
   nr-DL-PRS-ExpectedRSTD-Uncertainty-r16 INTEGER
(0..246),
   nr-DL-PRS-Info-r16         NR-DL-PRS-Info-r16,
   prs-OnlyTP-r16
   nr-DL-PRS-ExpectedAoD-or-AoA-r17
}
NR-DL-PRS-SFN0-Offset-r16 ::= SEQUENCE {
   sfn-Offset-r16             INTEGER (0..1023),
   integerSubframeOffset-r16   INTEGER (0..9),
}
```

## FIG. 21A

```
DL-PRS-ID-Info-r16 ::= SEQUENCE {
  dl-PRS-ID-r16
  nr-DL-PRS-ResourceID-List-r16 SEQUENCE (SIZE
(1..nrMaxResourceIDs-r16)) OF
                        NR-DL-PRS-ResourceID-r16
  nr-DL-PRS-ResourceSetID-r16
}
```

## FIG. 21B

```
NR-DL-PRS-Info-r16 ::= SEQUENCE {
  nr-DL-PRS-ResourceSetList-r16   SEQUENCE (SIZE
(1..nrMaxSetsPerTrpPerFreqLayer-r16)) OF NR-DL-PRS-
                                ResourceSet-r16,
}

NR-DL-PRS-ResourceSet-r16 ::= SEQUENCE {
  nr-DL-PRS-ResourceSetID-r16
  dl-PRS-Periodicity-and-ResourceSetSlotOffset-r16
  dl-PRS-ResourceRepetitionFactor-r16
  dl-PRS-ResourceTimeGap-r16
  dl-PRS-NumSymbols-r16
  dl-PRS-MutingOption1-r16
  dl-PRS-MutingOption2-r16
  dl-PRS-ResourcePower-r16
  dl-PRS-ResourceList-r16
}

NR-DL-PRS-Resource-r16 ::= SEQUENCE {
  nr-DL-PRS-ResourceID-r16      NR-DL-PRS-ResourceID-
r16,
  dl-PRS-SequenceID-r16
  dl-PRS-CombSizeN-AndReOffset-r16
  dl-PRS-ResourceSlotOffset-r16
  dl-PRS-ResourceSymbolOffset-r16
  dl-PRS-QCL-Info-r16          DL-PRS-QCL-Info-r16
}

DL-PRS-QCL-Info-r16 ::= CHOICE {
  ssb-r16            SEQUENCE {
    pci-r16              NR-PhysCellID-r16,
    ssb-Index-r16        INTEGER (0..63),
    rs-Type-r16          ENUMERATED {typeC, typeD,
typeC-plus-typeD}
  },
  dl-PRS-r16          SEQUENCE {
    qcl-DL-PRS-ResourceID-r16
    qcl-DL-PRS-ResourceSetID-r16
  }
}
```

## FIG. 22

FIG. 23A

FIG. 23B

**FIG. 24A**

Base station 2413
(e.g., NG-RAN)

Location Server 2414 (e.g.,
LMF)

1st (NRPPa) message
2411

2nd (NRPPa) message
2412

Positioning procedure (e.g., location
information transfer procedure and/or
measurement information transfer)
2417

FIG. 24B

EP 4 496 292 A1

| Elementary procedure (EP) | Initiating message | Response message (for successful outcome) | Response message (for unsuccessful outcome) |
|---|---|---|---|
| E-CID measurement initiation | E-CID MEASUREMENT INITIATION REQUEST | E-CID MEASUREMENT INITIATION RESPONSE | E-CID MEASUREMENT INITIATION FAILURE |
| OTDOA information exchange | OTDOA INFORMATION REQUEST | OTDOA INFORMATION RESPONSE | OTDOA INFORMATION FAILURE |
| Positioning information exchange | POSITIONING INFORMATION REQUEST | POSITIONING INFORMATION RESPONSE | POSITIONING INFORMATION FAILURE |
| TRP information exchange | TRP INFORMATION REQUEST | TRP INFORMATION RESPONSE | TRP INFORMATION FAILURE |
| measurement | MEASUREMENT REQUEST | TRP INFORMATION RESPONSE | TRP INFORMATION FAILURE |
| Positioning activation | POSITIONING ACTIVATION REQUEST | POSITIONING ACTIVATION RESPONSE | POSITIONING ACTIVATION FAILURE |
| PRS configuration exchange | PRS CONFIGURATION REQUEST | PRS CONFIGURATION RESPONSE | PRS CONFIGURATION FAILURE |
| Measurement pre-configuration | MEASREUEMNT RPECONFIGURATION REQUEST | MEASREUEMNT RPECONFIGURATION RESPONSE | MEASREUEMNT RPECONFIGURATION REFUSE |

FIG. 25

| Elementary element (EP) | Initiating message |
|---|---|
| E-CID measurement failure indication | E-CID MEASUREMENT FAILURE INDICATION |
| E-CID measurement report | E-CID MEASUREMENT REPORT |
| E-CID measurement termination | E-CID MEASUREMENT TERMINATION |
| Error indication | OTDOA information exchange |
| Assistance information control | ASSISTANCE INFORMATION CONTROL |
| Assistance information feedback | ASSISTANCE INFORMATION FEEDBACK |
| Positioning information update | POSITIONING INFORMATION UPDATE |
| Measurement report | MEASUREMENT REPORT |
| Measurement update | MEASUREMENT UPDATE |
| Measurement abort | MEASUREMENT ABORT |
| Measurement failure indication | MEASUREMENT FAILURE INDICATION |
| Positioning Deactivation | POSITIONING DEACTIVATION |
| Measurement Activation | MEASUREMENT ACTIVATION |

# FIG. 26

| function | Elementary procedure(s) (EPs) |
|---|---|
| E-CID location information transfer | A) E-CID measurement initiation<br>B) E-CID measurement failure indication<br>C) E-CID measurement report<br>D) E-CID measurement termination |
| OTDOA information transfer | OTDOA information exchange |
| Assistance information transfer | A) assistance information control<br>B) assistance information feedback |
| Reporting of general error situations | Error indication |
| Positioning information transfer | A) positioning information exchange<br>B) positioning information update<br>C) positioning activation<br>D) positioning deactivation |
| TRP information transfer | TRP information exchange |
| Measurement information transfer | A) Measurement<br>B) Measurement update<br>C) Measurement report<br>D) Measurement abort<br>D) Measurement failure indication |
| PRS information transfer | PRS configuration exchange |
| Measurement pre-configuration information transfer | A) Measurement pre-configuration<br>B) Measurement activation |

FIG. 27

**FIG. 28**

FIG. 29A

```
SIB19-r17 ::=
SEQUENCE {
   ntn-Config-r17
   t-Service-r17
   referenceLocation-
r17
    distanceThresh-
r17
    ntn-
NeighCellConfigList
-r17
lateNonCriticalExte
nsion
}
                    2900
```

```
NTN-NeighCellConfig-r17 ::=
SEQUENCE{
        ntn-Config-r17
        carrierFreq-r17
        physCellId-r17
}                    2920
```

```
NTN-Config-r17 ::=SEQUENCE {
    epochTime-r17
    ntn-
UlSyncValidityDuration-r17
    cellSpecificKoffset-r17
    kmac-r17
    ta-Info-r17
    ntn-PolarizationDL-r17
    ntn-PolarizationUL-r17
    ephemerisInfo-r17
    ta-Report-r17
}                    2910
```

## FIG. 29B

Location server 3004 (e.g., LMF)

(LPP/NRPPa) positioning messages, e.g., request location Information 3005

(LPP/NRPPa) positioning messages, e.g., provide location Information 3006

Confirmation/abort (NRPPa/LPP) 3007

Time

Positioning measurements 3010

Base station 3002 (e.g., TRP)

Time

1st DL PRS 3011

1st SRS 3012

2nd DL PRS 3013

2nd SRS 3014

3rd DL PRS 3015

3rd SRS 3016

NTN node 3003 (e.g., TRP)

Time

Wireless Device 3001

T1

T2

T3

Time

Starting/initiating a positioning procedure (e.g., for wireless device location verification) 3017

Positioning measurements 3009

Stopping the positioning procedure 3008

**FIG. 30**

EP 4 496 292 A1

**Base station 3102**
**(e.g., NG-RAN)**

**Location Server 3105 (e.g., LMF)**

1<sup>st</sup> **NRPPa message 3107**
**(TRP information request)**

2<sup>nd</sup> **NRPPa message 3108**
**(TRP information response)**

**TRP information exchange**
**3106**

EP 4 496 292 A1

**FIG. 31A**

Serving Base station 3102 (e.g., TRP)

Wireless
Device
3101

Serving and neighbor satellites
3103 (TRPs)

E.g., Ephemeris
of plurality of NTN
nodes
3106

NTN control
function 3104

Location
server 3105 (LMF)

SIB19 3110
(NTN assistance
information comprising
NTN-config(s) (e.g., ephemeris,
Kmac, ta-info, ...) of serving cell
(satellite) and neighbor cell(s)
(satellites))

1$^{st}$ NRPPa message 3107 (TRP
information request)

2$^{nd}$ NRPPa message 3108 (TRP
configuration(s) comprising
NTN-config(s)
(e.g., ephemeris,
Kmac, ta-info, ...)
of serving cell (satellite)
and neighbor cell(s) (satellites))

LPP Assistance data, e.g., DL-PRS resource sets corresponding to reference TRP (and/or
corresponding to serving satellite) and neighbor TRPs (and/or corresponding to neighbor
satellites) 3109

FIG. 31B

EP 4 496 292 A1

Serving and neighbor
satellites 3103
(e.g., TRPs)

Serving
Base station
3102 (e.g., TRP)

Location
server 3105 (LMF)

Wireless Device 3101

LPP capability transfer 3140 (e.g., multi-satellite positioning capability)

TRP information exchange 3141 (e.g., NTN assistance information of at least one NTN node)

**FIG. 31C**

EP 4 496 292 A1

FIG. 32A

FIG. 32B

Wireless Device 3201

Serving and neighbor satellites 3203 (TRPs)

Serving Base station 3202 (e.g., TRP)

NTN control function 3104

Location server 3205 (LMF)

E.g., Ephemeris of plurality of NTN nodes 3231

SIB19 (NTN assistance information comprising NTN-config of serving cell; $1^{st}$ set of NTN-NeighCellConfigList) 3241

$1^{st}$ NRPPa message (TRP information request) 3232

Positioning SIB( $2^{nd}$ set of NTN-NeighCellConfigList) 3242

$2^{nd}$ NRPPa message (TRP configuration(s) comprising NTN-config of serving cell and $2^{nd}$ set of NTN-NeighCellConfigList) 3233

LPP Assistance data, e.g., DL-PRS resource sets corresponding to reference TRP (and/or corresponding to serving satellite) and neighbor TRPs (and/or corresponding to neighbor satellites of $2^{nd}$ set of NTN-NeighCellConfigList)

EP 4 496 292 A1

Wireless Device 3301

Serving and neighbor satellites 3303
(e.g., TRPs)

Serving
Base station 3302
(e.g., TRP)

Location
server 3305
(LMF)

NTN assistance information(e.g., SIB19) 3330

1st LPP message indicating/requesting report of service link propagation delay differences 3331

2nd LPP message for reporting service link propagation delay differences 3332

**FIG. 33A**

EP 4 496 292 A1

Serving and neighbor
satellites 3303
(e.g., TRPs)

Serving
Base station 3302
(e.g., TRP)

Location
server 3305
(LMF)

Wireless
Device
3301

LPP messages 3350 (e.g., reporting/requesting service link propagation delay differences)

NRPPa messages 3354 (TRP information request/response)

Determine SFN0-Offset(s) based on TRP location info and/
or the service link propagation delay difference(s)

LPP assistance data 3351 (e.g., SFN0-Offset(s))

FIG. 33B

EP 4 496 292 A1

Serving and neighbor satellites
3303
(e.g., TRPs)

Serving
Base station 3302
(e.g., TRP)

Location
server 3305
(LMF)

Wireless
Device
3301

LPP capability transfer 3360 (e.g., serving link propagation delay differences)

LPP messages 3361 (e.g., reporting/requesting service link propagation delay differences)

Wireless Device

EP 4 496 292 A1

FIG. 33C

Wireless
Device
3401

Serving and neighbor
satellites 3403
(e.g., TRPs)

Serving
Base station 3402
(e.g., TRP)

Location
server 3405
(LMF)

NRPPa messages (TRP information
request/response)
3412

RRC message(s) configuring
reporting service link propagation
delay differences
3413

RRC message(s) (e.g., UE
assistance data information)
comprising service link propagation
delay differences
3414

NRPPa messages
(service link propagation
delay differences)
3415

Determine SFN0-Offset(s) based on
TRP location info and/or the service
link propagation delay difference(s)
3416

LPP assistance data (e.g., SFN0-Offset(s)) 3417

**FIG. 34**

**FIG. 35**

Wireless Device 3501

Serving and neighbor satellites 3503 (e.g., TRPs)

Serving Base station 3502 (e.g., TRP)

Location server 3505 (LMF)

NRPPa messages (TRP information request/response) 3512

RRC message(s) configuring reporting coarse location info (e.g., ReportConfigNR) or requesting wireless device information (e.g., UEinformationRequest) 3513

RRC message(s) (e.g., wireless device information or measurement reporting) comprising coarse location information 3514

NRPPa messages (coarse location information) 3515

Determine SFN0-Offset(s) based on TRP location info and/or the coarse location information 3516

LPP assistance data (e.g., SFN0-Offset(s)) 3517

127

Wireless Device 3601

Serving and neighbor satellites 3603 (e.g., TRPs)

Serving Base station 3602 (e.g., TRP)

Location server 3605 (LMF)

LPP messages (e.g., reporting/requesting coarse location information)

NRPPa messages (TRP information request/response)

Determine SFN0-Offset(s) based on TRP location info and/ or coarse location information

LPP assistance data (e.g., SFN0-Offset(s))

**FIG. 36A**

EP 4 496 292 A1

Serving and neighbor
satellites 3603
(e.g., TRPs)

Serving
Base station 3602
(e.g., TRP)

Location
server 3605
(LMF)

Wireless
Device
3601

LPP capability transfer (e.g., coarse location information)

LPP messages (e.g., reporting/requesting coarse location information)

Determine SFN0-Offset(s) based on TRP location info and/
or the coarse location information

LPP assistance data (e.g., SFN0-Offset(s))

**FIG. 36B**

NTN node 1 3771 (e.g., serving NTN node, e.g., corresponding to reference TRP/serving cell)

NTN node 2 3772 (e.g., neighbor NTN node, e.g., corresponding to neighbor TRP/neighbor cell)

Service link 1 3741

Service link 2 3742

Wireless Device 3701

$1^{st}$ DL PRS resource set 3712

$1^{st}$ DL PRS resource set slot offset 3714

DL PRS resource 3713

DL frame corresponding to a reference TRP, e.g., $1^{st}$ DL frame 3791

SFN#0 slot#0 (of reference) 3750

$2^{nd}$ DL PRS resource set 3722

$2^{nd}$ DL PRS resource set slot offset 3724

DL PRS resource 3723

DL frame corresponding to a neighbor TRP, e.g., $2^{nd}$ DL frame 3792

time offset 3720

SFN#0 slot#0 (of neighbor) 3760

Time

Time

Receiving (LPP) assistance data indicating one or more $1^{st}$ time offsets (e.g., SFN0-Offset(s)) 3710

- Measuring/determining service link propagation delay difference(s) (e.g., between service link 1 and service link 2) to determine one or more $2^{nd}$ timing offsets;
- Determining SFN#0 slot#0 3760 of neighbor TRP/NTN node 3772 (with respect to SRN#0 slot #0 3750 of the reference TRP/NTN node 3771) based on the one or more $1^{st}$ time offsets and/or the one or more $2^{nd}$ time offsets

**FIG. 37**

Wireless
Device
3801

Receiving, from a base station, one or more NTN configuration parameters (NTN-config(s)) for measuring/determining one or more service link propagation delay differences (SLPDDs) between cells of NTN

3810

Transmitting/sending/reporting to the location server, during an LPP session between a location server (e.g., LMF) and the wireless device, at least one SLPDD (e.g., at least one value) of one or more SLPDDs, e.g., via a $1^{st}$ message (e.g., LPP provide/request assistance data message)

3820

FIG. 38A

EP 4 496 292 A1

**Wireless Device 3801**

Receiving, from a location server, a 1st message (e.g., LPP request capabilities message) comprising a 1st capability indication corresponding to whether the wireless device has a capability of measuring (or reporting) service link propagation delay differences (SLPDDs) between cells of NTN

3815

Transmitting, to the location server, a 2nd message (e.g., an LPP provide capabilities message) comprising a 1st capability indicating whether the wireless device has a capability of measuring (or reporting) SLPDDs between cells of NTN

3825

**FIG. 38B**

EP 4 496 292 A1

Wireless
Device
3901

Transmitting, to a location server during an LPP session between the location server (e.g., LMF) and the wireless device, a $1^{st}$ message (e.g., an LPP provide capabilities message) comprising a $1^{st}$ capability indicating whether the wireless device has a capability of measuring (or reporting) service link propagation delay differences (SLPDDs) between cells of NTN

3910

Having/with $1^{st}$ capability?

3920

YES

Transmitting/sending/reporting, to the location server, at least one SLPDD (e.g., at least one value) of one or more SLPDDs, e.g., via a $2^{nd}$ message (e.g., LPP request/provide assistance data message)

3930

# FIG. 39

Wireless
Device
4001

Receiving, from a base station, one or more NTN
configuration parameters (NTN-config(s)) for measuring/
determining one or more service link propagation delay
differences (SLPDDs) between cells of NTN

4010

Receiving, from a location server (LMF), a 1$^{st}$ message (e.g.,
LPP request/provide assistance data message) indicating/
requesting reporting at least one SLPDD (e.g., at least one
value) of one or more SLPDDs

4020

Measuring/determining, based on/in response to the 1$^{st}$
message, the at least one SLPDD (e.g., at least one value)

4030

Transmitting/sending/reporting to the location server the at
least one SLPDD (e.g., at least one value), e.g., via a 2$^{nd}$
positioning message (e.g., LPP provide/request assistance
data message)

4040

**FIG. 40**

Wireless
Device
4101

Receiving, from a base station, one or more NTN configuration parameters (NTN-config(s)) for measuring/determining one or more service link propagation delay differences (SLPDDs) between cells of NTN

4110

Receiving, from a location server (LMF), a $1^{st}$ message (e.g., LPP provide assistance data message) comprising DL-PRS assistance data, wherein the DL-PRS assistance data indicates one or more $1^{st}$ time offsets (e.g., SFN0-Offset(s)) corresponding to reference TRP/serving NTN node and/or neighbor TRPs/NTN nodes

4120

Determining one or more $2^{nd}$ time offsets based on one or more NTN configuration parameters (NTN-config(s)), wherein each time offset of the one or more $2^{nd}$ time offset is based on the one or more SLPDDs

4130

Determining SFN 0 slot 0 of the neighbor NTN node/TRP with respect to SFN 0 slot 0 of the serving NTN/reference TRP based on the one or more $2^{nd}$ time offsets and/or the one or more $1^{st}$ time offsets

4140

## FIG. 41

Location server 4205 (e.g., LMF)

Receiving from an endpoint (e.g., a wireless device and/or a base station), during an LPP session between the location server and the endpoint, at least one service link propagation delay difference (e.g., at least one value) between at least two cells of NTN, e.g., via a $1^{st}$ message (e.g., $1^{st}$ LPP message or a $1^{st}$ NRPPa message)

4210

Determining/calculating, based on/in response to the $1^{st}$ message, one or more $1^{st}$ time offsets (e.g., SFN0-Offset(s)) of DL-PRS assistance data of reference TRP/NTN node and/or neighbor TRPs/NTN nodes

4220

**FIG. 42A**

Location server 4205 (e.g., LMF)

Receiving, from an endpoint (wireless device and/or the base station), a 1$^{st}$ message (e.g., an LPP message or NRPPa message) indicating the wireless device has a capability of measuring (or reporting) service link propagation delay differences (SLPDDs) between cells of NTN

4215

transmitting, to the endpoint (wireless device or the base station), a 2$^{nd}$ message (e.g., an LPP message or NRPPa message), indicating/requesting reporting at least one service link propagation delay difference (e.g., at least one value) between at least two cells of NTN

4225

**FIG. 42B**

Location server
4305 (e.g., LMF)

Receiving from an endpoint (e.g., a wireless device and/or a base station), during an LPP session between the location server and the endpoint, a coarse location information of the wireless device (e.g., at least one value), e.g., via a 1st message (e.g., 1st LPP message or a 1st NRPPa message)

4310

Determining/calculating, based on/in response to the 1st message, one or more 1st time offsets (e.g., SFN0-Offset(s)) of DL-PRS assistance data of reference TRP/NTN node and/or neighbor TRPs/NTN nodes

4320

**FIG. 43A**

Location server
4305 (e.g., LMF)

Receiving, from an endpoint (wireless device and/or the base station), a 1$^{st}$ message (e.g., an LPP message or NRPPa message) indicating the wireless device has a capability of measuring (or reporting) a coarse location information of the wireless device

4315

transmitting, to the endpoint (wireless device or the base station), a 2$^{nd}$ message (e.g., an LPP message or NRPPa message), indicating/requesting reporting the coarse location information of the wireless device

4325

**FIG. 43B**

EP 4 496 292 A1

Base station 4402 (e.g., NG-RAN)

Receiving from a wireless device (during an LPP session), at least one service link propagation delay difference (e.g., at least one value) between at least two cells of NTN, e.g., via a 1$^{st}$ message (e.g., RRC message, e.g., UEassistanceInformation message)

4410

Transmitting to the location server an NRPPa message (e.g., as part of TRP information exchange) indicating/comprising the at least one service link propagation delay difference (e.g., at least one value) between at least two cells of NTN

4420

FIG. 44A

EP 4 496 292 A1

Base station 4402 (e.g., NG-RAN)

Receiving, from a location server, a 1$^{st}$ message (e.g., an NRPPa message) indicating/requesting reporting service link propagation delay differences between cells of NTN

4415

transmitting, to wireless device , a 2$^{nd}$ message (e.g., an RRC message) for configuring/requesting reporting the at least one service link propagation delay difference (e.g., at least one value) between at least two cells of NTN

4425

**FIG. 44B**

EP 4 496 292 A1

Base station 4502 (e.g., NG-RAN)

Receiving from a wireless device (e.g., during an LPP session between the location server and the endpoint) a coarse location information of the wireless device (e.g., at least one value), e.g., via a 1$^{st}$ message (e.g., RRC message, e.g., measurementReprot message)

4510

Transmitting to the location server an NRPPa message (e.g., as part of TRP information exchange) indicating/comprising the coarse location information of the wireless device (e.g., at least one value)

4520

FIG. 45A

EP 4 496 292 A1

Base station 4502 (e.g., NG-RAN)

Receiving, from a location server, a $1^{st}$ message (e.g., an NRPPa message) indicating/requesting reporting coarse location information of the wireless device to the location server

<u>4515</u>

transmitting, to wireless device , a $2^{nd}$ message (e.g., an RRC message, e.g., UEinformationRequest message and/or ReportConfigNR message) for configuring/requesting reporting the coarse location information of the wireless device

<u>4525</u>

## FIG. 45B

EP 4 496 292 A1

Base station 4602 (e.g., NG-RAN)

Receiving from a location server a 1$^{st}$ message (e.g., an NRPPa message as part of TRP information exchange procedure)

4610

Transmitting to the location server a 2$^{nd}$ message (e.g., an NRPPa message as part of TRP information exchange procedure) indicating/comprising NTN configurations (NTN-config) of neighbor cells and NTN configuration of a serving cell

4620

FIG. 46A

Location server 4605
(e.g., LMF)

Receiving, from a base station, a 1st message (e.g., an NRPPa message) indicating/comprising NTN configurations (NTN-config) of neighbor cells and NTN configuration of a serving cell

4615

transmitting, based on the NTN configurations (NTN-config) of neighbor cells and NTN configuration of a serving cell, to a wireless device a 2nd message (e.g., an LPP message, e.g., LPP provided assistance information message) comprising DL PRS assistance data of the serving cell and the neighbor cells of the NTN

4625

**FIG. 46B**

**EP 4 496 292 A1**

Europäisches
Patentamt
European
Patent Office
Office européen
des brevets

# EUROPEAN SEARCH REPORT

Application Number

EP 24 18 8376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/051054 A1 (MA JUN [US] ET AL) 16 February 2023 (2023-02-16) * paragraph [0006] - paragraph [0008] * * paragraph [0051] - paragraph [0060] * * paragraph [0067] - paragraph [0072] * ----- | 1-15 | INV. H04L67/00 H04B7/185 |
| X | WO 2022/155177 A1 (INTERDIGITAL PATENT HOLDINGS INC [US]) 21 July 2022 (2022-07-21) | 1,3-8, 13,14 | |
| A | * paragraph [0084] - paragraph [0101] * * paragraph [0238] - paragraph [0257] * * claims 1-8 * ----- | 2,9-12 | |
| A | US 2023/194649 A1 (THOMAS ROBIN [DE] ET AL) 22 June 2023 (2023-06-22) * paragraph [0007] - paragraph [0008] * * paragraph [0079] - paragraph [0084] * * paragraph [0108] - paragraph [0123] * ----- | 1-15 | |

| | TECHNICAL FIELDS SEARCHED (IPC) |
|---|---|
| | H04L H04B G01S |

The present search report has been drawn up for all claims

| Place of search | Date of completion of the search | Examiner |
|---|---|---|
| The Hague | 6 December 2024 | Lázaro, Marisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

146

**ANNEX TO THE EUROPEAN SEARCH REPORT
ON EUROPEAN PATENT APPLICATION NO.**                    EP 24 18 8376

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | Publication date | Patent family member(s) | Publication date |
|---|---|---|---|
| US 2023051054 A1 | 16-02-2023 | BR 112022014811 A2 | 20-09-2022 |
|  |  | CN 115053541 A | 13-09-2022 |
|  |  | EP 4101185 A1 | 14-12-2022 |
|  |  | JP 7403672 B2 | 22-12-2023 |
|  |  | JP 2023518658 A | 08-05-2023 |
|  |  | KR 20220139310 A | 14-10-2022 |
|  |  | TW 202131711 A | 16-08-2021 |
|  |  | US 2023051054 A1 | 16-02-2023 |
|  |  | WO 2021155578 A1 | 12-08-2021 |
| WO 2022155177 A1 | 21-07-2022 | US 2024063894 A1 | 22-02-2024 |
|  |  | WO 2022155177 A1 | 21-07-2022 |
| US 2023194649 A1 | 22-06-2023 | CN 118414794 A | 30-07-2024 |
|  |  | US 2023194649 A1 | 22-06-2023 |
|  |  | WO 2023111921 A1 | 22-06-2023 |

**REFERENCES CITED IN THE DESCRIPTION**

**Patent documents cited in the description**

- US 63526425